(19) **Europäisches Patentamt**

**European Patent Office**

**Office européen des brevets**

(11) **EP 1 008 922 B1**

(12) **FASCICULE DE BREVET EUROPEEN**

(45) Date de publication et mention
de la délivrance du brevet:
**25.10.2006 Bulletin 2006/43**

(51) Int Cl.:
**G05D 23/19** *(2006.01)*

(21) Numéro de dépôt: **99403081.5**

(22) Date de dépôt: **07.12.1999**

(54) **Procédé de régulation de la charge d'au moins un dispositif de chauffage en particulier électrique à accumulation, et/ou de la charge de la capacité thermique des éléments de construction et d'équipement, dispositif pour la mise en oeuvre du procédé**

Verfahren zur Steuerung der Last mindestens einer Heizvorrichtung, insbesondere eines elektrischen Wärmespeichers, und/oder der thermischen Kapazität der Konstruktionsteile und der Ausrüstung; Vorrichtung zur Durchführung des Verfahrens

Method of controlling the load of at least one heating device and in particular of an electrical one with heat accumulator and/or the thermal capacity of construction elements and equipment; device for implementing the method

(84) Etats contractants désignés:
**AT BE CH CY DE DK ES FI FR GB GR IE IT LI LU MC NL PT SE**

(30) Priorité: **09.12.1998 FR 9815638**

(43) Date de publication de la demande:
**14.06.2000 Bulletin 2000/24**

(73) Titulaires:
• **Bour, Henri**
  **57350 Spicheren (FR)**
• **Bour, Pierre**
  **57350 Spicheren (FR)**

(72) Inventeurs:
• **Bour, Henri**
  **57350 Spicheren (FR)**
• **Bour, Pierre**
  **57350 Spicheren (FR)**

(56) Documents cités:
**EP-A- 0 688 085    FR-A- 2 543 274**
**FR-A- 2 699 261    US-A- 5 274 571**

**Description**

La présente invention concerne le chauffage des locaux, en particulier le chauffage par un ou plusieurs dispositifs de chauffage de préférence à accumulation, tels que des radiateurs électriques à accumulation, un plancher chauffant ou tout autre dispositif de chauffage, et a pour objet un procédé de régulation de la charge du ou des dispositifs de chauffage électrique à accumulation et ou de la charge optimale de la capacité thermique des éléments de construction et d'équipement du ou des locaux à chauffer quelque soit le mode de chauffage, ainsi qu'un dispositif pour la mise en oeuvre d'un tel procédé.

Ce procédé et ce dispositif sont adaptés aux différentes énergies et aux différents dispositifs de chauffage. Ils assurent une charge optimale du ou des dispositif(s) de chauffage électrique à accumulation au cours des périodes de charge autorisées et en particulier au cours des périodes à tarif réduit du réseau de distribution électrique d'un cycle tarifaire de préférence à durée déterminée, et la charge de la capacité thermique des éléments de construction et d'équipement du local ou du groupe de locaux à chauffer. Ils réalisent cette charge, indépendamment de la température extérieure, en fonction des variations de la charge de la capacité thermique du local. Chaque période à tarif réduit peut comporter un prix particulier de l'énergie. La priorité de la charge du ou des dispositif(s) à accumulation est automatiquement donnée à la ou les période(s) bénéficiant du tarif de l'énergie le plus bas. Ce dispositif et ce procédé permettent aussi de piloter avantageusement l'alimentation d'une résistance additionnelle ou d'un chauffage direct complémentaire à un dispositif de chauffage à accumulation durant la durée totale ou partielle du cycle. Ils permettent, par les différents modes de réalisations, de réguler l'émission de chaleur de tout autre mode de chauffage pour maintenir une charge optimale de la capacité thermique d'un local ou d'un groupe de locaux en régime réduit en particulier. Les consommations d'énergie sont réduites de manière optimale en intégrant, grâce aux algorithmes du régulateur fonctionnant en boucle fermée, l'ensemble des apports gratuits, tout en évitant une charge thermique trop élevée des éléments de construction et d'équipement provoquée en particulier par la précision insuffisante des régulateurs traditionnels. Par ce principe, les difficultés liées à la mesure des températures extérieures sont évitées tout en maintenant la capacité thermique du bâtiment à une valeur optimale, indépendamment de la température de consigne affichée, assurant ainsi un excellent confort, une grande souplesse d'utilisation tout en réduisant les consommations d'énergie.

Les dispositifs de régulation utilisés à ce jour chargent les accumulateurs et régulent la restitution de la chaleur, donc la puissance émise par les émetteurs de tous modes de chauffage en fonction d'une consigne basée sur la température extérieure ou encore en fonction de la température de consigne du thermostat régulant la température ambiante. Lorsque la charge des accumulateurs est effectuée en fonction de la température extérieure ces dispositifs tiennent généralement compte de la charge résiduelle contenue dans les accumulateurs. La chaleur stockée est restituée par rayonnement des parois chaudes et par des dispositifs d'émission de la chaleur comportant de préférence, pour les dispositifs à accumulation, des ventilateurs brassant l'air ambiant à travers le noyau accumulateur. Ces ventilateurs sont commandés par la température de consigne d'un thermostat d'ambiance. Les régulateurs traditionnels, fonction de la température ambiante, régule la charge conformément à une valeur dépendant de la température de consigne du thermostat d'ambiance. Ces dispositifs présentent les inconvénients décrits ci-après.

Les régulateurs pilotant la charge en fonction de la température extérieure ne tiennent pas compte de la charge ni de la variation de la charge de la capacité thermique du local ou du logement, variable en fonction de l'ensoleillement, des niveaux de variation de la température ambiante, de l'humidité modifiant la conductivité thermique des éléments de construction, du climat extérieur, de l'enneigement, des apports gratuits.....
Ainsi au début et à la fin de l'hiver ils engendrent progressivement, suite à une charge trop importante de la capacité de la masse thermique (ensoleillement, hygrométrie, apport gratuit divers....), un débit de chaleur non réglable dépassant les besoins de la pièce. Une correction manuelle de la charge est de ce fait indispensable. En outre le dimensionnement des accumulateurs de chaque local à chauffer par rapport à la valeur de la déperdition thermique maximale de ce local n'est jamais homogène nécessitant une deuxième correction manuelle pièce par pièce.

Les régulations classiques de la charge des dispositifs à accumulation en fonction de la température de consigne du thermostat d'ambiance rendent la charge sensible aux variations de cette consigne commandée par l'utilisateur et n'assurent pas de ce fait une priorité de la charge des accumulateurs durant les heures à tarif réduit. Ils ne gèrent pas correctement la charge de la capacité thermique du logement ni la charge des dispositifs à accumulation en cas de variation de la consigne de température ambiante et provoquent des surchauffes durant les périodes à tarif réduit. Pour maintenir une charge suffisante des accumulateurs, il est nécessaire de la piloter, lors des régimes de chauffage "réduit" des périodes à tarif réduit, par une consigne de température ambiante nécessairement égale ou supérieure à la valeur maximale de la de température ambiante affichée par l'utilisateur durant le ou les régimes "confort". Ainsi un important gaspillage d'énergie est engendré en intersaison par ces systèmes, associé à des périodes de charge insuffisante ou nulle.

Les régulateurs fonction de la température extérieure des différents autres modes de chauffage créent, en régime réduit et en particulier lorsque des émetteurs à faible inertie sont utilisés, des températures très variables dans les différentes pièces et régulent la température optimale de la masse des éléments de construction et d'équipement à un niveau insuffisant. Des émetteurs à forte inertie peuvent provoquer un gaspillage d'énergie suite au maintien d'une température trop élevée de la masse source de surchauffes. Des émetteurs à faible inertie associés à une régulation de la température ambiante en régime réduit liée uniquement à la température de consigne du thermostat d'ambiance ou à un seuil de température, provoquent l'inconfort suite à une décharge trop importante de la chaleur stockée par la capacité thermique du local.

Rappelons que l'inertie thermique d'un bâtiment est définie par sa masse calorifique globale. La charge et la variation de la charge de la capacité thermique de la masse des éléments de construction et d'équipement d'un local sont définies par le niveau et les variations de la température moyenne de la masse globale des éléments de construction et d'équipement. Le confort est lié d'une part au niveau de la température ambiante, mais aussi d'autre part et essentiellement à la bonne gestion de la température moyenne de la masse calorifique globale dont les fluctuations sont la source d'importants transferts d'énergie. Le stock thermique ou capacité thermique d'un bâtiment correspond donc à la chaleur stockée dans les matériaux du bâtiment (éléments de construction) et dans les produits stockés (éléments d'équipement). Il fluctue en fonction des variations de la température moyenne de ces divers éléments. L'énergie calorifique (Q) de ce stock exprimée en kJ. est définie par la formule $\Sigma m.c(ta-te)$ dans laquelle (m) représente la masse du corps en kg, (C) la capacité thermique massique du matériau considéré en kJ/kg.K, (ta) la température finale ou intérieure et (te) la température initiale ou extérieure. La bonne gestion de la température de cette masse permet aussi d'optimiser la charge de la capacité thermique des éléments de construction et d'équipement pour utiliser de manière avantageuse les différents coûts de l'énergie au cours d'un cycle tarifaire du réseau de distribution électrique et éviter le gaspillage d'énergie. Elle permet donc d'influencer de manière importante les consommations par tranche tarifaire. Lorsque des dispositifs de chauffage par accumulation sont utilisés il est indispensable de gérer simultanément la charge de ces dispositifs et celle de la capacité thermique pour garantir le meilleur confort au meilleur coût. Pour tout autre mode de chauffage il est souhaitable de gérer de manière optimale la charge de la capacité thermique des matériaux mis en oeuvre pour éviter l'inconfort lors de l'utilisation d'émetteurs à faible inertie et éviter le gaspillage d'énergie lors de l'utilisation d'émetteurs à forte inertie.

L'inertie thermique est principalement mise en jeu lors des régimes transitoires alors que la charge de la capacité thermique des éléments de construction et d'équipement du local influence le confort et est principalement à l'origine des surchauffes. Elle est définie par le temps de réponse pour passer d'un état stable de température intérieure à un autre lorsque les données de flux de température de l'équation thermique du bâtiment passe brutalement d'une valeur à une autre. A la fin du régime transitoire et après une période de stabilisation, la température ambiante est représentative de la charge de la capacité thermique des éléments de construction et d'équipement du local à chauffer. Lors d'une variation d'ensoleillement, la réponse thermique du local dépend beaucoup de son inertie, des possibilités d'absorption de chaleur par la masse thermique et peu de ses déperditions. Nous appelons, conformément à un usage répandu, constante de temps T, le temps au bout duquel la température ambiante du local atteint 63% de la valeur finale correspondant au régime établi. La constante de temps peut être définie par la formule $m.c(ta-te)/G.V(ta-te)$. Il apparaît ainsi qu'il est quasiment impossible d'établir la charge de la capacité thermique d'un local suivant la formule représentative $m.c(ta-te)$. En effet, les valeurs réelles de (te) aux différents points de l'enveloppe des matériaux formant la "ceinture" thermique des éléments de construction ne sont pas homogènes et comprises entre (ta) et (te). En outre, la capacité thermique massique et surtout la conductivité des éléments de construction fluctuent en fonction de nombreux paramètres dont en particulier le taux d'humidité des matériaux.

Rappelons qu'à égalité de masse, les volumes bien isolés sont plus inertes que les locaux mal isolés. Ainsi une structure légère bien isolée peut être aussi inerte qu'une structure lourde non isolée. Dans la théorie l'inertie thermique d'un local a peu d'impact sur la qualité thermique de ce local et les économies d'énergie, mais par contre, par le jeu des charges et des échanges thermiques, a un impact très important sur la température résultante et le confort. Elle déphase d'une demi-journée environ les gains extérieures et l'impact des différents apports, d'où les très faibles consommations d'énergies durant la nuit correspondant en règle générale aux périodes à tarif réduit des réseaux de distribution de l'énergie électrique. On peut déduire de cette analyse que, lorsque le maintien de la charge optimale de la capacité thermique est uniquement réalisée par la température de consigne du régime réduit, l'inconfort est inévitable lorsque des émetteurs à faible inertie sont utilisés. De même cette analyse révèle clairement que la charge des dispositifs à accumulation ne peut être réalisée correctement en fonction d'une consigne de charge basée sur la température ambiante ou la température extérieure. La coupure de l'émission de chaleur jusqu'à atteinte de la consigne réduite provoque une décharge trop importante de la masse thermique, en intersaison en particulier, et une charge insuffisante des accumulateurs régulés par la température ambiante exclusivement. En effet dans certains cas, la température ambiante reste quasiment stable en régime réduit malgré la décharge importante de la masse thermique suite à la non homogénéité de cette décharge et au très mauvais coefficient de conductivité thermique de l'air qui est un bon isolant. Par contre cette décharge provoque des températures très variables sur l'enveloppe de la ceinture des éléments de construction communiquant vers l'extérieur et constitue aussi la source de phénomènes de condensation très importants au voisinage des murs extérieurs. L'utilisation d'émetteurs de chaleur à très forte inertie sans régulation de la charge de la capacité thermique du bâtiment provoque des surchauffes en inter-saison, les apports gratuits et divers ne pouvant plus être absorbés par la masse thermique sans provoquer de surchauffe. Les choix constructifs entraînent une importante variation de massivité à laquelle le régulateur doit automatiquement répondre en ajustant de manière optimale la charge de la capacité thermique en régime réduit. Le meilleur choix sera défini par une massivité importante des éléments de construction et d'équipement à condition de bien gérer le stock thermique du bâtiment. En outre, conformément à notre analyse, en cas de scénarios journaliers multiconsignes la durée d'affichage de la consigne "confort" correspondant au profil d'occupation n'influence pas dans une proportion importante les consommations lorsque ce scénarios est journalier. L'importance de la charge et de la décharge de la capacité thermique sur le confort et les consommations est primordiale. Le bilan thermique sur une saison de chauffe est ainsi peu dépendant de l'inertie. Toutefois des scénarios d'intermittence à forte dynamique sont mis en oeuvre par les utilisateurs qui pensent ainsi faire une économie importante d'énergie. Cette dynamique est amplifiée lorsque le coût de l'énergie est perçu comme étant très élevé augmentant ainsi l'inconfort et provoquant un impact psychologique négatif, l'inconfort persistant bien que les émetteurs fonctionnent à plein régime durant les périodes de confort et que la température de l'air est élevée. Eléments d'analyses: la chute de la température ambiante en régime réduit est freinée par l'inertie alors que la température des matériaux de la masse thermique la plus directement en contact avec le climat extérieur devient de moins en moins homogène. Lorsque la température de l'air a atteint la température moyenne des parois de la masse interne du bâtiment en communication vers le local, elle sera stable et ne fluctuera que très lentement pendant le régime réduit d'un cycle journalier. A partir de ce moment, les déperditions ne sont plus réellement liées à la température ambiante mais à la décharge de la capacité thermique des éléments de construction et d'équipement du local à chauffer, à leur constitution et à l'humidité. L'impact psychologique du point chaud ne pourra survivre que dans la mesure ou une bonne gestion de la charge de la capacité thermique du bâtiment y est associée.

Le procédé et le dispositif selon l'invention évitent notamment tous les inconvénients précités et résolvent les problèmes posés par la bonne gestion de la charge de la capacité thermique des éléments de construction et d'équipement du local ou des locaux à chauffer en régime réduit en particulier. Grâce aux procédés selon l'invention, la gestion de la charge de la capacité thermique du local à chauffer est réalisée de manière optimale, sans calcul, quelque soit la constitution des matériaux de construction et le mode d'isolation thermique. Pour ce faire, la charge optimale des accumulateurs et celle de la capacité thermique sont régulées en fonction des variations de la température ambiante en particulier pour définir une consigne optimale de charge des dispositifs à accumulation et ou de la charge de la capacité thermique des éléments de construction et d'équipement conformément à la température de confort souhaitée par l'utilisateur. Le procédé et le dispositif ne se réfèrent donc ni à la température extérieure, ni à des seuils de température de consigne affichée au thermostat, lesdits seuils ne pouvant constituer que des garde fou pour la bonne gestion de la charge thermique. Ils s'adaptent automatiquement à toutes les formes de tarification présentant une ou plusieurs périodes à tarif réduit durant le cycle tarifaire du réseau de distribution électrique, chaque période pouvant bénéficier d'un niveau tarifaire de l'énergie différent. Ils transfèrent automatiquement les consommations d'énergie vers les périodes ayant le coût de l'énergie le plus faible. Ils régulent de manière optimale le stock thermique des éléments de construction et d'équipement du local à chauffer sans en calculer la valeur, définissent une température optimale des masses thermiques du bâtiment pour assurer le meilleur confort des occupants. La transition entre le régime réduit et confort est rapide lorsque la masse thermique du bâtiment est bien gérée, l'inertie liée uniquement à la progression de la température de l'air étant insignifiante.

L'analyse des variations de la température ambiante en régime réduit lorsque la température ambiante atteint une quasi stabilité est judicieusement relevée sur une paroi intérieure, car cette température est alors très proche de la température moyenne des parois intérieures et permet de définir une charge thermique optimale des dispositifs à accumulation et des éléments de construction et d'équipement en rapport avec la température de confort souhaitée. En effet après l'affichage du régime réduit la température ambiante moyenne mesurée évolue selon une courbe de forme exponentielle, chute d'abord très rapidement, puis évolue de manière asymptotique en direction d'une droite proche, au début de la période, de la température de la masse thermique des parois intérieures du local en régime confort. Cette tendance de l'évolution asymptotique est plus ou moins marquée en fonction de l'inertie thermique et est suffisamment représentative quelque soit cette inertie pour permettre une bonne gestion de la température optimale de la masse thermique et de la charge des dispositifs à accumulation. On peut considérer que la charge optimale des dispositifs à accumulation est atteinte lorsque leur émission statique en régime réduit permet de stabiliser effectivement, pendant plusieurs heures, la température ambiante lorsqu'elle s'approche d'une valeur préfixée de la droite asymptote, ou lorsque le ratio d'évolution des températures ambiantes lors de plusieurs cycles successifs de mesures atteint un ratio préfixé. Il est primordial de stabiliser la décharge de la masse thermique au début de cette équilibre. Les ratios évoqués peuvent être corrigés automatiquement par le régulateur en fonction de l'évolution des consommations d'énergies durant le cycle journalier précédent par rapport aux consommations maximales du jour le plus froid. Pour définir de manière simple la température proche de la droite asymptote, l'émission de chaleur est réduite à sa valeur minimale après le passage en régime réduit durant un temps préfixé fonction de la constante de temps du local, ce temps pouvant être modulé par différents ratios. A cette valeur de la température, la charge de la capacité thermique du local à chauffer doit être stabilisée jusqu'à la fin de la période réduite. C'est une solution simple assurant le confort et supprimant le gaspillage. L'intérêt du procédé et du dispositif selon l'invention réside principalement dans sa possibilité de définir de manière suffisamment précise la température optimale de la masse thermique en régime réduit ainsi que de la charge des dispositifs à accumulation, sans avoir à calculer la constante de temps du bâtiment ni à connaître la charge réelle de sa capacité thermique. Ce calcul est d'ailleurs, comme le démontre notre analyse, économiquement irréalisable lorsqu'on considère le nombre important de mesures de températures nécessaire pour obtenir une moyenne représentative des températures enveloppes de la masse thermique, les emplacements variables et souvent inaccessible de l'enveloppe de ces masses. Le dispositif selon l'invention permet par contre de définir une température idéale, variable et fluctuante, toujours située entre la température de confort et la température réduite affichée par l'utilisateur, quelque soit les conditions climatiques et quelque soit le dimensionnement des émetteurs. Le dispositif selon l'invention présente aussi l'avantage d'éviter de mesurer la température extérieure, éliminant ainsi d'office les difficultés importantes pour sa mise en oeuvre conformément aux règles de l'art pour obtenir un minimum d'efficacité. Il assure aussi, en intégrant la charge des dispositifs à accumulation et celle de la capacité thermique du local, une parfaite prise en compte des apports gratuits en particuliers solaires qui peuvent ainsi chauffer la masse sans provoquer de surchauffes dans le local. Au lieu d'une surchauffe, une importante économie d'énergie est ainsi utilisée.

Le procédé et le dispositif selon l'invention définissent de préférence le début du cycle tarifaire du réseau de distribution électrique de durée déterminée comme étant le début de la période à tarif réduit bénéficiant du plus bas prix de l'énergie, et, lorsque plusieurs périodes à tarif réduit bénéficiant du plus bas prix existent au cours d'un cycle, ledit début du cycle est défini de préférence au début de la période la plus longue du cycle à tarif réduit à ce prix le plus bas. Lorsque la relance des résistances du noyau accumulateur est autorisée durant toutes les périodes à plein tarif, cette période est définie dans le descriptif et les revendications comme étant la période à tarif réduit ayant le coût de l'énergie le plus élevé. Les consommations d'énergie d'un cycle donné ainsi que le temps de fonctionnement des dispositifs de restitution de la chaleur et diverses autres données sont mesurés à partir du début du cycle et tenus en mémoire durant le cycle ou plusieurs cycles successifs. Notons que la température de consigne affichée par l'utilisateur sur l'organe de régulation commande les dispositifs d'émission de chaleur, lesdits dispositifs pouvant être la résistance électrique des appareils de chauffage direct, la vanne d'ouverture de la circulation du fluide de chauffage à travers un radiateur, le ou les ventilateur(s) ou clapet(s) commandant la restitution de la chaleur d'un dispositif de chauffage à accumulation. Le dispositif d'émission de chaleur est coupé lorsque la température ambiante atteint ou dépasse la valeur de cette consigne. La charge des dispositifs à accumulation est commandée conformément aux revendications définies ci-après; la consigne affichée au thermostat par l'utilisateur n'a aucune influence sur la charge en régime réduit. Lorsque des modes de chauffage sans accumulation de chaleur sont utilisés, le régulateur objet de l'invention est particulièrement adapté aux logements très bien isolés pour lesquels les régulateurs traditionnels sont trop imprécis et provoquent l'inconfort par la gestion trop imprécise de la température des parois dès lors que des émetteurs à faible inertie sont utilisés. Cet inconfort croit exponentiellement avec le coût de l'énergie et surtout la sensibilité des utilisateurs à ce coût. En effet, en cas de scénarios journaliers multiconsignes, le niveau choisi en régime réduit provoque le plus souvent une décharge trop importante du stock thermique de la masse, même en cas de faible écart entre les consignes "confort" et "réduit". Les logements très bien isolés équipés de radiateurs à forte inertie sont soumis à des surchauffes régulières suite à la mauvaise régulation de la charge de la capacité thermique du local. Ces surchauffes étaient généralement bien acceptées lorsque l'énergie utilisée bénéficie d'une image bon marché, mais sont systématiquement mis en cause et rejetées dans le cas contraire. Ainsi le procédé suivant l'invention est adapté à tous modes de chauffages assurant le confort tout en évitant le gaspillage.

La régulation des organes d'émission de chaleur des dispositifs de chauffage est de préférence à action proportionnelle. Ce type de régulation agit sur les organes de commande de restitution de la chaleur pour réguler la puissance calorifique émise par les émetteurs, établissant en régime stationnaire un lien bien défini entre la valeur de chaque point de la bande proportionnelle définie par la consigne affichée au régulateur et le niveau de puissance émis par l'émetteur. Ce régime stationnaire est donc basé sur une relation bien définie entre la grandeur réglée (la température ambiante) et la grandeur réglable (la puissance calorifique des émetteurs). Il crée ainsi un équilibre entre la valeur des déperditions thermiques du local et la puissance émise par les dispositifs de chauffage et indirectement le niveau de charge des dispositifs à accumulation. La bande proportionnelle représente le domaine de variation de la consigne réglée, donc le domaine de la variation de la grandeur réglée pour que la grandeur de réglage finale décrive toute l'étendue de la bande de réglage. En conséquence, la vitesse des ventilateurs de restitution de la chaleur des dispositifs à accumulation varient d'une valeur nulle ou faible lorsque la température ambiante est située à la valeur maximale du domaine de variation de la bande proportionnelle à une valeur maximale lorsque la température ambiante est située à la valeur minimale du domaine de variation de la bande proportionnelle. La vitesse des ventilateurs de déstockage varient ainsi de 0 à 100% de la vitesse maximale à l'intérieur du domaine de variation de la bande proportionnelle. Le pourcentage de vitesse en régime stable de la température ambiante est ainsi fonction de la quantité d'énergie stockée, la puissance émise à vitesse maximale des ventilateurs étant quasi proportionnelle à la température du noyau accumulateur, et des besoins de chauffage du local à chauffer. Il existe donc une relation très précise entre la quantité d'énergie stockée, la vitesse des ventilateurs et le temps (t) durant lequel l'énergie stockée est suffisante pour couvrir les besoins de chauffage du local. Cette relation est exprimée par la fonction suivante :

$$t = 1 \, / \, \% \text{ vitesse} \, . \; A$$

(A est un coefficient)

La présente invention concerne, conformément à l'introduction, un procédé et un dispositif de régulation de charge d'au moins un dispositif de chauffage électrique à accumulation, tel qu'un radiateur électrique à accumulation, un plancher chauffant ou analogue, et ou la régulation de la charge de la capacité thermique du local à chauffer. Ce procédé et ce dispositif fonctionne sur la base d'algorithmes simples permettant d'assurer le confort et les économies d'énergie, tout en évitant de recourir à des calculs ou des mesures complexes. Sa mise en oeuvre est intéressante car la gestion par le calcul de la charge de la capacité thermique du bâtiment provoquerait, d'une part un coût de mise en oeuvre inadapté pour un produit de série, d'autre part nécessiterait un paramétrage pour chaque type de construction dépassant les connaissances des professionnels réalisant la mise en oeuvre. L'analyse précédente permet aussi de démontrer qu'il est possible de manière optimale la charge des dispositifs à accumulation en fonctionnement en fonctionnement statique, lorsque les ventilateurs de déstockage sont à l'arrêt, en fonction des variations de la température ambiante. Celles-ci permettent de définir l'énergie restituée par les dispositifs à accumulation , incluant celle restituée par la décharge de la capacité thermique du bâtiment. En fonctionnement dynamique et lorsque la température ambiante est stable, la vitesse variable des ventilateurs à l'intérieur du domaine de variation de la bande proportionnelle permet de définir le temps où l'énergie stockée est suffisante pour assurer le chauffage.

L'appellation "période à tarif réduit" utilisée dans les revendications et la description regroupe toutes les périodes autorisées de la charge ou de la relance de la charge au cours du cycle tarifaire du réseau de distribution de l'énergie électrique. Un cycle tarifaire peut comporter une ou plusieurs périodes à tarif réduit. Dans ce dernier cas le prix de l'énergie peut être unique pour toutes les périodes ou chaque période peut bénéficier d'un prix spécifique. La période à tarif pas réduit ayant le prix de l'énergie le plus élevé est des fois appelée par les distributeurs d'énergie "périodes à plein tarif" ou "périodes heures pleines" et les différentes périodes à tarif réduit "périodes heures creuses". Le signal tarifaire permet au régulateur de distinguer les périodes à tarif réduit ayant les niveaux de prix de l'énergie les plus avantageux. Le cycle du réseau de distribution électrique comporte généralement des périodes à tarif réduit et des périodes où la charge des dispositifs de chauffage n'est pas autorisée. Lorsque la charge lors de la période ayant le prix de l'énergie le plus élevé est autorisée sans interruption jusqu'à la fin du cycle tarifaire, le stockage de l'énergie n'est plus nécessaire. La relance de la charge est alors réduite à sa valeur minimale et couvre exclusivement les besoins de chauffage. Les algorithmes de stockage ne sont donc plus appliqués. La durée du cycle tarifaire, généralement déterminée et fixe, est de préférence de 24 heures mais peut aussi être quelconque.

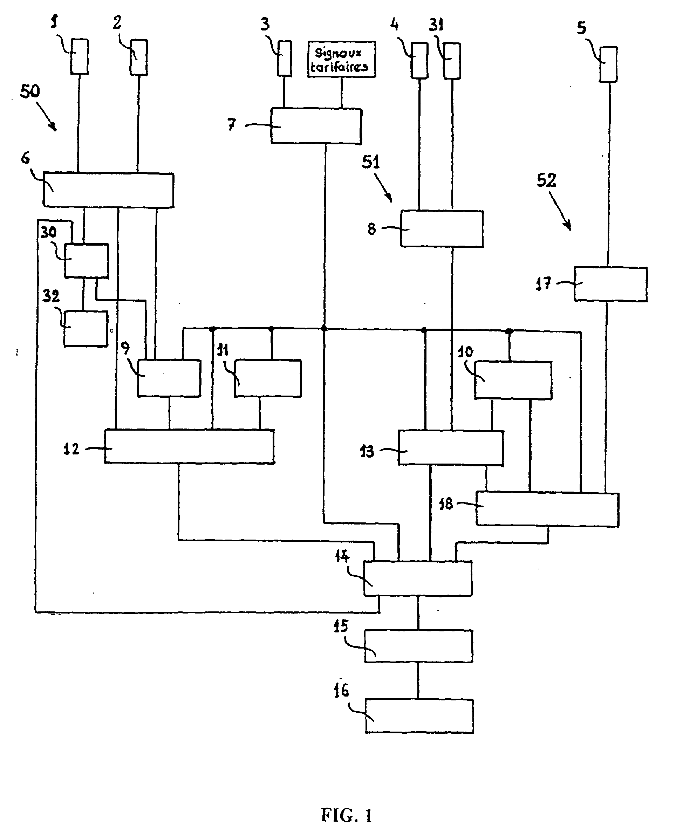

Le mode de réalisation décrit et représenté conformément au schéma de la figure 1 en annexe ne limite pas le domaine de l'invention. Des modifications restent possibles, sans sortir pour autant du domaine de protection de l'invention, particulièrement au niveau de la représentation du schéma, la constitution des divers composants et organes de celui-ci, leur substitution par des équivalents techniques. Les différents composants n'ont pas été définis de manière plus précise afin de donner le maximum de relief aux revendications.

L'invention sera mieux comprise, grâce à la description donnée ci-après comme exemple.

Le procédé consiste essentiellement pour un local à chauffer donné ou un groupe de locaux à piloter la charge ou l'opération de chargement du ou des dispositifs à accumulation, tel qu'un radiateur à accumulation, un plancher chauffant ou analogue en période à tarif réduit du cycle tarifaire du réseau de distribution comportant un ou plusieurs niveaux de prix de l'énergie, en donnant la priorité aux consommations d'énergie durant les périodes bénéficiant du prix de l'énergie le plus avantageux, tout en dosant judicieusement l'énergie stockée pour éviter les surchauffes ou un chauffage insuffisant durant les périodes du cycle tarifaire n'autorisant pas la charge et ou à piloter la charge de la capacité thermique des éléments de construction d'équipement du local ou du groupe de locaux à chauffer quelque soit le mode de chauffage en donnant également si nécessaire la priorité aux consommations d'énergie durant les périodes bénéficiant du prix de l'énergie le plus avantageux. Ce procédé permet de piloter indifféremment les deux charges simultanément ou exclusivement la charge de la capacité thermique du ou des locaux. Il assure une charge optimale de la capacité thermique du local ou des locaux à chauffer et des dispositifs à accumulation en fonction des variations de la température ambiante définies durant un cycle répétitif de mesures, lesdites variations dépendant des caractéristiques techniques des dispositifs à accumulation et de la charge thermique du logement, et éventuellement en verrouillant la charge en régime réduit en fonction des consommations d'énergie du cycle précédent.

Conformément à une première caractéristique de l'invention, le régulateur définit une consigne de charge obtenue en comparant la valeur des variations de la température ambiante déterminée par le régulateur à intervalles répétitifs d'une durée déterminée, correspondant un cycle de mesures des variations de température défini par la base de temps du régulateur, à un seuil de variation de température prédéterminé sur le régulateur, ledit seuil étant de préférence spécifique à chaque période à tarif réduit et modulé en fonction de l'écart de la température ambiante par rapport à une consigne minimale de température fonction des caractéristiques techniques des dispositifs à accumulation. Le cycle de mesures des variations de la température ambiante est ainsi dénommé aussi cycle de mesures et de comparaison des variations de la température ambiante.

La consigne définie par la comparaison des variations de la température ambiante, associée éventuellement à des périodes de verrouillage de la charge durant les périodes à tarif réduit en fonction des consommations d'énergie durant le ou les cycles tarifaires précédents, déterminent une charge optimale des dispositifs à accumulation et une charge optimale de la capacité thermique du local. L'expression "la charge ou l'opération de chargement du ou des dispositifs électriques à accumulation et ou la charge de la capacité thermique des éléments de construction et d'équipement du local" est dénommée dans le texte et les revendications qui suivent par "la charge des dispositifs à accumulation" ou si le texte le permet sans ambiguïté par "la charge". Pour définir la valeur de la température ambiante la valeur moyenne de plusieurs mesures successives est de préférence retenue. Le régulateur détermine des modes de fonctionnement et choisit les seuils de référence en fonction du niveau du prix de l'énergie durant la période autorisée de charge, de la situation de la température ambiante par rapport à différentes consignes dont la température de consigne fixe définie par les caractéristiques techniques et de dimensionnement des dispositifs de chauffage.

Conformément à une deuxième caractéristique de l'invention, lorsque le cycle tarifaire comporte plusieurs périodes à tarif réduit ayant de préférence un niveau de prix de l'énergie particulier pour chaque période ou groupe de périodes, le procédé selon l'invention verrouille la charge des dispositifs à accumulation durant toute la période à tarif réduit en cours du cycle tarifaire du réseau de distribution électrique, ou durant une fraction préréglée de cette période modulée de préférence par un coefficient proportionnel au rapport de la durée totale de la ou les période(s) à tarif réduit précédente(s) du même cycle mais bénéficiant d'un prix de l'énergie inférieur par le temps de charge de ces dispositifs à accumulation durant cette ou ces période(s) à tarif réduit précédente, tant que la durée de la charge des dispositifs à accumulation, lors de la ou des période(s) à tarif réduit précédente(s), n'a pas atteint la durée totale de cette ou ces périodes ou une fraction préréglée de celle-ci ou de ceux-ci. Ladite fraction, réglable et ajustable, correspondant au temps de verrouillage de la charge, est importante de préférence lorsque la différence de prix de l'énergie entre les deux périodes successives à tarif réduit est élevée et faible lorsque cette différence de prix est faible. Le verrouillage de la charge est de préférence supprimé d'une part lorsque la température ambiante chute en dessous d'une valeur préfixée sur le régulateur en fonction des caractéristiques techniques des dispositifs à accumulation ou à la valeur d'un autre seuil fixé dans le domaine de variation de la bande proportionnelle du dispositif de régulation pilotant l'émission de chaleur, d'autre part, lorsque la régression de la température ambiante durant le cycle de mesures des variations de température devient supérieure au seuil minimal de régression de la température préfixé sur le régulateur pour la période en cours en fonction des caractéristiques techniques des dispositifs à accumulation.

Rappelons que la mesure du temps d'enclenchement des dispositifs d'émission de la chaleur des émetteurs non accumulateurs, corrigée si nécessaire pour obtenir le temps de fonctionnement équivalent à pleine puissance de ces dispositifs, ou la mesure du temps de charge des dispositifs à accumulation permet de définir exactement l'énergie consommée. Ainsi pour définir l'énergie consommée, le procédé selon l'invention mesure de préférence ce temps. Des modifications de la façon de mesurer cette énergie lors des différents cycles sont possibles sans sortir du domaine de l'invention. La mesure du temps d'alimentation des résistances de charge des dispositifs à accumulation lors d'un cycle permet donc de définir l'énergie consommée durant ce cycle.

En variante de la disposition précédente, lorsque la durée de la charge des dispositifs à accumulation lors d'une période à tarif réduit en cours est réalisée pendant la durée totale de cette période ou est proche de cette valeur, le procédé consiste à remplacer à la fin de cette période le seuil de variation de la température attribué par le régulateur à la période à tarif réduit suivante du même cycle tarifaire par celui de la période en cours. En complément à cette disposition lorsque ladite durée de la charge de la période à tarif réduit en cours n'est qu'une fraction de la durée totale de cette période, le seuil affecté par le régulateur à la période suivante, du même cycle tarifaire mais à niveau de prix de l'énergie plus élevé, est remplacé par un nouveau seuil de variation de température obtenu en modulant l'écart entre les seuils de variation de température des deux périodes à tarif réduit de préférence par un coefficient proportionnel au rapport de la durée d'enclenchement des dispositifs d'émission de chaleur pendant le temps séparant les deux périodes par ledit temps de séparation. Plus le temps d'enclenchement des dispositifs d'émission de chaleur sera faible, plus ce nouveau seuil ainsi défini sera proche de celui affecté à la période à tarif réduit suivante.

Ainsi le seuil de charge de la première période à tarif réduit bénéficiant du prix de l'énergie le plus bas lors du cycle tarifaire peut être utilisé, lors des besoins de chaleur important ou lors d'une progression importante de ces besoins au cours du cycle tarifaire, pour l'ensemble des périodes à tarif réduit de ce cycle quelque soit le niveau tarifaire de chacune.

En complément à la deuxième caractéristique de l'innovation, le procédé verrouille la charge du ou des dispositifs de chauffage au cours de la période à tarif réduit du cycle tarifaire bénéficiant du plus bas prix de l'énergie, pendant un temps calculé par le régulateur conformément à la relation suivante : durée maximale de la ou des période(s) à tarif réduit d'un cycle tarifaire du réseau de distribution électrique de durée déterminée bénéficiant du prix de l'énergie le plus bas, diminuée de la valeur obtenue en multipliant la durée totale de charge des dispositifs à accumulation du cycle tarifaire précédent du réseau de distribution électrique par un coefficient ajustable et réglable. Ce verrouillage est supprimé lorsque le résultat de cette soustraction est nul ou négatif et la durée de ce verrouillage est de préférence limitée à un temps prédéterminé par le régulateur et correspondant à un pourcentage de la durée totale de la ou des périodes à tarif réduit bénéficiant du plus bas prix de l'énergie. Le temps de verrouillage sera donc nécessairement inférieur à la durée totale du ou des périodes à tarif réduit bénéficiant du plus bas prix de l'énergie et sera de préférence réduit lors du premier cycle tarifaire suivant la mise en service.

La période à tarif réduit bénéficiant du prix le plus bas correspond de préférence à la première période à tarif réduit de ce cycle. Ce verrouillage est appliqué, de préférence à partir du début de la période à tarif réduit de ce cycle, de manière continue ou discontinue jusqu'à épuisement de la durée du temps de verrouillage calculé.

La charge est rétablie temporairement même durant la période de verrouillage, d'une part aussi longtemps que la température ambiante est inférieure ou égale à la valeur d'un seuil de température préfixé sur le régulateur en fonction des caractéristiques techniques des dispositifs à accumulation ou à la valeur d'un seuil fixé dans le domaine de variation de la bande proportionnelle du dispositif de régulation pilotant l'émission de chaleur, d'autre part, lorsque la régression de la température ambiante durant le cycle de mesures des variations de température devient supérieure au seuil minimal de régression de la température préfixé sur le régulateur pour la période en cours. Rappelons que lorsque la relation précitée autorise une charge durant la totalité de la période à tarif réduit la température ambiante chutera au voisinage de la consigne en régime réduit défini par l'inertie thermique malgré la charge immédiate des dispositifs à accumulation en début des heures creuses. En effet au début de cette période à tarif réduit la charge des dispositifs à accumulation, et par conséquence l'émission de chaleur naturelle ou statique seront réduites. Leur impact sur les variations de la température ambiante n'affectera pas le niveau de la température réduite. Il est possible de répartir les charges sur la période à tarif réduit en donnant la priorité aux périodes définies par le distributeur d'énergie électrique.

De manière avantageuse, il peut être prévu conformément à l'invention, lorsque la température ambiante mesurée est supérieure à la température de consigne de l'organe de régulation de cette température ambiante et lorsque le cycle tarifaire comporte une période ou plusieurs périodes à tarif réduit, d'enclencher systématiquement la charge à la fin de chaque période de verrouillage de la charge présente lors des périodes de charge autorisées et au début de chaque période à tarif réduit ne comportant pas de temps de verrouillage, de couper ensuite systématiquement cette charge lorsque la température ambiante progresse durant le cycle de mesures des variations de la température et à enclencher à nouveau systématiquement cette charge dès que la température ambiante régresse durant ce cycle de mesures des variations. Ces enclenchements et coupures sont réalisés jusqu'à la fin de la période à tarif réduit en cours ou jusqu'à la prochaine modification de la température ambiante de consigne qui la rendra à nouveau supérieure à la température ambiante mesurée. Après une période de coupure, un nouvel enclenchement n'est de préférence réalisé qu'après une période de temporisation pour éviter les cycles courts de fonctionnement. Par ce procédé, les dérives éventuelles de la température ambiante liées à une trop grande limite de résolution des mesures sont maîtrisées.

En variante à la disposition précédente le procédé est caractérisé en ce qu'il consiste, lorsque le cycle tarifaire comporte une ou plusieurs périodes à tarif réduit ayant un prix unique de l'énergie ou ayant un niveau de prix particulier de l'énergie pour chaque période ou groupe de périodes et lorsque la température ambiante est supérieure à la température de consigne de l'organe de régulation de cette température ambiante, à réaliser la charge des dispositifs à accumulation durant la ou les période(s) à tarif réduit, tant que la valeur de la variation de la température ambiante est supérieure ou égale au seuil de régression, ou bien tant qu'elle est inférieure ou égale au seuil de progression, lesdits seuils de régression ou de progression étant préfixés sur le régulateur en fonction des caractéristiques techniques des accumulateurs incluses et du niveau de prix de l'énergie des périodes à tarif réduit du cycle tarifaire, certains seuils étant affectés à l'ensemble des périodes à tarif réduit.. La valeur du seuil de progression ou de régression peut être égale à zéro.

En remplacement des deux dispositions précédentes, pour une simplification du dispositif de régulation, ou en complément de ces dispositions, il peut être prévu, dès que la température ambiante mesurée est supérieure à la température de consigne de l'organe de régulation de cette température ambiante et lorsque le cycle tarifaire comporte une période ou plusieurs périodes à tarif réduit, de mémoriser la température ambiante stabilisée mesurée après chaque cycle de verrouillage de la charge lors des périodes à tarif réduit ou après chaque début de période à tarif réduit sans verrouillage, puis d'enclencher la charge durant la période à tarif réduit en cours aussi longtemps que la température ambiante mesurée reste inférieure ou égale à cette température mémorisée.

De manière générale, la charge est de préférence systématiquement réalisée durant la ou les période(s) à tarif réduit, aussi longtemps que la valeur de la température ambiante est inférieure à un seuil minimal de température prédéterminé sur le régulateur en fonction des caractéristiques techniques des dispositifs de chauffage à accumulation, de leur niveau d'isolation thermique en particulier, et de la température extérieure de dimensionnement. La valeur de ce seuil correspond à la température ambiante minimale de charge définie ci-après pat l'abréviation (Tamc). C'est la valeur de la température ambiante en dessous de laquelle la charge est systématiquement effectuée durant toute la durée de la ou des période(s) à tarif réduit, dans le cas des scénarios journaliers multiconsignes incluant des régimes "confort" et des régimes "réduit". Ce seuil, fonction des caractéristiques techniques des accumulateurs utilisés, de leur niveau d'isolation thermique, de la durée des périodes à tarif réduit et du dimensionnement des dispositifs à accumulation est défini comme suit :

(Tamc) correspond à la valeur minimale de la température ambiante en régime réduit lorsque la température extérieure est égale à la température extérieure de dimensionnement des dispositifs à accumulation. La température de dimensionnement est celle à laquelle une charge maximale des accumulateurs durant la ou les période(s) à tarif réduit bénéficiant du prix de l'énergie le plus bas permet d'assurer la température de confort durant un cycle tarifaire de préférence égale à 24 heures. C'est donc la température extérieure à laquelle la charge nominale du ou des dispositifs à accumulation permet d'assurer le chauffage des locaux au tarif réduit bénéficiant du prix le plus bas, sans que des relances de la charge ne soient effectuées à des périodes à tarif de l'énergie plus élevé. Rappelons que la définition de cette température est toutefois théorique, les besoins d'énergie pour chauffer un local ne dépendant pas uniquement de la température extérieure, étant fonction des nombreux autres critères définis précédemment. Elle est toutefois d'une précision suffisante pour éviter les surchauffes.

(Tamc) est influencée par la puissance calorifique des dispositifs à accumulation lors de la restitution naturelle ou passive de la chaleur définie ci-après par l'abréviation (Pcn). Cette puissance calorifique est directement fonction du niveau d'isolation thermique des dispositifs et du niveau de charge des appareils. Elle est inversement proportionnelle au niveau de chaleur restante. Rappelons que le niveau d'isolation des dispositifs à accumulation est défini par le pourcentage de chaleur restante à la fin d'un cycle de charge suivi d'un cycle de restitution de chaleur naturelle ou passive ou statique, la durée totale des deux cycles étant de 24 heures.

Formule définissant (Tamc)

$$Tamc = ta - (ta-te).Dhc / (Dhc+Dhp) + A1 . A2 (ta-te)$$

ou (ta) est la température ambiante; (te) la température extérieure minimale de base de la zone climatique; (Dhc) la durée de la ou des périodes à tarif réduit permettant par le stockage de l'énergie de réduire à sa valeur minimale le coût d'exploitation; (Dhp) la durée de la ou des périodes complémentaires à relance autorisée de la charge ayant un coût de l'énergie plus élevé. Notons que la période complémentaire à coût de l'énergie le plus élevé est sans stockage d'énergie si la charge des dispositifs à accumulation est autorisée durant la durée totale de cette période et qu'elle se termine à la fin du cycle tarifaire du réseau de distribution électrique; (A1) le ratio de la puissance électrique nominale des dispositifs à accumulation par les déperditions thermiques maximales du local à chauffer; (A2) le ratio de (Pcn) par la puissance électrique nominale. Il apparaît que cette valeur (Tamc) est relativement stable. La puissance électrique nominale assure la charge maximale du dispositif à accumulation à la fin de la période nominale de charge. Cette période devrait correspondre à la durée de la ou des période(s) à tarif réduit bénéficiant du plus bas prix de l'énergie afin d'obtenir le meilleur coût d'exploitation.

Pour assurer le confort souhaité, supprimer les consommations inutiles d'énergie durant les périodes aux coûts les plus élevés, il est souhaitable de limiter sur le régulateur les variations de la température de consigne du thermostat d'ambiance à une valeur minimale et maximale par rapport au seuil correspondant à la valeur de la température ambiante prédéterminé sur le régulateur en fonction de la valeur de (Tamc). Ces valeurs limites sont réglables et ajustables. L'écart entre la valeur maximale et la valeur minimale, définissant la plage de confort, peut éventuellement pour une souplesse maximale d'utilisation, être ajusté .

De manière avantageuse, il peut être prévu, conformément à l'invention, de verrouiller la charge des dispositifs à accumulation définie individuellement par les procédés de charge et l'émission de chaleur des dispositifs de chauffage, aussi longtemps que la valeur de l'écart défini entre la température ambiante mesurée et la valeur du seuil minimal de température prédéterminé sur le régulateur en fonction des caractéristiques techniques des dispositifs à accumulation est supérieure a un seuil spécifique prédéterminé sur le régulateur pour chacun des procédés revendiqués. La valeur de ce seuil spécifique est fonction de la durée de la période où l'énergie stockée assure le chauffage, ou encore de la valeur maximale autorisée de variation de la température ambiante. Elle permet d'optimiser le coût du chauffage. Si une programmation des régimes confort et réduit est systématiquement mise en oeuvre, la valeur desdits différents seuils peut être modulée en fonction de la durée de la période confort en particulier.

Conformément à une autre caractéristique de l'invention, le procédé consiste, lorsque la température ambiante mesurée est inférieure ou égale à la valeur de la température ambiante de consigne, à réaliser la charge du ou des dispositifs à accumulation en période à tarif réduit, aussi longtemps que la valeur de la température ambiante mesurée est égale ou inférieure à la valeur du seuil de température préfixé sur le régulateur, ledit seuil de température en fonction des caractéristiques techniques des dispositifs à accumulation et particulier à chaque période à tarif réduit du cycle de distribution bénéficiant d'un niveau de prix spécifique de l'énergie, étant placé de préférence dans la limite des variations de la température fixées par la bande proportionnelle de l'organe de régulation de l'émission de chaleur à action proportionnelle, ladite charge étant réalisée uniquement tant que la température ambiante régresse et si elle stagne ou progresse tant que la valeur de la progression de la température ambiante définie par le régulateur lors du cycle de mesures des variations de la température, est inférieure ou égale au seuil de progression de température préfixé sur le régulateur. Ainsi ladite charge est coupée lorsque la température ambiante atteint ou dépasse le seuil de température sélectionnée par le régulateur dans le domaine de variation de la bande proportionnelle en fonction du coût de l'énergie de la période à tarif réduit en cours, ou également lorsque la valeur de la progression de la température ambiante durant le cycle de mesures des variations de température est supérieure ou égale au seuil de progression de la température préfixé sur le régulateur.

La valeur du seuil de variation de la température peut être particulière à chaque période tarifaire. Elle sera de préférence spécifique lorsque la température ambiante est située dans ou en dehors des limites de variations des températures de la bande proportionnelle du régulateur à action proportionnelle. Nous avons démontré précédemment que l'équilibre judicieux entre la puissance calorifique émise par les dispositifs de chauffage et les déperditions de la pièce permet de définir, à partir d'un temps donné du cycle tarifaire, la réserve d'énergie nécessaire pour chauffer la pièce durant un temps défini. Cet équilibre définit, en fonction de la position de la température à l'intérieure du domaine de variation des températures de la bande proportionnelle, l'énergie stockée par le ou les dispositif(s) à accumulation. Chaque position à l'intérieur de la bande proportionnelle correspond à une puissance calorifique spécifique du ou des dispositif(s) à accumulation et chaque puissance calorifique correspond à un niveau de charge particulier de ces dispositifs à ce moment. Cette relation est exprimée conformément à l'analyse précédente par la fonction suivante :

$$t = 1 \, / \, \% \text{ vitesse} \, . \, \mathbf{A}$$

(A étant un coefficient et t le temps de chauffage assuré par l'énergie stockée)

Plus particulièrement, lorsque le cycle tarifaire comporte une ou plusieurs périodes à tarif réduit ayant un niveau de prix particulier de l'énergie pour chaque période ou groupe de périodes, la charge du ou des dispositifs à accumulation est réalisée aussi longtemps que la température mesurée par la sonde du noyau accumulateur du dispositif de chauffage est inférieure ou égale à la consigne définie, au cours du cycle tarifaire, par le segment de droite confondue ou parallèle au segment de droite dont le point représentatif à l'origine est situé à la fin de la seule ou de la dernière période à tarif réduit bénéficiant du plus bas prix de l'énergie et a pour valeur à cet instant la température dudit noyau accumulateur mesurée par la sonde du noyau au même instant, la dite température étant de préférence diminuée d'une valeur fixe ou d'un pourcentage prédéterminé(e) sur le régulateur, ledit point représentatif étant relié, pour former le segment de droite, à un deuxième point représentatif défini à la fin du cycle tarifaire en cours et ayant pour valeur à l'instant de la fin du cycle tarifaire, le seuil de température du noyau correspondant à la puissance calorifique minimale à émettre par le ou les dispositifs à accumulation à la température extérieure de dimensionnement. Celle-ci est définie de préférence par la durée de la ou des période(s) à tarif réduit bénéficiant du coût de l'énergie le plus bas. La température du noyau ainsi déterminée par le régulateur à la fin du cycle tarifaire en cours est corrigée en moins lorsque la durée de la charge durant cette ou ces période(s) est inférieure à leur durée totale et en plus lorsqu'elle est égale. La correction est effectuée par une valeur proportionnelle au rapport de la durée totale de la charge du cycle tarifaire précédent par la durée totale de la ou des période(s) pendant lesquelles la charge est autorisée.

Cette charge est réalisée de préférence lorsque la température ambiante mesurée est supérieure à la valeur de la température ambiante de consigne affichée sur l'organe de régulation. Elle est coupée lorsque la valeur de la progression de la température ambiante définie par le régulateur lors du cycle de mesures des variations de la température, est supérieure ou égale au seuil de progression préfixé sur le régulateur. Ainsi les charges excessives lors des variations rapides du climat extérieur sont évitées. Lorsque la température du noyau a atteint sa valeur maximale préfixée sur le régulateur, le dispositif à accumulation a atteint la charge nominale fixée par les normes en vigueur, ladite charge étant atteinte au voisinage de la température extérieure de dimensionnement. La définition de la température de dimensionnement fut précédemment expliquée. La consigne de charge définie par le segment de droite permet d'assurer une charge optimale en cas de variations particulièrement lentes des températures ambiantes. Le segment de droite correspondant à cette consigne, reliant les deux points précités, admet comme fonction $F(t) = - \, at + b$ dans laquelle (t) désigne le temps admettant par exemple la valeur 0 à l'instant correspondant à la fin de la seule ou de la dernière période à tarif réduit bénéficiant du plus bas prix de l'énergie, (b) étant l'ordonnée à l'origine admettant comme valeur le niveau de température du noyau mesuré à l'instant t= 0 diminué d'une valeur fixe ou d'un pourcentage prédéterminé (e) sur le régulateur et (a) étant le coefficient directeur de la droite dont la valeur est définie, à la température extérieure de dimensionnement, en fonction des caractéristiques des dispositifs de chauffage à accumulation, en particulier leur isolation thermique et le quotient des puissances calorifiques moyennes en restitution active ou dynamique par les puissances calorifiques moyennes en restitution naturelle passive ou statique. Rappelons que la puissance calorifique en restitution naturelle ou statique est quasiment proportionnelle à la température du noyau, donc à la charge du noyau accumulateur.

En variante ou en plus de la disposition précédente, lorsque le cycle tarifaire comporte une ou plusieurs périodes à tarif réduit ayant un niveau de prix unique de l'énergie ou particulier à chaque période ou groupe de périodes, la charge du ou des dispositifs à accumulation est réalisée, aussi longtemps que la température ambiante est inférieure ou égale à la consigne définie au cours du cycle tarifaire par le segment de droite confondue ou parallèle au segment de droite dont le point représentatif à l'origine, situé à la fin de la seule ou de la dernière période à tarif réduit bénéficiant du plus bas prix de l'énergie, a pour valeur à cet instant le niveau de température de consigne le plus élevé du domaine de variation des températures de la bande proportionnelle du régulateur à action proportionnelle, ledit point représentatif étant relié, pour former le segment de droite, à un deuxième point représentatif défini à la fin du cycle tarifaire en cours et ayant pour valeur, à cet instant de la fin du cycle tarifaire, le niveau de consigne de température le plus bas du domaine de variation des températures de la bande proportionnelle du régulateur à action proportionnelle, ladite définition de ces points à la fin de la seule ou de la dernière période à tarif réduit bénéficiant du plus bas prix de l'énergie et à la fin du cycle tarifaire pouvant être corrigée en plus ou en moins d'une période de temps prédéterminée sur le régulateur en fonction des caractéristiques techniques des dispositifs à accumulation, ladite charge étant réalisée uniquement tant que la température ambiante régresse et si elle stagne ou progresse, tant que la progression de la température ambiante définie par le régulateur lors du cycle de mesures des variations de température, est inférieure ou égale à un seuil de progression de la température préfixé sur le régulateur. Le seuil de progression peut être égal à la valeur zéro. La correction permet de déplacer le point d'un laps de temps de part et d'autre de la fin du cycle tarifaire.

La bande proportionnelle est solidairement liée à la température ambiante de consigne et le segment de droite définissant la consigne de charge est ainsi toujours incluse dans le domaine de variation des températures de la bande proportionnelle, quelque soit la valeur de la température de consigne affichée. Lors de l'équilibre entre la puissance émise par les dispositifs de chauffage et les besoins à une valeur de température spécifique donnée comprise dans le domaine de variation de la bande proportionnelle le niveau de température du noyau accumulateur, donc le niveau de charge, sera proportionnelle à la puissance émise par les dispositifs de chauffage. Ceci permet de réguler correctement la charge conformément aux besoins thermiques du local conformément à la relation précédemment définie.

Le segment de droite reliant les deux points représentatifs définis précédemment admet comme équation :

$$F(t) = -at + b$$

où (t) désigne le temps, admettant par exemple la valeur 0 à l'instant correspondant à la fin de la seule ou de la dernière période réduit bénéficiant du plus bas prix de l'énergie, (b) étant l'ordonnée à l'origine admettant comme valeur le niveau de consigne de température le plus élevé du domaine de variation des températures de la bande proportionnelle et (a) étant le coefficient directeur de la droite défini de façon que, à l'instant correspondant à la fin du cycle tarifaire, le niveau de consigne de température le plus bas du domaine de variation des températures de la bande proportionnelle soit atteint. L'ordonnée à l'origine (b) peut être déplacée de part et d'autre du niveau de consigne de température le plus élevé du domaine de variation des températures de la bande proportionnelle et la valeur de (a) est ajustable.

Conformément à une variante particulière caractérisant l'invention, lorsque la température ambiante est supérieure à la température de consigne de l'organe de régulation de la température ambiante, en particulier lorsque des dispositifs à accumulation fortement isolés sont utilisés, la charge du ou des dispositifs à accumulation est réalisée, en période à tarif réduit, aussi longtemps que la température ambiante ne progresse pas durant le cycle de mesures des variations de la température défini par le régulateur à intervalles répétitifs déterminés par la base de temps. Ce procédé d'une grande simplicité de mise en oeuvre peut être utilisé avec des tarifs simples de l'énergie électrique. Il est souhaitable de l'associer au procédé définissant une charge systématique des dispositifs à accumulation aussi longtemps que la valeur de la température ambiante est inférieure à la valeur de (Tamc).

En variante ou en plus de toutes les dispositions précédentes, lorsqu'un dispositif de chauffage quelconque à production de chaleur centralisée ou décentralisée dans le local à chauffer est utilisé et lorsque la température de consigne de l'organe de régulation de la température ambiante est réduite en dessous de la valeur de la température ambiante, l'émission de chaleur des émetteurs du dispositif de chauffage est coupée durant un temps préfixé sur le régulateur en fonction de la constante de temps définie par la charge d'une capacité thermique moyenne d'un local de référence, ledit temps préfixé étant de préférence corrigé par un coefficient proportionnel au quotient de la consommation d'énergie maximale du cycle journalier correspondant aux conditions climatiques les plus rigoureuses de la zone climatique par les consommations totales d'énergie du cycle journalier précédent. La température ambiante obtenue à la fin de la période de coupure est définie par le régulateur en tant que nouvelle consigne de température ambiante. Pour réguler la température ambiante à cette nouvelle consigne, l'émission de chaleur des émetteurs, rétablie après la période de coupure, est de préférence coupée à nouveau systématiquement dès que la température ambiante progresse et rétablie à nouveau systématiquement dès que la température ambiante régresse, les dits enclenchements et coupures des dispositifs de chauffage étant réalisés jusqu'à la prochaine modification de la température de consigne ou jusqu'à la fin de la période de temps prédéterminée ne comportant aucune modification de la température de consigne et à la fin de laquelle la consigne prédéterminée est remplacée par la température de consigne minimale affichée sur le régulateur pour le régime réduit.

En variante de la précédente caractéristique de l'invention, lorsqu'un dispositif de chauffage quelconque à production de chaleur centralisée ou décentralisée est utilisé et lorsque la température de consigne de l'organe de régulation de la température ambiante est réduite en dessous de la valeur de la température ambiante, l'émission de chaleur des émetteurs du dispositif de chauffage est coupée aussi longtemps que le quotient de la valeur de la variation de la température ambiante obtenue à la fin d'un cycle de mesures des variations de la température ambiante par la valeur de la variation des températures obtenue à la fin du cycle suivant est égale ou supérieure à la valeur d'un seuil préfixée sur le régulateur, ou en variante cette émission de chaleur est coupée aussi longtemps que la variation de température durant les cycles successifs de mesures des variations de la température reste supérieure à un seuil de variation préfixé sur le régulateur, lesdits seuils étant définis en fonction de la constante de temps définie par la charge de la capacité thermique du local. La température ambiante mesurée à la fin de la période de coupure est définie par le régulateur en tant que nouvelle consigne de température ambiante en régime réduit. Pour réguler la température ambiante à cette nouvelle consigne, l'émission de chaleur, rétablie après la période de coupure, est de préférence coupée à nouveau systématiquement dès que la température ambiante progresse et rétablie à nouveau systématiquement dès que la température ambiante régresse, les dits enclenchements et coupures des dispositifs de chauffage étant réalisés jusqu'à la prochaine modification de la température de consigne ou jusqu'à la fin de la période de temps prédéterminée ne comportant aucune modification de la température de consigne et à la fin de laquelle la consigne prédéterminée est remplacée par la température de consigne minimale affichée sur le régulateur pour le régime réduit.

Les cycles de mesures des variations de la température ambiante correspondent à des intervalles répétitifs d'une durée déterminée par la base de temps du régulateur.

Lorsque des émetteurs de chaleur à eau chaude sont utilisés, les consommations du système de chauffage peuvent être définies en mesurant de préférence le temps d'ouverture de la vanne du ou des émetteurs de chauffage du local ou le temps de fonctionnement du générateur de chaleur s'il est placé dans le local à chauffer. Ce temps est corrigé, si nécessaire lorsque la puissance des émetteurs est modulée, afin d'obtenir la durée équivalente correspondant à leur fonctionnement à pleine puissance.

Le procédé de régulation décrit ne nécessite pas la lise en oeuvre d'une régulation en fonction de la température extérieure pour piloter la température de départ du circuit d'eau chaude ou de tout autre fluide des systèmes de chauffage central. L'affichage sur le régulateur central, d'une part de la température maximale de départ du fluide en fonction du dimensionnement le plus défavorable du ou des émetteurs du local à chauffer par rapport aux pertes thermiques maximales de ce local majorée d'un coefficient de sécurité et d'autre part une température minimale adaptée aux caractéristiques des émetteurs. Le régulateur agissant sur le générateur de chaleur module la température de départ du fluide entre la valeur maximale à la valeur minimale, proportionnellement au rapport du temps de fonctionnement du générateur durant le cycle précédent d'une durée de 24 heures par le temps maximal de fonctionnement durant le cycle correspondant aux déperditions thermiques maximales. Ce générateur est en outre systématiquement enclenché, quelque soit la température de départ du fluide, lorsque la température ambiante d'un quelconque volume à chauffer est égale ou inférieure à la valeur d'un seuil de température ambiante préfixé sur le régulateur par rapport à la consigne de température ambiante affichée et que la progression de la température ambiante durant le cycle de comparaison est inférieure à un seuil préfixé sur le régulateur.

De manière générale lorsque le régime hors gel ou un régime spécifique est activé, la charge du ou des dispositif (s) à accumulation est enclenchée durant la ou les périodes à tarif réduit aussi longtemps que la température ambiante est inférieure à la consigne de température hors gel ou du régime spécifiques, lesdites températures étant majorées d'une valeur préétablie, la dite charge étant coupée lorsque la température ambiante atteint ou dépasse cette consigne majoré, ledit régime hors gel ou spécifique verrouille tous les autres procédés de charge. Lorsque la température ambiante chute en dessous de la consigne de température hors gel, non majorée, les dispositifs d'émission de chaleur sont enclenchés. La consigne hors gel sera de préférence réglable par l'utilisateur en continu ou par seuil .

La présente invention concerne également la construction d'un dispositif de régulation pour la mise en oeuvre du procédé précédemment défini. L'invention sera mieux comprise, grâce à ce dispositif décrit ci-après. Il se rapporte à un mode de réalisation préférentiel, donné à titre d'exemple et non limitatif. Le dispositif peut être commun à tous les modes de chauffage, ou particulier à chacun de ces modes. Il peut être réalisé avec des composants électroniques ou bien électromécaniques avec les organes de sélection, les thermostats, les interrupteurs constitués d'éléments munis de contacts mécaniques, notamment de contacts de relais. Le dispositif ne concerne pas la constitution des différents composants, circuits et organes, qui peuvent être remplacés par des équivalents techniques sans pour autant sortir du domaine de protection de l'innovation.

La figure 1 du dessin annexé représente un exemple de schéma du dispositif de régulation selon l'invention.

Le dispositif selon l'invention est constitué par un organe (7) réalisant la sélection du mode de fonctionnement, la réception et la gestion des signaux tarifaires et la synchronisation de l'horloge du régulateur par rapport aux signaux tarifaires du réseau de distribution. Cet organe sélectionne les périodes autorisées de charge, différencie le niveau de prix de l'énergie de chaque période à tarif réduit, définit le début du cycle tarifaire du réseau de distribution par la gestion des signaux tarifaires. Il transmet ces informations aux différents circuits du régulateur, permettant ainsi en particulier de sélectionner les différents seuils de fonctionnement prédéterminés en fonction des signaux tarifaires des mesures et des comparaisons. Les circuits (50) de commande conditionnelle de la charge des dispositifs à accumulation et ou des dispositifs d'émission de chaleur des autres dispositifs de chauffage gèrent les informations transmises par l'organe de mesures de la température ambiante et par l'organe de réglage de la température ambiante de consigne. Les circuits complémentaires (52) de commande conditionnelle de la charge gèrent les informations transmises par l'organe de mesures de la température du noyau accumulateur. Les circuits (51) de verrouillage conditionnel de la charge ou de l'émission de la chaleur des dispositifs de chauffage gèrent les informations transmises par l'organe de mesure du temps d'enclenchement des résistances de charge du noyau accumulateur. Les circuits (50), (51) et (52) sont reliés à un circuit de sélection et de commande (14). Ce dernier pilote d'une part l'interrupteur (15) permettant d'assurer l'alimentation conditionnelle des résistances de charge (16) du noyau accumulateur des dispositifs de chauffage et d'autre part l'organe de régulation (30) permettant de commander l'alimentation conditionnelle des dispositifs d'émission de chaleur associés aux dispositifs de chauffage. La mesure de la température du noyau accumulateur permet de définir la quantité de chaleur stockée qui est directement proportionnelle à la température de ce noyau. De même la mesure du temps d'enclenchement des résistances de charge des dispositifs à accumulation ou du temps d'enclenchement des dispositifs d'émission de chaleur permet de définir l'énergie consommée qui est également directement proportionnelle à ce temps. Toutefois, si les dispositifs d'émission de chaleur sont pilotés par un régulateur à action proportionnelle, ce temps d'enclenchement est corrigé d'une part pour obtenir le temps hypothétique de fonctionnement à pleine puissance des dispositifs d'émission de chaleur, d'autre part et de cas échéant en fonction de la température du fluide colporteur de chaleur. Ces transformations et corrections sont réalisées dans les circuits reliés aux différents organes de mesures. Ces circuits, incorporent les protections d'entrée du régulateur et réalisent l'amplification et le traitement des informations mesurées. Ils intègrent de préférence un convertisseur d'informations analogiques en informations numériques. Le dispositif décrit est commun à tous les dispositifs de chauffage. Le procédé de régulation pour les dispositifs de chauffage à accumulation, par la diversité des prix de l'énergie et par sa double fonction de régulation de la charge du noyau et de la charge de la capacité d'accumulation des éléments de construction et d'équipement, est le plus complexe à gérer et met en oeuvre divers procédés de fonctionnement. Il est ainsi le plus onéreux. Lors de l'industrialisation du procédé il sera souhaitable de développer des régulateurs spécifiques pour différents dispositifs de chauffage.

Les circuits (50) comportent le circuit de calcul, de comparaison et de mémorisation (12) relié d'une part, par l'intermédiaire du circuit de protection d'amplification et de traitement des informations (6), à l'organe (1) mesurant la température ambiante et à l'organe (2) permettant le réglage de la température ambiante de consigne et d'autre part, à l'organe (9) assurant l'affichage, la sélection, la mémorisation des différents seuils de fonctionnement et recevant les informations du régulateur à action proportionnelle (30) ainsi que de l'organe (7) recevant et gérant les signaux tarifaires.

Les circuits (50) de commande conditionnelle de la charge du ou des dispositifs à accumulation alimentent les résistances de charge (16), par le circuit électronique de sélection et de commande (14), l'interrupteur (15), aussi longtemps que la valeur de la température ambiante mesurée par l'organe de mesure (1) et le circuit (6), comparée dans le circuit (12), est inférieure ou égale à la valeur du seuil de température prédéterminé sur l'organe (9) à l'intérieur du domaine de variation de la bande proportionnelle communiqué à l'organe (9) par le régulateur à action proportionnelle (30), le dit seuil étant sélectionné par la signal tarifaire correspondant au niveau de prix de l'énergie de la période à tarif réduit en cours appliqué à l'organe (7) qui asservit l'organe (9), la dite charge étant coupée lorsque la valeur de la température ambiante, mesurée par l'organe (1) et le circuit de traitement de l'information (6) dépasse la valeur du seuil sélectionné, ou lorsque la progression de la température ambiante définie par le circuit (12) pendant l'intervalle fixé par la base de temps (11) et comparée dans le circuit (12) est supérieure à un seuil de variation de la température mémorisé par l'organe (9) et sélectionné par le signal tarifaire appliqué à l'organe (7).

Afin de maintenir la charge de la capacité thermique de la masse des éléments de construction et d'équipement du local ou des locaux chauffés à un niveau optimal assurant le confort dans la plage de température souhaitée en priorité par l'émission naturelle ou statique des dispositifs à accumulation, les circuits (50) de commande conditionnelle de la charge du ou des dispositifs à accumulation alimentent les résistances de charge (16), par le circuit électronique de sélection et de commande (14), pendant les périodes de charge autorisées par l'organe (7) en fonction des signaux tarifaires, aussi longtemps que la valeur de la température ambiante mesurée par l'organe de mesure (1) et le circuit de traitement des informations (6), comparée dans le circuit de comparaison (12), est inférieure ou égale à la valeur du seuil de température préfixée sur le régulateur et affichée sur l'organe (9), ladite valeur étant fonction des caractéristiques techniques des dispositifs de chauffage à accumulation utilisés, la dite charge étant coupée lorsque la valeur de la température ambiante, mesuré par l'organe (1) et le circuit de mesures (6), dépasse la valeur du seuil.

Pour adapter la charge des dispositifs à accumulation aux fluctuations de la charge de la capacité thermique de la masse des éléments de construction et d'équipement du local ou des locaux chauffés lors des variations de régime de chauffage, les circuits (50) de commande conditionnelle de la charge du ou des dispositifs à accumulation, réalisent, par le circuit de calcul de comparaison et de mémorisation (12), le circuit électronique de sélection (14), l'interrupteur (15), l'alimentation des résistances de charge (16) du noyau accumulateur, lorsque la température ambiante mesurée par l'organe (1) et le circuit (6), comparée dans le circuit (12), est supérieure à la température de consigne régulant cette température ambiante affichée sur l'organe (2) et lorsque la valeur de la régression de la température ambiante, calculée par le circuit (12) dans l'intervalle fixé par la base de temps (11) puis mémorisée et comparée dans le circuit (12), est supérieure ou égale a la valeur du seuil de régression de température préfixé sur l'organe (9) ou en variante lorsque la valeur de la progression de cette température est inférieure ou égale au seuil de progression préfixé sur l'organe (9), le dit seuil de progression ou de régression étant sélectionné par le signal tarifaire correspondant au niveau de prix de l'énergie de la période à tarif réduit en cours appliqué à l'organe (7), la dite charge étant coupée lorsque la valeur de la régression de la température ambiante, calculée par le circuit (12) dans l'intervalle fixé par la base de temps (11) devient inférieure au seuil de régression ou lorsque la valeur de progression devient supérieure au seuil de progression.

Un deuxième mode de fonctionnement affiché sur l'organe (7) consiste à sélectionner par l'organe (7) sur l'organe (9) le seuil prédéterminé de variation de température égal à zéro, puis à réaliser par l'intermédiaire du circuit électronique de sélection et de commande (14), l'interrupteur (15) l'alimentation des résistances de charge (16) au début de chaque période à tarif réduit défini par l'organe (7) et après chaque période de verrouillage de la charge définie par les circuits (51) pilotant également le circuit (14), ladite alimentation étant systématiquement coupée lorsque la valeur de la progression de la température mesurée par l'organe (1) et le circuit (6), calculée par le circuit (12) dans l'intervalle fixé par la base de temps (11) puis mémorisée et comparée dans le circuit (12), est supérieure à ce seuil prédéterminé et systématiquement enclenchée à nouveau lorsque la valeur de la régression de la température mesurée par l'organe (1) et le circuit (6), calculée par le circuit (12) dans l'intervalle fixé par la base de temps (11) puis mémorisée et comparée dans le circuit (12), est inférieure à ce seuil prédéterminé.

Afin que l'émission statique ou naturelle des dispositifs à accumulation soit réduite à sa valeur optimale permettant d'atteindre une température minimale en régime réduit compatible avec la gestion optimale de la charge de la capacité d'accumulation des éléments constitutifs du local ou des locaux chauffés assurant le confort, les circuits (51) de verrouillage conditionnel de la charge du ou des dispositifs à accumulation, comportant le circuit de calcul de comparaison et de mémorisation (13) asservi à l'organe (7) et relié d'une part à l'organe (4) mesurant le temps de mise sous tension des résistances de charge par l'intermédiaire du circuit de protection, d'amplification et de traitement des informations (8) et d'autre part à l'organe (10) assurant l'affichage, la sélection, la mémorisation des différents seuils de fonctionnement, réalisent le verrouillage de l'alimentation des résistances de charge (16) du noyau accumulateur par le circuit (14) et l'interrupteur (15) durant un temps calculé par le circuit (13) conformément à la formule suivante: durée maximale de la ou des période(s) à tarif réduit du cycle tarifaire du réseau de distribution bénéficiant du prix de l'énergie le plus bas déterminée par l'organe (7) diminuée de la valeur obtenue en multipliant la durée totale de la mise sous tension des résistances de charge des dispositifs à accumulation mesurée durant le cycle tarifaire précédent par l'organe (4) et le circuit (8), par un coefficient ajustable et réglable mémorisé par l'organe (10). Le temps de verrouillage ainsi défini durant le temps calculé et mémorisé par le circuit de comparaison et de mémorisation (13), est désactivé temporairement par le circuit (14) d'une part aussi longtemps que la température ambiante mesurée par l'organe (1) et le circuit (6), comparée dans le circuit de comparaison (12) devient et reste inférieure à la valeur d'un premier seuil de température préfixé sur l'organe (9) conformément aux caractéristiques techniques des accumulateurs ou à un deuxième seuil préfixé sur l'organe (9), à l'intérieur des limites des variations des températures fixées par la bande proportionnelle du régulateur à action proportionnelle (30) conformément à la température de consigne affichée sur l'organe (2), et d'autre part aussi longtemps que la régression de la température ambiante calculée par le circuit (12) dans l'intervalle fixé par la base de temps (11) puis mémorisée et comparée dans le circuit (12), devient supérieure ou égale au seuil de régression préfixé sur l'organe (9). Ce verrouillage est ainsi réalisé de manière continue ou discontinue. D'autre part il n'est pas réalisé lorsque le résultat du calcul suivant la formule précitée est négatif.

En complément à la disposition précédente les circuits (51) réalisent durant la période à tarif réduit du cycle en cours le verrouillage de l'alimentation des résistances de charge (16) par le circuit de sélection et de commande (14) et l'interrupteur (15), lorsque la durée de la mise sous tension des résistances de charge lors de la période à tarif réduit précédente du même cycle tarifaire mesurée par l'organe de mesure du temps de charge (4) et le circuit (8), mémorisée et comparée dans le circuit (13) est inférieure au seuil calculé proportionnellement à la durée totale de la période à tarif réduit précédente du même cycle tarifaire par le circuit (13) asservi à l'organe (7), le pourcentage définissant cette proportionnalité étant préfixé sur l'organe (10). Le verrouillage de la charge durant la période en cours est supprimé par le circuit de sélection et de commande du dispositif (14) d'une part aussi longtemps que la température ambiante mesurée par l'organe (1) et le circuit (6), comparée dans le circuit de comparaison (12) devient et reste inférieure à la valeur d'un premier seuil de température préfixé sur l'organe (9) conformément aux caractéristiques techniques des accumulateurs ou à un deuxième seuil préfixé sur l'organe (9), à l'intérieur des limites des variations des températures fixées par la bande proportionnelle du régulateur à action proportionnelle (30) conformément à la température de consigne affichée sur l'organe (2), et d'autre part aussi longtemps que la variation de la température ambiante calculée par le circuit (12) dans l'intervalle fixé par la base de temps (11) puis mémorisée et comparée dans le circuit (12), devient supérieure ou égale au seuil de régression préfixé sur l'organe (9) sélectionné par l'organe (7). Au lieu d'être verrouillé totalement, la charge durant le cycle en cours peut aussi être verrouillée qu'une fraction de la durée de cette période, ladite fraction étant fixe ou de préférence définie par l'organe (13) proportionnellement au quotient de la durée totale de la période à tarif réduit précédente par le temps de charge de cette période.

La disposition suivante est applicable à des systèmes tarifaires simples associés à des dispositifs à accumulation fortement isolés. Le procédé conforme à cette disposition peut remplacer certains autres procédés de charge . Les circuits (50) de commande conditionnelle de la charge du ou des dispositifs à accumulation, réalisent durant les périodes à tarif réduit, par le circuit de calcul de comparaison et de mémorisation (12), le circuit électronique de sélection et de commande (14), l'interrupteur (15), l'alimentation des résistances de charge (16), lorsque la régression de la température ambiante, calculée par le circuit (12) dans l'intervalle de la base de temps (11) suivant les informations mesurées par 1 organe (1) et le circuit (6) puis comparées dans le circuit (12), est inférieure ou égale à la valeur zéro correspondant au seuil sélectionné sur l'organe (9) par un ordre spécifique de l'organe (7), la dite charge étant coupée lorsque la valeur de la progression de la température ambiante, définie par le circuit (12) dans l'intervalle de la base de temps (11) suivant les informations mesurée par l'organe (1) et le circuit (6) puis comparées, dans le circuit (12), devient supérieur à zéro. Le mode de fonctionnement correspondant est sélectionné par l'organe (7).

Le dispositif selon l'invention assure aussi la gestion optimale, en régime réduit, de la charge de la capacité thermique des éléments de construction et d'équipements du ou des locaux chauffés quelque soit le mode de chauffage, tout en donnant la priorité aux consommations d'énergie bénéficiant du prix le plus bas lorsque le tarif de l'énergie comprend différents prix appliqués en fonction des périodes tarifaires. Les dispositifs d'émission de chaleur sont régulés de manière classique lorsque la température ambiante est inférieure à la température de consigne du thermostat. Dès que cette consigne est réduite en dessous de valeur de la température ambiante, une nouvelle température de consigne est définie par le régulateur en fonction de la masse thermique du local ou des locaux chauffés. Ainsi, malgré l'utilisation d'émetteurs à faible inertie la masse thermique sera maintenue à une température optimale garant du confort. En outre lorsque des émetteurs à forte inertie sont utilisés, les surchauffes suite aux apports externes divers sont supprimés grâce à la meilleur gestion de la température de la masse.

Les circuits (50) de commande conditionnelle de l'émission de chaleur d'un dispositif quelconque de chauffage, verrouillent, par le circuit de calcul de comparaison et de mémorisation (12) le circuit électronique de sélection (14) et l'organe de régulation (30), la restitution de la chaleur des dispositifs d'émission de chaleur (32) des dispositifs de chauffage, lorsque le mode de fonctionnement correspondant est sélectionné sur l'organe (7) et dès que la consigne affichée sur l'organe (2) est réduite en dessous de valeur de la température ambiante, mesurée par l'organe (1) et le circuit (6) comparée dans le circuit de comparaison (12), ledit verrouillage étant maintenu par les circuits (13) et (14) durant le temps préfixé sur l'organe (10) sélectionné l'organe (7) ledit temps étant multiplié par un coefficient proportionnel au quotient de la durée maximale d'alimentation des émetteurs préfixée sur l'organe (10) pour le cycle journalier correspondant aux conditions climatiques les plus rigoureuses du site par la valeur des consommations totales d'énergie du cycle précédent définie par le circuit de calcul de comparaison et de mémorisation (13), la température ambiante relevée à la fin de la période de verrouillage par l'organe (1) et le circuit (6) étant mémorisée dans le circuit (12) et définie par le régulateur comme nouvelle consigne de température ambiante en régime réduit aussi longtemps qu'elle est supérieure à la consigne affichée à l'organe de réglage (2). La consigne de température ambiante minimale du régime réduit affichée sur l'organe (9) remplace celle définie par le régulateur à la fin de la période de verrouillage dès que la consigne affichée par l'utilisateur est réduite manuellement ou suite à une programmation du régime réduit d'un temps supérieur au cycle de chauffe, ou dès que cette consigne minimale devient supérieure à la température ambiante, ou encore lorsque le temps séparant l'instant présent de celui correspondant à l'application de la consigne précitée définie par le régulateur devient supérieur au seuil de temps préfixée sur l'organe (9) en fonction de la durée du cycle de chauffe.

Un deuxième mode de fonctionnement également sélectionné par l'organe (7) consiste à verrouiller la restitution de la chaleur des dispositifs de chauffage, dès que la consigne affichée sur l'organe (2) est réduite en dessous de valeur de la température ambiante, mesurée par l'organe (1) et le circuit (6) comparée dans le circuit de comparaison (12), aussi longtemps que le quotient de la valeur de la régression de la température calculée par le circuit de calcul de comparaison et de mémorisation (12) dans l'intervalle de la base de temps (11) d'un cycle donné par la valeur de la régression de la température calculée par le circuit (12) dans l'intervalle de la base de temps (11) du cycle suivant est supérieur à un seuil prédéterminé dans l'organe (9), la température ambiante relevée à la fin de la période de verrouillage par l'organe (1) et le circuit (6) étant mémorisée dans le circuit (12) est définie par le régulateur comme nouvelle consigne de température ambiante en régime réduit aussi longtemps qu'elle est supérieure à la consigne affichée à l'organe de réglage (2). La consigne de température ambiante minimale du régime réduit affichée sur l'organe (9) remplace celle définie par le régulateur à la fin de la période de verrouillage dès que la consigne est réduite manuellement ou suite à une programmation du régime réduit d'un temps supérieur au cycle de chauffe, ou dès que cette consigne minimale devient supérieure à la température ambiante, ou encore lorsque le temps séparant l'instant présent de celui correspondant à l'application de la consigne précitée définie par le régulateur devient supérieur au seuil de temps préfixée sur l'organe (9) en fonction de la durée du cycle de chauffe.

De manière générale, pour tous les procédés selon l'invention, une commande hors gel permet de réduire la température en période d'inoccupation. Durant le régime hors gel, activé par l'organe (3) asservissant par l'organe (7) les circuits et les organes (9), (12), et (14), les circuits (50) de commande conditionnelle de la charge des dispositifs à accumulation ou de commande du dispositif d'émission de chaleur d'un dispositif quelconque de chauffage, réalisent, par le circuit de calcul et de comparaison (12) le circuit électronique (14) et l'interrupteur (15) l'alimentation des résistances de charge (16) durant les périodes à tarif réduit, aussi longtemps que la température ambiante mesurée par l'organe (1) et le circuit (6) et comparée dans le dispositif de comparaison (12) est inférieure ou égale à la valeur de la consigne de température hors gel majorée d'une valeur préétablie et préfixée sur le l'organe (9), la dite consigne de température hors gel non majorée pilotant par le circuit (30) les dispositifs de restitution de la chaleur (32) des dispositifs de chauffage, ledit organe de commande hors gel (3) verrouillant, durant la période hors gel, l'application de tous les autres procédés de charge revendiqués, la dite alimentation des résistances de charge étant coupée lorsque la température ambiante atteint ou dépasse la valeur de la consigne majorée. La majoration de la consigne hors gel est supprimé lorsque sur l'organe d'affichage (7) le tarif de l'énergie sélectionné ne comporte pas de périodes à tarif réduit et donc présente un niveau de prix unique de l'énergie.

Une caractéristique de l'invention, concernant particulièrement les logements présentant une forte inertie, permet de réaliser la charge en fonction du niveau de température du noyau accumulateur, donc du niveau de charge de celui-ci, à la fin de la ou des périodes bénéficiant du prix de l'énergie le plus bas. Les circuits (52) de commande conditionnelle de la charge du ou des dispositifs à accumulation comportent le circuit de calcul de comparaison et de mémorisation (18) relié d'une part, par l'intermédiaire du circuit de protection d'amplification et de traitement des informations (17), à l'organe (5) mesurant la température du noyau accumulateur, représentative de l'énergie stockée et d'autre part, à l'organe (10) assurant l'affichage, la sélection, la mémorisation des différents seuils de fonctionnement et recevant les informations de l'organe (7).

Les circuits (52) réalisent durant les périodes autorisées de charge, par le circuit de calcul de comparaison et de mémorisation (18), le circuit électronique de sélection (14), l'interrupteur (15), l'alimentation des résistances de charge (16), aussi longtemps que la valeur de la température du noyau accumulateur des dispositifs de chauffage, mesurée par l'organe (5) de mesures de cette température raccordé au circuit (17), est inférieure, de préférence d'une valeur préfixée, ou égale à la valeur de la consigne définie par la fonction F(t) = - a.t + b mémorisée par ce circuit (18). Cette fonction définit un segment de droite qui a pour ordonnée à l'origine le point représentatif (b) situé à l'instant correspondant à la fin de la seule ou de la dernière période à tarif réduit bénéficiant du plus bas prix de l'énergie défini par l'organe (7). Ce dit point représentatif (b), a pour valeur à cet instant la température du noyau accumulateur mesurée par l'organe (5) du circuit (17) et est relié pour former le segment de droite à un deuxième point défini à la fin du cycle tarifaire défini par l'organe (7) qui a pour valeur à cet instant le seuil de température du noyau prédéterminé sur l'organe (10), modulable et réglable, correspondant à la température de dimensionnement des dispositifs à accumulation. La valeur de ce deuxième point, définissant également le coefficient directeur (a) de la droite, étant de préférence modulée par le circuit (18), en augmentation ou en diminution en fonction de la durée de la charge lors de la ou des périodes à tarif réduit par rapport à la durée totale de cette ou ces période(s), la dite alimentation des résistances de charge (16) n'étant de préférence réalisée que lorsque les températures ambiantes mesurées par le circuit (12) régressent ou si elles stagnent ou progressent que lorsque la valeur de la variation définie dans l'intervalle de la base de temps (11) est inférieure ou égale au seuil préfixé sur l'organe (9). La valeur de ce seuil peut être égale à zéro.

En complément à la disposition précédente, les circuits (50) de commande conditionnelle de la charge du ou des dispositifs à accumulation, réalisent durant les périodes autorisées de charge, par le circuit électronique de sélection et de commande (14), l'interrupteur (15) l'alimentation des résistances de charge (16), aussi longtemps que la valeur de la température ambiante mesurée par l'organe de mesure (1) et le circuit (6), comparée dans le circuit de comparaison (12), est inférieure, de préférence d'une valeur préfixée, ou égale à la valeur de la consigne définie par la fonction F(t) =- a.t + b mémorisée par le circuit (12). Cette fonction définit au cours du cycle tarifaire un segment de droite qui a pour ordonnée à l'origine le point représentatif (b) situé à l'instant correspondant à la fin de la période à tarif réduit bénéficiant du plus bas prix de l'énergie défini par l'organe (7) et a pour valeur à cet instant le niveau de température de consigne le plus élevé du domaine de variation des températures de la bande proportionnelle de l'organe de régulation à action proportionnelle (30). Ce point représentatif est relié, pour former la droite, à un deuxième point défini à la fin du cycle tarifaire défini par le circuit (7) et a pour valeur à cet instant le niveau de température de consigne le plus bas du domaine de variation des températures de la bande proportionnelle de l'organe de régulation à action proportionnelle (30), la dite définition dans le temps à la fin du cycle tarifaire pouvant être corrigée en plus ou en moins d'une période de temps prédéterminée sur l'organe (9) en fonction des caractéristiques techniques des dispositifs à accumulation, la dite alimentation des résistances de charge (16) n'étant de préférence réalisée que lorsque les températures ambiantes mesurées par le circuit (12) régressent ou si elles stagnent ou progressent que lorsque la valeur de la variation définie dans l'intervalle de la base de temps (11) est inférieure ou égale au seuil préfixé sur l'organe (9). La valeur de ce seuil peut être égale à zéro.

Afin d'obtenir la température en régime réduit la plus faible restant compatible avec un bon confort et réguler finement la charge des dispositifs à accumulation et de la capacité thermique des éléments de construction et d'équipement pour une économie d'énergie maximale, les divers procédés selon l'invention et les différents seuils affichés au dispositif de régulation sont définis judicieusement en fonction des caractéristiques techniques des dispositifs de chauffage.

Lorsque la température ambiante mesurée par l'organe de mesure (1) et le circuit (6), comparée dans le circuit de comparaison (12) est supérieure à la valeur de la température de consigne de l'organe (2), la mise en service de l'un quelconque des différents procédés de charge revendiqués ne peut être de préférence autorisée que lorsque l'écart positif de température définie dans le circuit (12), en réalisant la différence entre la température ambiante mesurée par l'organe (1) du circuit (6) et le seuil minimal de température affiché sur l'organe (9) en fonction des caractéristiques techniques des dispositifs de chauffage à accumulation, est inférieure ou égale à la valeur du seuil spécifique prédéterminé aussi sur l'organe (9) et affectée à chaque procédé ce charge, ledit seuil pouvant être particulier à chaque procédé revendiqué et modulé en fonction du temps de fonctionnement des dispositifs d'émission de chaleur défini par l'organe (30) et mémorisé par l'organe (9).

## Revendications

1. Procédé de régulation de charge d'au moins un dispositif de chauffage électrique à accumulation, tel qu'un radiateur à accumulation, un plancher chauffant ou analogue, et de la charge optimale de la capacité thermique des éléments de construction et d'équipement du local ou d'un groupe de locaux à chauffer quelque soit le mode de chauffage, le dit procédé permettant de piloter indifféremment les deux charges simultanément ou la dernière exclusivement, **caractérisé en ce qu'**il consiste essentiellement, pour un local à chauffer donné ou un groupe de locaux, à piloter la charge ou l'opération de chargement du ou des dispositifs électriques à accumulation au cours de la ou des période(s) autorisées de préférence à tarif réduit d'un cycle tarifaire du réseau de distribution électrique comportant un ou plusieurs niveau(x) de prix de l'énergie et la charge de la capacité thermique des éléments de construction et d'équipement du local ou des locaux, en fonction d'une consigne de charge spécifique définie par le régulateur, la dite consigne étant obtenue en comparant la valeur des variations de la température ambiante définie par le régulateur à intervalles répétitifs d'une durée déterminée, définissant un cycle de mesures des variations de la température ambiante, à un seuil de variation de température prédéterminé par le régulateur.

2. Procédé selon la revendication 1, **caractérisé en ce qu'**il consiste, lorsque le cycle tarifaire comporte plusieurs périodes à tarif réduit ayant de préférence un niveau de prix de l'énergie particulier pour chaque période ou groupe de périodes, à verrouiller la charge des dispositifs à accumulation durant toute la période à tarif réduit en cours du cycle tarifaire du réseau de distribution électrique, ou durant une fraction préréglée de cette période modulée de préférence en fonction des consommations du cycle précédent, tant que la durée de la charge des dispositifs à accumulation lors de la période à tarif réduit précédente du même cycle tarifaire, mais bénéficiant d'un prix de l'énergie inférieur, n'a pas atteint la durée totale de cette période précédente ou une fraction préréglée de celle-ci, le verrouillage de la dite charge étant de préférence supprimé d'une part lorsque la température ambiante est inférieure ou égale au seuil préfixé sur le régulateur en fonction des caractéristiques techniques des dispositifs à accumulation ou à celui fixé dans le domaine de variation de la bande proportionnelle pilotant les dispositifs d'émission de chaleur, d'autre part lorsque la régression de la température ambiante durant le cycle de mesures des variations de la température devient supérieure ou égale au seuil de régression de la température préfixé sur le régulateur pour la période en cours.

3. Procédé selon l'une quelconque des revendications 1 et 2, **caractérisé en ce qu'**il consiste, lorsque la durée de la charge des dispositifs à accumulation lors d'une période à tarif réduit en cours est réalisée pendant la durée totale de cette période ou est proche de cette valeur, à remplacer le seuil de variation de la température affecté par le régulateur à la période à tarif réduit suivante du même cycle tarifaire par celui de la période en cours et lorsque ladite durée de la charge n'est qu'une fraction de la durée totale de la période, à remplacer le seuil affecté par le régulateur à la période suivante du même cycle tarifaire par un nouveau seuil de variation de température obtenu en modulant l'écart entre les seuils de variation de température des deux périodes à tarif réduit de préférence proportionnellement au temps d'enclenchement des dispositifs d'émission de chaleur pendant le temps séparant ces deux périodes.

4. Procédé selon l'une quelconque des revendications 1 à 3 **caractérisé en ce qu'**il consiste, au cours de la période à tarif réduit du cycle tarifaire bénéficiant du plus bas prix de l'énergie, à verrouiller la charge du ou des dispositifs de chauffage pendant un temps calculé par le régulateur conformément à la relation suivante : durée maximale de la ou des période(s) à tarif réduit du cycle tarifaire bénéficiant du prix de l'énergie le plus bas, diminuée de la valeur obtenue en multipliant la durée totale de charge des dispositifs à accumulation lors du cycle tarifaire précédent du réseau de distribution électrique par un coefficient de sécurité préfixé ajustable, ledit verrouillage étant supprimé lorsque le résultat de cette soustraction est nul ou négatif et la durée dudit verrouillage étant de préférence limitée à un temps prédéterminé par le régulateur et correspondant à une fraction de la durée totale de la ou des périodes à tarif réduit bénéficiant du plus bas prix de l'énergie, ladite charge étant rétablie temporairement même durant la période de verrouillage, d'une part lorsque la température ambiante est inférieure ou égale au seuil préfixé sur le régulateur en fonction des caractéristiques techniques des dispositifs à accumulation ou au seuil fixé dans le domaine de variation de la bande proportionnelle pilotant les dispositifs d'émission de chaleur, d'autre part lorsque la régression de la température ambiante durant le cycle de mesures des variations de la température devient supérieure ou égale au seuil minimal de régression préfixé sur le régulateur pour la période à tarif réduit en cours.

**5.** Procédé selon l'une quelconque des revendications 1 à 4, **caractérisé en ce qu'**il consiste, lorsque le cycle tarifaire comporte une ou plusieurs périodes à tarif réduit ayant un niveau de prix particulier de l'énergie pour chaque période ou groupe de périodes, à réaliser la charge du ou des dispositifs à accumulation aussi longtemps que la température mesurée par la sonde du noyau accumulateur du dispositif de chauffage est inférieure ou égale à la consigne définie, au cours du cycle tarifaire, par le segment de droite confondu ou parallèle au segment de droite dont le point représentatif à l'origine est situé à la fin de la seule ou de la dernière période à tarif réduit bénéficiant du plus bas prix de l'énergie et a pour valeur à cet instant la température dudit noyau accumulateur mesurée par la sonde de ce noyau au même instant, la dite température étant de préférence diminuée d'une valeur fixe ou d'un pourcentage prédéterminé(e) sur le régulateur, ledit point représentatif étant relié, pour former le segment de droite, à un deuxième point représentatif défini à la fin du cycle tarifaire en cours et ayant pour valeur à l'instant de la fin du cycle tarifaire, le seuil de température du noyau correspondant de préférence à la puissance calorifique minimale émise par le ou les dispositifs à accumulation à la température extérieure de dimensionnement correspondant à la ou les période (s) à tarif réduit bénéficiant du coût de l'énergie le plus bas, ledit seuil de température du noyau étant corrigé en moins lorsque la durée de la charge durant cette ou ces période(s) est inférieure à leur durée totale et en plus lorsqu'elle est égale, ladite correction étant effectuée par une valeur proportionnelle au rapport de la durée totale de la charge du cycle tarifaire précédent par la durée totale de la ou des période(s) pendant lesquelles la charge est autorisée, ladite charge étant réalisée de préférence que tant que la température ambiante régresse et si elle stagne ou progresse, tant que la variation de la température ambiante, définie par le régulateur lors du cycle de mesures des variations de température, est inférieure ou égale à un seuil de variation de la température préfixé sur le régulateur, le dit seuil étant de préférence égal à zéro.

**6.** Procédé selon l'une quelconque des revendications 1 à 5, **caractérisé en ce qu'**il consiste, lorsque le cycle tarifaire comporte une ou plusieurs périodes à tarif réduit ayant un prix unique ou un prix spécifique pour chaque période ou groupe de périodes, lorsque la température ambiante est supérieure à la température de consigne de l'organe de régulation de cette température ambiante, à réaliser la charge des dispositifs à accumulation durant la ou les période(s) à tarif réduit, tant que la valeur de la variation de la température ambiante est supérieure ou égale au seuil de régression, ou bien tant qu'elle est inférieure ou égale au seuil de progression, lesdits seuils de régression ou de progression étant préfixés sur le régulateur en fonction des caractéristiques techniques des accumulateurs et du niveau de prix de l'énergie de chaque période à tarif réduit.

**7.** Procédé selon l'une quelconque des revendications 1 à 6, **caractérisé en ce qu'**il consiste, lorsque la température ambiante mesurée est supérieure à la température de consigne de l'organe de régulation de cette température ambiante et lorsque le cycle tarifaire comporte une période ou plusieurs périodes à tarif réduit, à enclencher systématiquement la charge à la fin de chaque période de verrouillage de la charge et au début de chaque période à tarif réduit ne comportant pas de temps de verrouillage, à couper ensuite systématiquement cette charge lorsque la température ambiante progresse durant le cycle de mesure des variations de température et à enclencher à nouveau systématiquement cette charge dès que la température ambiante régresse durant le cycle de mesures des variations de température, lesdits enclenchements et coupures étant réalisés jusqu'à la fin de la période à tarif réduit en cours ou jusqu'à la prochaine modification de la température ambiante de consigne qui la rendra à nouveau supérieure à la température ambiante mesurée.

**8.** Procédé selon l'une quelconque des revendications 1 à 7, **caractérisé en ce qu'**il consiste, lorsque le cycle tarifaire comporte une ou plusieurs périodes à tarif réduit ayant un niveau de prix de l'énergie unique ou particulier à chaque période ou groupe de périodes, à réaliser la charge du ou des dispositifs à accumulation, aussi longtemps que la température ambiante est inférieure ou égale à la consigne définie au cours du cycle tarifaire par le segment de droite confondu ou parallèle au segment de droite dont le point représentatif à l'origine, situé à la fin de la seule ou de la dernière période à tarif réduit bénéficiant du plus bas prix de l'énergie, a pour valeur à cet instant le niveau de température de consigne le plus élevé du domaine de variation des températures de la bande proportionnelle du régulateur à action proportionnelle, ledit point représentatif étant relié, pour former le segment de droite, à un deuxième point représentatif défini à la fin du cycle tarifaire en cours et ayant pour valeur, à cet instant de la fin du cycle tarifaire, le niveau de consigne de température le plus bas du domaine de variation des températures de la bande proportionnelle du régulateur à action proportionnelle, ladite définition de ces points à la fin de la seule ou de la dernière période à tarif réduit bénéficiant du plus bas prix de l'énergie et à la fin du cycle tarifaire pouvant être corrigée en plus ou en moins d'une période de temps prédéterminée sur le régulateur en fonction des caractéristiques techniques des dispositifs à accumulation, ladite charge étant réalisée uniquement tant que la température ambiante régresse et si elle stagne ou progresse, tant que la variation de la température ambiante, définie par le régulateur lors du cycle de mesures des variations de température, est inférieure ou égale à un seuil de variation de la température préfixé sur le régulateur, ledit seuil étant de préférence égal à zéro.

**9.** Procédé selon l'une quelconque des revendications 1 à 8, **caractérisé en ce qu'**il consiste, lorsque la température ambiante mesurée est inférieure ou égale à la valeur de la température ambiante de consigne, à réaliser la charge du ou des dispositifs à accumulation en période à tarif réduit, aussi longtemps que la valeur de la température ambiante mesurée est égale ou inférieure à la valeur du seuil de température préfixé sur le régulateur en fonction des caractéristiques techniques des dispositifs à accumulation, ledit seuil de température, particulier à chaque période à tarif réduit du cycle de distribution bénéficiant d'un niveau de prix spécifique de l'énergie, étant placé de préférence dans la limite des variations de la température fixées par la bande proportionnelle de l'organe de régulation de l'émission de chaleur à action proportionnelle, ladite charge étant réalisée uniquement tant que la température ambiante régresse et si elle stagne ou progresse tant que la valeur de la progression de la température ambiante définie par le régulateur lors du cycle de mesures des variations de la température, est inférieure ou égale au seuil de variation de température préfixé sur le régulateur.

**10.** Procédé selon l'une quelconque des revendications 1 à 9, **caractérisé en ce qu'**il consiste, à réaliser la charge durant la ou les période(s) à tarif réduit, aussi longtemps que la valeur de la température ambiante est inférieure à un seuil minimal de température prédéterminé sur le régulateur en fonction des caractéristiques techniques des dispositifs de chauffage à accumulation considérées dans la définition de la température extérieure de dimensionnement.

**11.** Procédé selon l'une quelconque des revendications 1 à 10, **caractérisé en ce qu'**il consiste, dès que la température ambiante mesurée est supérieure à la température de consigne de l'organe de régulation de cette température ambiante et lorsque le cycle tarifaire comporte une période ou plusieurs périodes à tarif réduit, à mémoriser la température ambiante stabilisée mesurée après chaque cycle de verrouillage de la charge ou après chaque début de période à tarif réduit ne comportant pas une période de verrouillage, puis à enclencher la charge durant la période à tarif réduit en cours aussi longtemps que la température ambiante mesurée reste inférieure ou égale à cette température mémorisée.

**12.** Procédé selon l'une quelconque des revendications 1 à 11, **caractérisé en ce qu'**il consiste à verrouiller la charge des dispositifs à accumulation définie individuellement par les procédés de charge et l'émission de chaleur des dispositifs de chauffage, aussi longtemps que la valeur de l'écart défini entre la température ambiante mesurée et le seuil minimal de température prédéterminé sur le régulateur en fonction des caractéristiques techniques des dispositifs à accumulation est supérieure a un seuil spécifique prédéterminé sur le régulateur pour chacun des procédés de charge.

**13.** Procédé selon la revendication 1 à 12, **caractérisé en ce qu'**il consiste, lorsque la température ambiante est supérieure à la température de consigne de l'organe de régulation de la température ambiante, en particulier lorsque des dispositifs à accumulation fortement isolés sont utilisés, à réaliser la charge du ou des dispositifs à accumulation, en période à tarif réduit, aussi longtemps que la température ambiante ne progresse pas durant le cycle de mesures des variations de la température défini par le régulateur à des intervalles réguliers d'une durée déterminée.

**14.** Procédé selon l'une quelconque des revendications 1 à 13 **caractérisé en ce qu'**il consiste, lorsqu'un dispositif de chauffage quelconque à production de chaleur centralisée ou décentralisée dans le local à chauffer est utilisé et lorsque la température de consigne de l'organe de régulation de la température ambiante est réduite en dessous de la valeur de la température ambiante, à couper l'émission de chaleur des émetteurs du dispositif de chauffage durant un temps préfixé sur le régulateur en fonction de la constante de temps définie par la charge d'une capacité thermique moyenne d'un local de référence, ledit temps préfixé étant de préférence corrigé par un coefficient proportionnel au quotient de la consommation d'énergie maximale du cycle journalier correspondant aux conditions climatiques les plus rigoureuses de la zone climatique par les consommations totales d'énergie du cycle journalier précédent, la dite température ambiante obtenue à la fin de la période de coupure étant définie par le régulateur en tant que nouvelle température ambiante consigne pour piloter l'émission de chaleur des émetteurs en régime réduit, la dite émission de chaleur, pour réguler la température ambiante à cette nouvelle valeur de consigne, étant rétablie après la période de coupure, puis de préférence coupée à nouveau systématiquement dès que la température ambiante progresse et rétablie à nouveau systématiquement dès que la température ambiante régresse, les dits enclenchements et coupures des dispositifs de chauffage étant réalisés jusqu'à la prochaine modification manuelle ou automatique de la température de consigne, ou jusqu'à la fin d'une période de temps prédéterminée ne comportant aucune modification de cette consigne, à la fin de laquelle cette nouvelle température de consigne définie par le régulateur est de préférence remplacée par la température de consigne minimale en régime réduit affichée sur le régulateur.

15. Procédé selon l'une quelconque des revendications 1 à 14, **caractérisé en ce qu'**il consiste, lorsqu'un dispositif de chauffage quelconque à production de chaleur centralisée ou décentralisée dans le local à chauffer est utilisé et lorsque la température de consigne de l'organe de régulation de la température ambiante est réduite en dessous de la valeur de la température ambiante, à couper l'émission de chaleur des émetteurs du dispositif de chauffage aussi longtemps que le quotient de la valeur de la variation de la température ambiante lors d'un cycle de mesures des variations de la température ambiante par la valeur de la variation de la température ambiante lors du cycle de mesures suivant est égal ou supérieur à la valeur du seuil préfixée sur le régulateur, ou en variante à couper cette émission de chaleur aussi longtemps que la variation de température durant les cycles successifs de mesures des variations de la température reste supérieure à un seuil de variation préfixé sur le régulateur de préférence en fonction des caractéristiques thermiques du bâtiment, la dite température ambiante mesurée à la fin de la période de coupure étant définie par le régulateur en tant que nouvelle consigne de température ambiante pour piloter l'émission de chaleur des émetteurs en régime réduit, la dite émission de chaleur, pour réguler la température à cette nouvelle valeur de consigne, étant rétablie après la période de coupure, puis de préférence coupée à nouveau systématiquement dès que la température ambiante progresse et rétablie à nouveau systématiquement dès que la température ambiante régresse, les dits enclenchements et coupures étant réalisés jusqu'à la prochaine modification manuelle ou automatique de la température de consigne, ou jusqu'à la fin d'une période de temps prédéterminée ne comportant aucune modification de cette consigne à la fin de laquelle cette nouvelle température de consigne définie par le régulateur est de préférence remplacée par la température de consigne minimale en régime réduit affichée sur le régulateur.

16. Procédé selon la revendication 1 à 15, **caractérisé en ce qu'**il consiste, de préférence lorsque le régime hors gel ou un régime spécifique est activé, à enclencher la charge du dispositif à accumulation durant la ou les périodes à tarif réduit aussi longtemps que la température ambiante est inférieure à la température de consigne de l'organe de régulation de la température du régime hors gel ou spécifique majorée d'une valeur préfixée sur le régulateur, la dite charge étant coupée lorsque la température ambiante atteint ou dépasse cette consigne majorée, ledit régime hors gel verrouillant tous les autres procédés de charge.

17. Dispositif pour la mise en oeuvre du procédé de régulation de charge d'au moins un dispositif de chauffage électrique à accumulation, tel qu'un radiateur à accumulation, un plancher chauffant ou analogue, et de la charge optimale de la capacité thermique des éléments de construction et d'équipement du local ou d'un groupe de locaux à chauffer quelque soit le mode de chauffage selon l'une quelconque des revendications 1 à 16, **caractérisé en ce qu'**il est constitué par un organe (7) de sélection du mode de fonctionnement, de gestion des signaux tarifaires et de synchronisation de l'horloge du régulateur par rapport au cycle tarifaire de réseau de distribution électrique, pilotant, d'une part les circuits (50) de commande conditionnelle de la charge du ou des dispositifs à accumulation et de l'émission de chaleur des autres dispositifs de chauffage, lesdits circuits recevant les informations de l'organe de mesure de la température ambiante (1) et de l'organe de réglage de la température ambiante de consigne (2), les circuits complémentaires (52) de commande conditionnelle de la charge recevant les informations de l'organe (5) mesurant la chaleur contenue dans le noyau, d'autre part les circuits (51) de verrouillage conditionnel de la charge ou de la restitution de la chaleur des dispositifs de chauffage recevant les informations de l'organe (4) mesurant le temps de mise sous tension des résistances de charge ou de l'organe (31) mesurant le temps d'enclenchement des dispositifs d'émission de chaleur des dispositifs de chauffage, lesdits circuits (51) définissant par la mesure du temps les consommations d'énergie durant le cycle tarifaire ou journalier et l'ensemble des circuits de commande conditionnelle (50), des circuits de verrouillage (51) et des circuits complémentaires de commande conditionnelle (52) pilotant d'une part au moyen d'un circuit de sélection et de commande (14), l'interrupteur (15) permettant l'alimentation conditionnelle des résistances de charge (16) du noyau accumulateur des dispositifs de chauffage électrique à accumulation, la dite alimentation étant enclenchée au début de chaque période à tarif réduit selon les informations reçues par l'organe de gestion des signaux tarifaires (7) et après chaque période de verrouillage de la charge définie par le circuit de verrouillage (51) pilotant également le circuit de sélection et de commande (14), ladite alimentation étant systématiquement coupée lorsque la valeur de la progression de la température mesurée par l'organe de mesure de la température ambiante (1) et le circuit de protection d'amplification et de traitement des informations (6), calculée par le circuit de calcul de comparaison et de mémorisation (12) dans l'intervalle fixé par la base de temps (11) puis mémorisée et comparée dans le circuit (12), est supérieure à un seuil de variation de température mémorisé par l'organe (9) assurant l'affichage, la sélection et la mémorisation des différents seuils de fonctionnement et étant à nouveau systématiquement enclenchée lorsque la valeur de la régression de la température mesurée par l'organe de mesure (1) et le circuit de protection d'amplification et de traitement des informations (6), calculée par le circuit (12) dans l'intervalle fixé par la base de temps (11) puis mémorisée et comparée dans le circuit (12), est inférieure au seuil de variation mémorisé par l'organe de sélection et de mémorisation (9), et d'autre part au moyen de l'organe de régulation (30), l'alimentation conditionnelle des dispositifs d'émission de chaleur reliés aux dispositifs de chauffage.

18. Dispositif de régulation selon la revendication 17, **caractérisé en ce que** les circuits (50) de commande conditionnelle de la charge et de l'émission de la chaleur du ou des dispositifs à accumulation, comportant le circuit de calcul de comparaison et de mémorisation (12) relié d'une part, à l'organe (1) mesurant la température ambiante et à l'organe (2) permettant le réglage de la température ambiante de consigne par l'intermédiaire du circuit de protection d'amplification et de traitement des informations (6) et d'autre part, à l'organe (9) assurant l'affichage, la sélection et la mémorisation des différents seuils de fonctionnement et recevant les informations du régulateur à action proportionnelle (30) ainsi que de l'organe de gestion des signaux tarifaires (7), réalisent, par le circuit électronique de sélection et de commande (14) et par l'interrupteur (15), l'alimentation des résistances de charge (16) du noyau accumulateur, aussi longtemps que la valeur de la température ambiante mesurée par l'organe de mesure (1) et le circuit de traitement des informations (6), comparée dans le circuit de calcul de comparaison et de mémorisation (12), est inférieure ou égale à la valeur du seuil de température prédéterminé sur l'organe de sélection et de mémorisation (9) à l'intérieur du domaine de variation de la bande proportionnelle communiqué à l'organe (9) par le régulateur à action proportionnelle (30), le dit seuil étant sélectionné par le signal tarifaire correspondant au niveau de prix de l'énergie de la période à tarif réduit en cours appliqué à l'organe de gestion des signaux tarifaires (7) qui asservit l'organe de sélection et de mémorisation (9) la dite charge étant coupée lorsque la valeur de la température ambiante, mesurée par l'organe de mesure de la température ambiante (1) et le circuit de traitement de l'information (6) dépasse la valeur du seuil sélectionné, ou lorsque la progression de la température ambiante définie par le circuit de calcul, de comparaison et de mémorisation (12) pendant l'intervalle fixé par la base de temps (11) et comparée dans ce circuit (12) est supérieure à un seuil de variation de la température mémorisé par l'organe d'affichage, de sélection et de mémorisation des différents seuils de fonctionnement (9) et sélectionné aussi par le signal tarifaire appliqué à l'organe de gestion des signaux tarifaires (7).

19. Dispositif de régulation selon l'une quelconque les revendications 17 et 18, **caractérisé en ce que** les circuits (50) de commande conditionnelle de la charge du ou des dispositifs à accumulation, réalisent, par le circuit de calcul de comparaison et de mémorisation (12), le circuit électronique de sélection et de commande (14), l'interrupteur (15), l'alimentation des résistances de charge (16) du noyau accumulateur durant les périodes de charge autorisées par l'organe de gestion des signaux tarifaires (7) en fonction des signaux tarifaires aussi longtemps que la valeur de la température ambiante mesurée par l'organe de mesure (1) et le circuit de traitement des informations (6), comparée dans le circuit de comparaison (12), est inférieure ou égale à la valeur du seuil de température préfixée sur le régulateur et affichée sur l'organe (9), ladite valeur du seuil étant fonction des caractéristiques techniques des dispositifs de chauffage à accumulation utilisés, la dite charge étant coupée lorsque la valeur de la température ambiante, mesuré par l'organe (1) et le circuit de mesures et de traitement des informations (6), dépasse la valeur du seuil.

20. Dispositif de régulation selon l'une quelconque des revendications 17 à 19, **caractérisé en ce que** les circuits (50) de commande conditionnelle de la charge du ou des dispositifs à accumulation, réalisent, par le circuit de calcul de comparaison et de mémorisation (12), le circuit électronique de sélection (14), l'interrupteur (15), l'alimentation des résistances de charge (16) du noyau accumulateur, lorsque la température ambiante mesurée par l'organe de mesure de la température ambiante (1) et le circuit d'amplification et de traitement des informations (6), comparée dans le circuit de calcul, de comparaison et de mémorisation (12), est supérieure à la température de consigne régulant cette température ambiante affichée sur l'organe de réglage de la température ambiante de consigne (2) et lorsque la valeur de la régression de la température ambiante, calculée par le circuit (12) dans l'intervalle fixé par la base de temps (11) puis mémorisée et comparée dans le circuit (12), est supérieure ou égale a la valeur du seuil de régression de température préfixé sur l'organe d'affichage, de sélection et de mémorisation des différents seuils de fonctionnement (9) ou en variante, lorsque la valeur de la progression de cette température est inférieure ou égale au seuil de progression préfixée, le dit seuil de régression ou de progression étant sélectionné par le signal tarifaire correspondant au niveau de prix de l'énergie de la période à tarif réduit en cours appliqué à l'organe de gestion des signaux tarifaires (7), ladite charge étant coupée lorsque la valeur de la régression de la température ambiante, calculée par le circuit (12) dans l'intervalle fixé par la base de temps (11) devient inférieure à la valeur de ce seuil de régression ou en variante lorsque la valeur de la progression devient supérieure à la valeur du seuil de progression.

21. Dispositif de régulation selon l'une quelconque les revendications 17 à 20, **caractérisé en ce que** les circuits (51) de verrouillage conditionnel de la charge du ou des dispositifs à accumulation, comportant le circuit de calcul de comparaison et de mémorisation (13) asservi à l'organe de gestion des signaux tarifaires (7) et relié d'une part à l'organe (4) mesurant le temps de mise sous tension des résistances de charge par l'intermédiaire du circuit de protection, d'amplification et de traitement des informations (8) et d'autre part à l'organe (10) assurant l'affichage, la sélection, la mémorisation des différents seuils de fonctionnement, réalisent le verrouillage de l'alimentation des résistances de charge (16) du noyau accumulateur par le circuit de sélection et de commande (14) et l'interrupteur (15) durant un temps calculé par le circuit de calcul (13) conformément à la relation suivante: durée maximale de la ou des période(s) à tarif réduit du cycle tarifaire du réseau de distribution bénéficiant du prix de l'énergie le plus bas déterminée par l'organe de gestion des signaux tarifaires (7) diminuée de la valeur obtenue en multipliant la durée totale de la mise sous tension des résistances de charge des dispositifs à accumulation mesurée durant le cycle tarifaire précédent par l'organe de mesure du temps de mise sous tension des résistances de charge (4) et le circuit de traitement des informations (8) par un coefficient ajustable et réglable mémorisé par l'organe d'affichage, de sélection, de mémorisation des différents seuils de fonctionnement (10), ledit verrouillage, ainsi défini durant le temps calculé et mémorisé par le circuit de comparaison et de mémorisation (13), étant désactivé temporairement par le circuit (14) d'une part aussi longtemps que la température ambiante mesurée par l'organe (1) et le circuit d'amplification et de traitement des informations (6), comparée dans le circuit de comparaison (12) devient et reste inférieure à la valeur du seuil de température préfixé sur l'organe de sélection et de mémorisation (9) par rapport à la température de consigne affichée sur l'organe de réglage de la température ambiante de consigne (2), ledit seuil de température étant de préférence défini à l'intérieur des limites des variations des températures fixées par la bande proportionnelle du régulateur à action proportionnelle (30), et d'autre part si la régression de la température ambiante calculée par le circuit (12) dans l'intervalle fixé par la base de temps (11) puis mémorisée et comparée dans le circuit (12), devient supérieure ou égale au seuil de régression préfixé sur l'organe (9), le dit verrouillage étant ainsi réalisé de manière continue ou discontinue jusqu'à épuisement de la durée de la période de verrouillage mémorisée par le circuit de comparaison et de mémorisation (13).

22. Dispositif de régulation selon l'une quelconque des revendications 17 à 21, **caractérisé en ce que** les circuits de verrouillage (51) réalisent durant la période à tarif réduit du cycle en cours le verrouillage de l'alimentation des résistances de charge (16) par le circuit de sélection et de commande (14) et l'interrupteur (15), lorsque la durée de la mise sous tension des résistances de charge lors de la période à tarif réduit précédente du même cycle tarifaire mesurée par l'organe de mesure du temps de charge (4) et le circuit de traitement des informations (8), mémorisée et comparée dans le circuit de calcul, de comparaison et de mémorisation (13) est inférieure au seuil calculé proportionnellement à la durée totale de la période à tarif réduit précédente du même cycle tarifaire par le circuit (13) asservi à l'organe de sélection et de gestion des signaux tarifaires (7), le pourcentage définissant cette proportionnalité étant préfixé sur l'organe de mémorisation des différents seuils de fonctionnement (10), le dit verrouillage durant la période à tarif réduit en cours étant supprimé par le circuit de sélection et de commande du dispositif (14) lorsque la température mesurée par l'organe de mesure de la température ambiante (1) et comparée par le dispositif (12) chute en dessous d'un seuil minimal préfixé sur l'organe de sélection et de mémorisation (9) conformément aux caractéristiques techniques des accumulateurs ou à un deuxième seuil préfixé sur l'organe (9), à l'intérieur des limites des variations des températures fixées par la bande proportionnelle du régulateur à action proportionnelle (30) conformément à la température de consigne affiché à l'organe de réglage de la température ambiante de consigne (2), et d'autre part aussi longtemps que le circuit de calcul et de comparaison (12) détecte une régression de la température ambiante dans la période définie par la base de temps (11) supérieure ou égale au seuil de régression prédéterminé sur l'organe de sélection de mémorisation et d'affichage (9) sélectionné par l'organe de sélection et de gestion des signaux tarifaires (7), en variante ledit verrouillage de la charge peut être limité à une fraction de la durée de la période en cours.

23. Dispositif de régulation selon l'une quelconque des revendications 17 à 22, **caractérisé en ce que** les circuits (50) de commande conditionnelle de la charge du ou des dispositifs à accumulation de préférence très fortement isolés et ainsi sélectionnés par l'organe de sélection et de gestion des signaux tarifaires (7), réalisent durant les périodes à tarif réduit, par le circuit de calcul de comparaison et de mémorisation (12), le circuit électronique de sélection et de commande (14), l'interrupteur (15), l'alimentation des résistances de charge (16), lorsque la régression de la température ambiante, calculée par le circuit de calcul, de comparaison et de mémorisation (12) dans l'intervalle de la base de temps (11) suivant les informations mesurée par l'organe de mesure de la température ambiante (1) et le circuit d'amplification et de traitement des informations (6) puis comparée dans le circuit de calcul, de comparaison et de mémorisation (12), est inférieure ou égale à la valeur zéro correspondant au seuil sélectionné sur l'organe de sélection et de mémorisation (9) par un ordre spécifique de l'organe (7), la dite charge étant coupée lorsque la valeur de la progression de la température ambiante, définie par le circuit de calcul, de comparaison et de mémorisation (12) dans l'intervalle de la base de temps (11) suivant les informations mesurée par l'organe de mesure de la température ambiante (1) et le circuit d'amplification et de traitement des informations (6) puis comparée dans le circuit (12), devient supérieur à zéro.

24. Dispositif de régulation selon l'une quelconque des revendications 17 à 23, **caractérisé en ce que** les circuits (50) de commande conditionnelle de l'émission de chaleur d'un dispositif quelconque de chauffage, verrouillent, par le circuit de calcul de comparaison et de mémorisation (12) le circuit électronique de sélection (14) et l'organe de régulation (30), la restitution de la chaleur des dispositifs d'émission de chaleur (32) du ou des dispositifs de chauffage, lorsque le mode de fonctionnement correspondant est sélectionné sur l'organe de sélection et de gestion des signaux tarifaires (7) dès que la consigne affichée sur l'organe de réglage de la température ambiante de consigne (2) est réduite en dessous de la valeur de la température ambiante, mesurée par l'organe (1) et le circuit d'amplification et de traitement des informations (6) comparée dans le circuit de comparaison (12), ledit verrouillage étant maintenu par les circuits de calcul de comparaison et de mémorisation (13) et de sélection et de commande (14) durant le temps préfixé sur l'organe d'affichage de mémorisation des différents seuils de fonctionnement (10) sélectionné par l'organe de sélection et de gestion des signaux tarifaires (7), ledit temps étant multiplié par un coefficient proportionnel au quotient de la durée maximale d'alimentation des émetteurs préfixée sur l'organe (10) pour le cycle journalier correspondant aux conditions climatiques les plus rigoureuses du site par la valeur des consommations totales d'énergie du cycle précédent définie par le circuit de comparaison et de mémorisation (13), la température ambiante relevée à la fin de la période de verrouillage par l'organe (1) et le circuit (6) étant mémorisée dans le circuits de calcul, de comparaison et de mémorisation (12) et définie par le régulateur comme nouvelle consigne de température ambiante, ladite température de consigne étant remplacée par la température de consigne minimale affichée sur l'organe de sélection et de mémorisation (9) après un temps spécifique défini par le régulateur en fonction de la constante de temps définie par la capacité thermique du local ou lors d'une modification de la consigne affichée par l'utilisateur.

25. Dispositif de régulation selon l'une quelconque des revendications 17 à 24, **caractérisé en ce que** les circuits (50) de commande conditionnelle de l'émission de chaleur d'un dispositif quelconque de chauffage, verrouillent par l'organe de sélection et de gestion des signaux tarifaires (7), la restitution de la chaleur des dispositifs de chauffage dès que la consigne affichée sur l'organe de réglage de la température ambiante de consigne (2) est réduite en dessous de la valeur de la température ambiante, mesurée par l'organe (1) et le circuit d'amplification et de traitement des informations (6) comparée dans le circuit de comparaison (12), aussi longtemps que le quotient de la valeur de la régression de la température calculée par le circuit de calcul de comparaison et de mémorisation (12) dans l'intervalle de la base de temps (11) durant un cycle donné par la valeur de la régression de la température calculé par le circuit (12) dans l'intervalle de la base de temps (11) pour le cycle suivant est supérieure à un seuil prédéterminé dans l'organe de sélection et de mémorisation (9), la température ambiante relevée à la fin de la période de verrouillage par l'organe de mesure de la température ambiante (1) et le circuit (6) étant mémorisée dans le circuit (12) et définie par le régulateur comme nouvelle température ambiante de consigne, ladite température de consigne étant remplacée par la température de consigne minimale affichée sur l'organe d'affichage, de sélection et de mémorisation des différents seuils de fonctionnement (9) après un temps spécifique défini par le régulateur en fonction de la constante de temps définie par la capacité thermique du local, ou lors d'une modification de la consigne affichée par l'utilisateur.

26. Dispositif de régulation selon l'une quelconque des revendications 17 à 25, **caractérisé en ce que**, durant le régime hors gel ou un régime spécial activé par l'organe (3) asservissant par l'organe de gestion des signaux tarifaires (7) les circuits et les organe d'affichage, de sélection et de mémorisation des différents seuils de fonctionnement (9), de calcul, de comparaison et de mémorisation (12), et de sélection et de commande (14), les circuits (50) de commande conditionnelle de la charge des dispositifs à accumulation ou de commande du dispositif d'émission de chaleur d'un dispositif quelconque de chauffage, réalisent, par le circuit de calcul et de comparaison (12) le circuit électronique de sélection et de commande (14) et l'interrupteur (15) l'alimentation des résistances de charge (16) durant les périodes à tarif réduit ou la commande de l'organe de régulation de l'émission de chaleur des autres dispositifs de chauffage, aussi longtemps que la température ambiante mesurée par l'organe de mesure de la température ambiante (1) et le circuit d'amplification et de traitement des informations (6), comparée dans le dispositif de comparaison (12), est inférieure ou égale à la valeur de la consigne de température hors gel ou celle du régime spécial majorée d'une valeur préétablie et préfixée sur le l'organe de sélection et de mémorisation (9), la dite consigne de température non majorée pilotant les dispositifs de restitution de la chaleur (32) des dispositifs de chauffage par l'organe de régulation (30), ledit organe de commande hors gel (3) verrouillant, durant la période hors gel, l'application de tous les autres procédés de charge revendiqués, la dite alimentation des résistances de charge étant coupée lorsque la température ambiante atteint ou dépasse la valeur de la consigne majorée.

27. Dispositif de régulation selon l'une quelconque des revendications 17 à 26, **caractérisé en ce que**, les circuits (52) de commande conditionnelle de la charge du ou des dispositifs à accumulation réalisent durant les périodes autorisées de charge, par le circuit de calcul, de comparaison et de mémorisation (18), le circuit électronique de sélection (14), l'interrupteur (15), l'alimentation des résistances de charge (16), aussi longtemps que la valeur de la température du noyau accumulateur des dispositifs de chauffage, représentative de la charge énergétique contenue dans ce noyau accumulateur, mesurée par l'organe (5) de mesure de cette température relié au circuit de protection d'amplification et de traitement des informations (17), est inférieure, de préférence d'une valeur préfixée ou égale à la valeur de la consigne définie par la fonction F(t)=- a.t+b mémorisée par ce circuit (18) définissant un segment de droite qui a pour ordonnée à l'origine le point représentatif (b) situé à l'instant correspondant à la fin de la seule ou de la dernière période à tarif réduit bénéficiant du plus bas prix de l'énergie défini par l'organe de gestion des signaux tarifaires (7), le dit point représentatif (b), ayant pour valeur à cet instant la température du noyau accumulateur mesurée par l'organe de mesure de la température du noyau accumulateur (5) du circuit de protection, d'amplification et de traitement des informations (17), étant relié pour former le segment de droite à un deuxième point défini à la fin du cycle tarifaire par l'organe (7) et ayant pour valeur à cet instant le seuil de température du noyau prédéterminé sur l'organe de sélection et de mémorisation (10), modulable et réglable, correspondant à la température de dimensionnement des dispositifs à accumulation, la valeur dudit deuxième point, définissant également le coefficient directeur (a) de la droite, étant de préférence modulée par le circuit de calcul, de comparaison et de mémorisation (18) en augmentation ou en diminution en fonction de la durée de la charge lors de la ou des périodes à tarif réduit de ce cycle tarifaire par rapport à la durée totale de cette ou ces période(s) ladite alimentation des résistances de charge (16) n'étant de préférence réalisée que lorsque les températures ambiantes mesurées par le circuit (12) régressent ou si elles stagnent ou progressent que lorsque la valeur de la variation définie dans l'intervalle de la base de temps (11) est inférieure ou égale au seuil préfixé sur l'organe de sélection et de mémorisation (9), ladite valeur de ce seuil peut être égale à zéro.

28. Dispositif de régulation selon l'une quelconque des revendications 17 à 27, **caractérisé en ce que**, les circuits (50) de commande conditionnelle de la charge du ou des dispositifs à accumulation, réalisent durant les périodes autorisées de charge, par le circuit électronique de sélection et de commande (14) et par l'interrupteur (15) l'alimentation des résistances de charge (16), aussi longtemps que la valeur de la température ambiante mesurée par l'organe de mesure (1) et le circuit d'amplification et de traitement des informations (6), comparée dans le circuit de comparaison (12), est inférieure, de préférence d'une valeur préfixée, ou égale à la valeur de la consigne définie par la fonction F(t) = -a.t + b, mémorisée par le circuit (12) définissant au cours du cycle tarifaire un segment de droite confondue ayant pour ordonnée à l'origine le point représentatif (b) situé à l'instant correspondant à la fin de la période à tarif réduit bénéficiant du plus bas prix de l'énergie défini par l'organe de sélection et de gestion des signaux tarifaires (7) et ayant pour valeur à cet instant le niveau de température de consigne le plus élevé du domaine de variation des températures de la bande proportionnelle de l'organe de régulation à action proportionnelle (30), ledit point représentatif étant relié, pour former la droite, à un deuxième point défini à la fin du cycle tarifaire défini par le circuit (7) et ayant pour valeur à cet instant le niveau de température de consigne le plus bas du domaine de variation des températures de la bande proportionnelle de l'organe de régulation à action proportionnelle (30), la dite définition dans le temps à la fin du cycle tarifaire pouvant être corrigée en plus ou en moins d'une période de temps prédéterminée sur l'organe de sélection et de mémorisation (9) en fonction des caractéristiques techniques des dispositifs à accumulation, la dite alimentation des résistances de charge (16) n'étant de préférence réalisée que lorsque la températures ambiantes mesurées par le circuit (12) régressent ou si elles stagnent ou progressent que lorsque la valeur de la variation dans l'intervalle de la base de temps (11) est inférieure ou égale au seuil sur l'organe (9), ledit seuil pouvant être égal à zéro.

29. Dispositif de régulation selon l'une quelconque des revendications 17 à 28, **caractérisé en ce que**, lorsque la température ambiante mesurée par l'organe de mesure (1) et le circuit d'amplification et de traitement des informations (6), comparée dans le circuit de comparaison (12) est supérieure à la valeur de la température de consigne de l'organe de réglage de la température ambiante de consigne (2), la mise en service de l'un quelconque des différents procédés de charge ne peut être de préférence autorisée que lorsque l'écart positif de température définie dans le circuit de calcul de comparaison et de mémorisation (12), en réalisant la différence entre la température ambiante mesurée par l'organe de mesure de la température ambiante (1) du circuit d'amplification et de traitement des informations (6) et le seuil minimal de température affiché sur l'organe de sélection et de mémorisation (9) en fonction des caractéristiques techniques des dispositifs de chauffage à accumulation, est inférieur ou égal à la valeur du seuil spécifique prédéterminé aussi sur l'organe d'affichage, de sélection et de mémorisation des différents seuils de fonctionnement (9) et affecté à chaque procédé de charge, le dit seuil pouvant être modulé en fonction du temps de fonctionnement des dispositifs d'émission de chaleur défini par l'organe (30) et mémorisé par l'organe (9).

## Claims

1. A method for controlling the load of at least one Thermal storage electrical heating device such as an Thermal storage heater, a heating floor or the like, and the optimal load of the heat capacity of construction components and equipment of the premise or of a group of premises to be heated regardless of the heating method, said method providing indifferent control of both loads simultaneously or of the latter exclusively, **characterized in that**, for a given premise to be heated or a group of premises, it essentially consists of controlling the load or the loading operation of Thermal storage electrical device(s) during the authorized preferably reduced rate period(s) of a rate cycle of the electricity mains including one or more power price levels and loading the heat capacity of the construction components and equipment of the premise(s) according to a specific load set point defined by the regulator, said set point being obtained by comparing the value of the room temperature variations, defined by the regulator at recurrent intervals of a determinate time, defining a cycle of temperature variation measurements, at a temperature variation threshold predetermined by the regulator.

2. The method according to claim 1, **characterized in that**, when the rate cycle includes several reduced rate periods preferably having a power price level specific for each period or group of periods, it consists of locking the load of Thermal storage devices during the whole reduced rate period during the rate cycle of the electricity mains, or during a preset fraction of this period, preferably modulated according to the consumptions of the previous cycle, as long as the load duration of the Thermal storage devices, during the previous reduced rate period of the same rate cycle, but benefiting from a lower power price, has not reached the total duration of this previous period or a preset fraction thereof, the locking of said load being preferably suppressed on the one hand when the room temperature is less than or equal to the preset threshold on the regulator according to the technical characteristics of the Thermal storage devices, or to that set within the variation range of the proportional band controlling the heat emission devices, on the other hand when the regression of the room temperature during the cycle of temperature variation measurements becomes larger than or equal to the regression threshold of the temperature preset on the regulator for the current period.

3. The method according to any of claims 1 and 2, **characterized in that**, when the load duration of the Thermal storage devices during a current reduced rate period occurs during the total duration of this period or is close to this value, it consists of replacing the temperature variation threshold assigned by the regulator at the next reduced rate period of the same rate cycle with that of the current period and when said load duration is only a fraction of the total duration of the period, of replacing the threshold assigned by the regulator at the next period of the same rate cycle with a new temperature variation threshold obtained by modulating the gap between the temperature variation thresholds of both reduced rate periods preferably proportionally to the power up time of the heat emission devices during the time separating both of these periods.

4. The method according to any of claims 1 to 3, **characterized in that**, during the reduced rate period of the rate cycle benefiting from the lowest power price, it consists of locking the load of the heating device(s) during a time calculated by the regulator according to the following relationship: maximum duration of the reduced rate period(s) of the rate cycle benefiting from the lowest power price, reduced by the value obtained by multiplying the total load duration of the Thermal storage devices during the previous rate cycle of the electricity mains by an adjustable preset safety coefficient, said locking being suppressed when the result of this subtraction is zero or negative and the duration of said locking being preferably limited to a time predetermined by the regulator and corresponding to a fraction of the total duration of the reduced rate period(s) benefiting from the lowest power price, said load being temporarily re-established even during the locking period, on the one hand when the room temperature is less than or equal to the preset threshold on the regulator according to the technical characteristics of the Thermal storage devices or to the set threshold in the variation range of the proportional band controlling the heat emission devices, on the other hand when the regression of the room temperature during the cycle of temperature variation measurements becomes larger than or equal to the minimum regression threshold preset on the regulator for the current reduced rate period.

**5.** The method according to any of claims 1 to 4, **characterized in that**, when the rate cycle includes one or several reduced rate periods with a power price level specific to each period or group of periods, it consists of performing the load of the Thermal storage device(s) as long as the temperature measured by the probe of the accumulator core of the heating device is less than or equal to the set point defined during the rate cycle, by the line segment coincident or parallel with the line segment, the original representative point of which is located at the end of the sole or last reduced rate period benefiting from the lowest power price and at that instant, has the value of the temperature of said accumulator core as measured by the probe of this core at the same instant, said temperature being preferably reduced by a predetermined set value or percentage on the regulator, said representative point being connected, so as to form the line segment, to a second representative point defined at the end of the current rate cycle and at the instant of the end of the rate cycle, having the value of the temperature threshold of the core preferably corresponding to the minimum heat power emitted by the Thermal storage device(s) at the outside design temperature corresponding to the reduced rate period(s) benefiting from the lowest power price, said temperature threshold of the core being corrected by a lesser amount when the load duration during this(these) period(s) is less than their total duration and corrected by a greater amount when it is equal, said correction being performed with a value proportional to the ratio of the total load duration of the previous rate cycle by the total duration of the period (s) during which loading is authorized, said loading being preferably performed as long as room temperature regresses and if it stagnates or progresses, as long as the room temperature variation, as defined by the regulator during the cycle of temperature variation measurements, is less than or equal to a preset temperature variation threshold on the regulator, said threshold preferably being equal to zero.

**6.** The method according to any of claims 1 to 5, **characterized in that**, when the rate cycle includes one or several reduced rate periods with a unique price or a price specific to each period or group of periods, when the room temperature is greater than the set point temperature of the unit for controlling this room temperature, it consists of performing the load of the Thermal storage devices during the reduced rate period(s) as long as the value of the room temperature variation is larger than or equal to the regression threshold or as long as it is less than or equal to the progression threshold, said regression or progression threshold being preset on the regulator according to the technical characteristics of the accumulators and to the power price level of each reduced rate period.

**7.** The method according to any of claims 1 to 6, **characterized in that**, when the measured room temperature is larger than the set point temperature of unit controlling this room temperature and when the rate cycle includes one or several reduced rate periods, it consists of systematically turning on the load at the end of each load locking period and at the beginning of each reduced rate period not including a locking time, of then systematically cutting off this load when the room temperature progresses during the cycle for measuring temperature variations and again systematically turning on this load as soon as the room temperature regresses during the cycle of temperature variation measurements, said turning on and cutting off operations being performed up to the end of the current reduced rate period or up to the next change of the set point room temperature which will again make it larger than the measured room temperature.

**8.** The method according to any of claims 1 to 7, **characterized in that**, when the rate cycle includes one or several reduced rate periods with a unique power price level or specific to each period or group of periods, it consists of performing the load of the Thermal storage device(s), as long as the room temperature is less than or equal to the set point defined during the rate cycle by the line segment coincident or parallel to the line segment, the representative point of which at the origin, located at the end of the sole or last reduced rate period benefiting from the lowest power price, at this instant, has the value of the highest set point temperature level of the variation range of the temperatures of the proportional band of the proportional action regulator, said representative point being connected, so as to form the line segment, to a second representative point defined at the end of the current rate cycle, and at this instant of the end of the rate cycle, having the value of the lowest temperature set point level of the variation range of the temperatures of the proportional band of the proportional action regulator, said definition of these points at the end of the sole or last reduced rate period benefiting from the lowest power price and at the end of the rate cycle, being able to be corrected by a lesser or greater amount, by a predetermined time period on the regulator according to the technical characteristics of the Thermal storage devices, said load being uniquely performed as long as the room temperature regresses and if it stagnates or progresses, as long as the room temperature variation, defined by the regulator during the cycle of temperature variation measurements, is less than or equal to a temperature variation threshold preset on the regulator, said threshold preferably being equal to zero.

9. The method according to any of claims 1 to 8, **characterized in that**, when the measured room temperature is less than or equal to the value of the set point room temperature, it consists of performing the load of the Thermal storage device(s) during a reduced rate period, as long as the measured room temperature value is equal or less than the value of the preset temperature threshold on the regulator according to the technical characteristics of the Thermal storage devices, said temperature threshold, specific to each reduced rate period of the mains cycle benefiting from a specific power price level, being preferably placed within the limit of temperature variations set by the proportional band of the proportional action unit for controlling heat emission, said load being uniquely performed as long as the room temperature regresses or if it stagnates or progresses, as long as the value of the progression of the room temperature defined by the regulator during the cycle of temperature variation measurements, is less than or equal to the preset temperature variation threshold on the regulator.

10. The method according to any of claims 1 to 9, **characterized in that** it consists of performing the load during the reduced rate period(s) as long as the value of the room temperature is less than a predetermined minimum temperature threshold on the regulator according to the relevant technical characteristics of the Thermal storage heating devices within the definition of the outside design temperatures.

11. The method according to any of claims 1 to 10, **characterized in that**, as soon as the measured room temperature is larger than the set point temperature of the unit for controlling this room temperature and when the rate cycle includes one or several reduced rate periods, it consists of storing the stabilized room temperature measured after each load locking cycle or after each beginning of a reduced rate period not including a locking period, and then of turning on the load during the current reduced rate period as long as the measured room temperature remains less than or equal to this stored temperature.

12. The method according to any of claims 1 to 11, **characterized in that** it consists of locking the load of the Thermal storage devices as individually defined by the load processes and the heat emission from the heating devices, as long as the value of the gap as defined between the measured room temperature and the predetermined minimum temperature threshold on the regulator according to the technical characteristics of the Thermal storage devices is larger than a predetermined specific threshold on the regulator for each of the load processes.

13. The method according to claim 1 to 12, **characterized in that**, when the room temperature is larger than the set point temperature of the unit for controlling the room temperature, in particular when highly insulated Thermal storage devices are used, it consists of performing the load of the Thermal storage device(s) during a reduced rate period, as long as the room temperature does not progress during the cycle of temperature variation measurements, as defined by the regulator at regular intervals with a determined duration.

14. The method according to any of claims 1 to 13, **characterized in that**, when any heating device for producing centralized or decentralized heat in the premises to be heated is used and when the set point temperature of the unit for controlling the room temperature is reduced to below the value of the room temperature, it consists of cutting off the heat emission from the heating device's emitters during a preset time on the regulator, according to the time constant defined by the load of an average heat capacity of reference premises, said preset time being preferably corrected by a coefficient proportional to the quotient of the maximum power consumption of the daily cycle corresponding to the most severe weather conditions of the weather zone, by the total power consumptions of the previous daily cycle, said room temperature obtained at the end of the cutting off period being defined by the regulator as the new set point room temperature for controlling the heat emission from emitters under reduced load, said heat emission for controlling room temperature to this new set point value, being re-established after the cutting off period, and then preferably being again cut off systematically, as soon as the room temperature progresses, and again re-established systematically as soon as the room temperature regresses, said turning on and cutting off operations of the heat devices being performed until the next manual or automatic change in the set point temperature, or up to the end of a predetermined time period not including any change in this set point, at the end of which this new set point temperature as defined by the regulator is preferably replaced with the minimum set point temperature under reduced load, as displayed on the regulator.

15. The method according to any of claims 1 to 14, **characterized in that**, when any heating device for producing centralized or decentralized heat in the premises to be heated is used and when the set point temperature of the unit for controlling the room temperature is reduced to below the value of the room temperature, it consists of cutting off the heat emission from the emitters of the heating device as long as the quotient of the value of the room temperature variation during a cycle of temperature variation measurements, by the value of the room temperature variation during the next measurement cycle is equal or larger than the preset threshold value on the regulator, or alternatively cutting off this heat emission as long as the temperature variation during the successive cycles of temperature variation measurements remains larger than a preset variation threshold on the regulator, preferably according to the thermal characteristics of the building, said room temperature measured at the end of the cutting off period being defined by the regulator as the new set point room temperature for controlling the heat emission from emitters under reduced load, said heat emission for adjusting the temperature to this new set point value, being re-established after the cutting off period, and then preferably again being cut off systematically as soon as the room temperature progresses, and again re-established systematically as soon as the room temperature regresses, said turning on and cutting off operations being performed until the next manual or automatic change in the set point temperature, or until the end of a predetermined time period not including any change of this set point at the end of which this new set point temperature as defined by the regulator is preferably replaced with the minimum set point temperature under reduced load displayed on the regulator.

16. The method according to any of claims 1 to 15, **characterized in that**, preferably when the frost protection operation or a specific operation is enabled, it consists of turning on the load of the Thermal storage device during the reduced rate period(s) as long as the room temperature is less than the set point temperature of the unit for controlling the frost protection or specific operation increased by a preset value on the regulator, said load being cut off when room temperature reaches or exceeds this increased set point, said frost protection operation locking all the other load processes.

17. A control device for implementing the method the method for controlling the load of at least one storage electrical heating device such as an storage heater, a heating floor or the like, and the optimal load of the heat capacity of construction components and equipment of the premise or of a group of premises to be heated regardless of the heating method according to any of claims 1 to 16, **characterized in that** it consists of a unit (7) for selecting the operational mode, the rate signal handling mode and the synchronization mode of the regulator's clock with respect to the rate cycle of the electricity mains, controlling the circuits (50) for conditional control of the load of the Thermal storage device(s) and of the heat emission from other heating devices, said circuits receiving information from the unit (1) for measuring the room temperature and from the unit (2) for adjusting the set point room temperature, the complementary circuits (52) for conditional control of the load, receiving the information from the unit (5) measuring the heat contained within the core, on the one hand, the circuits (51) for conditional locking of the load and for restoring the heat from the heating devices, receiving the information from the unit (4) measuring the voltage charging time for the load resistances and from the unit (31) measuring the powering up time of the heat emission devices of the heating devices, said circuit (51) defining by measuring the time, the power consumption during the rate or daily cycle on the other hand and the set of conditional control circuit (50), locking circuits (51) and the complementary conditional control circuit (52) controlling by means of the selection circuit (14),the switch (15) providing conditional powering of the load resistance (16) of the accumulator core of the Thermal storage electric heat devices, said powering being re-established at the beginning of each reduced rate period according of the information from the unit for selecting and handling mode of the rate signals (7) and after each load locking period defined by the unit for locking of the load (51) controlling as well the circuit for selection and control (14), said powering is being systematically cut off when the value of the progression of the temperature measured by unit for measuring the room temperature (1), and the protective circuit for amplifying and processing information (6), calculated by the circuit for calculation, comparison and storage (12) In the interval set by the time base (11), then stored and compared in circuit (12)is larger than the temperature variation threshold stored in unit (9) providing the display, the selection and the storage of the different operating threshold and is systematically being re-established when the value of the temperature regression measured by the unit measuring the room temperature(1) and the protective circuit for amplifying and processing information (6), calculated by the circuit (12) in the interval set by the time base (11) then stored and compared in the circuit (12) is less than the variation threshold stored in the selection and storage unit (9) on the one hand, the conditional powering of the heat emission devices connected to the heating devices by the control unit (30) on the other hand.

18. The control device for implementing the method, according to claim 17, **characterized in that** the circuit (50) for conditional control of the load and heat emission from the Thermal storage device(s), including the comparison calculation and storage circuit (12), connected to unit (1) measuring room temperature and to unit (2) for adjusting the set point room temperature via the protective circuit for amplifying and processing information (6) on the one hand and to the unit (9) providing the display, selection, storage of different operating thresholds and receiving the information from the proportional action regulator (30) as well as from unit for handling mode of the rate signals(7) on the other hand, perform, with the selection and control electronic circuit (14), and the switch (15), the powering of the load resistances (16) of the accumulator core, as long as the value of the room temperature measured by the measuring unit for measuring the room temperature (1) and circuit processing information (6), compared within circuit for calculation, comparison and storage (12), is less than or equal to the predetermined temperature threshold value on unit for selection and storage (9) within the variation range of the proportional band communicated to unit (9) by the proportional action regulator (30), said threshold being selected by the rate signal corresponding to the power price level of the current reduced rate period applied to unit for handling mode of the rate signals(7) which controls unit for selection and storage (9), said load being cut off when the value of the room temperature measured by unit for measuring the room temperature (1) and the information processing circuit (6), exceeds the selected threshold value, or when the progression of the room temperature defined by circuit for calculation, comparison and storage (12) during the interval set by the time base (11) and compared within circuit (12), is larger than a temperature variation threshold stored by unit for the display, selection and storage of different operating thresholds (9) and also selected by the rate signal applied to unit for handling mode of the rate signals(7).

19. The control device for controlling the implementing of the method, according to any of claims 17 to 18, **characterized in that** the circuits (50) for conditional control of the load of the Thermal storage device(s), by means of the comparison calculation and storage circuit (12), the selection control electronic circuit (14), the switch (15), perform the powering of the load resistances (16) of the accumulator core during the load periods authorized by unit for handling mode of the rate signals(7)according to the rate signals as long as the value of the room temperature measured by the measuring unit (1) and the information processing circuit (6), as compared in the comparison circuit (12), is less than or equal to the preset temperature threshold value on the regulator and as displayed on unit (9), said threshold value being a function of the technical characteristics of the Thermal storage heating devices used, said load being cut off when the value of the room temperature, as measured by unit (1) and the measuring circuit processing information (6), exceeds the threshold value.

20. The control device for implementing the method, according to any of claims 17 to 19, **characterized in that** the circuits (50) for conditional control of the load of the Thermal storage device(s), by means of the comparison calculation and storage circuit (12), the selection electronic circuit (14), the switch (15), perform the powering of the load resistances (16) of the accumulator core, when the room temperature measured by unit for measuring the room temperature (1) and the circuit amplifying and processing information (6), as compared in circuit for calculation, comparison and storage (12), is larger than the set point temperature, controlling this room temperature displayed on unit for adjusting the set point room temperature(2) and when the value of the room temperature regression, as calculated by circuit (12) within the interval set by the time base (11) and then stored and compared in circuit (12), is larger than or equal to the preset temperature regression threshold value on unit for the display, selection and storage of different operating thresholds (9) or alternatively, when the value of the progression of this temperature is less than or equal to the preset progression threshold, said regression or progression threshold being selected by the rate signal corresponding to the power price level of the current reduced rate period applied to unit for handling mode of the rate signals(7), said load being cut off when the value of the regression of the room temperature, as calculated by circuit (12) within the interval set by the time base (11), becomes less than the value of this regression threshold or alternatively when the value of the progression becomes larger than the progression threshold value.

21. The control device for implementing the method, according to any of claims 17 to 20, **characterized in that** circuits (51) for the conditional locking of the load of the Thermal storage device(s), including the comparison calculation and storage circuit (13), under the control of unit for handling mode of the rate signals(7) and connected to unit (4) measuring the voltage charging time of the load resistances via the protective circuit for amplifying and processing information (8) on the one hand and to the unit (10) providing the display, the selection, the storage, of different operating thresholds on the other hand, perform the locking of the powering of the load resistances (16) of the accumulator core by the circuit for selection and control(14) and the switch (15) during a time calculated by circuit for calculation(13), according to the following relationship: maximum duration of the reduced rate period(s) of the rate cycle of the electricity mains benefiting from the lowest power price determined by unit for handling mode of the rate signals(7), reduced by the value obtained by multiplying the total duration of the voltage charging of the load resistances of the Thermal storage devices measured during the previous rate cycle by unit measuring the voltage charging time for the load resistances (4) and the circuit for processing information (8), by an adjustable and settable coefficient stored by unit for the display, selection and storage of different operating thresholds(10), said locking, thus defined during the time calculated and stored by the comparison and storage circuit (13), being temporarily disabled by circuit (14) on the one hand as long as the room temperature measured by unit (1) and the circuit amplifying and processing information (6), compared within the comparison circuit (12), becomes and remains less than the value of the preset temperature threshold value on unit for selection and storage (9) with respect to the set point temperature displayed on unit for adjusting the set point room temperature(2), said temperature threshold being preferably defined within the limits of the temperature variations set by the proportional band of the proportional action regulator (30), and if the regression of the room temperature calculated by circuit (12) within the interval set by the time base (11) and then stored and compared in circuit (12), becomes larger or equal to the preset regression threshold on unit (9) on the other hand, said locking being thereby performed continuously or discontinuously until exhaustion of the duration of the locking period stored by the comparison and storage circuit (13) .

22. The control device for implementing the method, according to any of claims 17 to 21, **characterized in that** the locking (51)during the reduced rate period of the current cycle, perform the locking of the powering of the load resistances (16) by means of the selection and control circuit (14) and the switch (15), when the voltage charging duration of the load resistances during the previous reduced rate period of the same rate cycle as measured by the unit for measuring the load time (4) and circuit for processing information (8), stored and compared in circuit for calculation, comparison and storage (13), is less than the threshold proportionally calculated to the total duration of the previous reduced rate period of the same rate cycle by circuit (13) under control of unit for selecting and handling mode of the rate signals(7), the percentage defining this proportionality being preset on unit for storage of different operating thresholds(10), said locking during the current reduced rate period being suppressed by the selection and control circuit of device (14) when the temperature measured by unit for measuring the room temperature (1) and compared by device (12) falls below a minimum threshold preset on unit for selection and storage of different operating thresholds (9) according to the technical characteristics of the accumulators or at a second threshold preset on unit (9), within the limits of the temperature variations set by the proportional band of the proportional action regulator (30) according to the set point temperature displayed on unit for adjusting the set point room temperature(2), and on the other hand, as long as the calculation and comparison circuit (12) detects a regression of the room temperature within the period defined by the time base (11) larger than or equal to the predetermined regression threshold on the storage and display selection unit (9), selected by unit for selecting and handling mode of the rate signals(7), alternatively said locking of the load may be limited to a fraction of the duration of the current period.

23. The control device for implementing the method, according to any of claims 17 to 22, **characterized in that** the circuits (50) for conditional control of the load of the preferably very highly insulated Thermal storage device(s) and thus selected by unit for selecting and handling mode of the rate signals(7), during the reduced rate periods, by means of the comparison calculation and storage circuit (12), the selection and control electronic circuit (14), the switch (15), perform the powering of the load resistances (16) when the regression of the room temperature, calculated by circuit for calculation, comparison and storage (12) within the interval of the time base (11) according to the information measured by unit for measuring the room temperature (1) and circuit for amplifying and processing information (6), and then compared in circuit for calculation, comparison and storage (12), is less than or equal to the zero value corresponding to the selected threshold on unit for selection and storage (9) by a specific command of unit (7), said load being cut off when the value of the progression of the room temperature, defined by circuit for calculation, comparison and storage (12) within the interval of the time base (11) according to information measured by unit for measuring the room temperature (1) and circuit for amplifying and processing information (6) and then compared in circuit (12), becomes larger than zero.

24. The control device for implementing the method, according to any of claims 17 to 23, **characterized in that** the circuits (50) for conditional control of the heat emission from any heating device, by means of the comparison calculation and storage circuit (12), the selection electronic circuit (14) and the control unit (30), lock the restoration of heat from the heat emitting devices (32) of the heating devices(s), when the corresponding operating mode is selected on unit for selecting and handling mode of the rate signals(7) as soon as the set point displayed on unit for adjusting the set point room temperature(2)is reduced to below the value of the room temperature, as measured by unit (1) and circuit for amplifying and processing information (6), compared in the comparison circuit (12), said locking being maintained by the circuits for calculation, comparison and storage (13) and for selection and control (14) during the time preset on unit for the display, selection and storage of different operating thresholds (10) selected by unit for selecting and handling mode of the rate signals(7), said time being multiplied by a coefficient proportional to the quotient of the maximum duration of the powering of the emitters, preset on unit (10) for the daily cycle corresponding to the most severe weather conditions of the site, by the value of the total power consumptions of the previous cycle as defined by the comparison and storage circuit (13), the room temperature reported at the end of the locking period by unit (1) and circuit (6), being stored in circuit for calculation, comparison and storage (12) and defined by the regulator as a new room temperature set point, said set point temperature being replaced with the minimum set point temperature displayed on unit for selection and storage (9) after a specific time defined by the regulator according to the time constant defined by the heat capacity of the premise or upon a change in the displayed set point by the user.

25. The control device for implementing the method, according to any of claims 17 to 24, **characterized in that**, the circuit (50) for conditional control of the load and heat emission from any heating device, locket by means of unit for selecting and handling mode of the rate signals(7), the restoration of heat from the heat devices as soon as the set point displayed on the unit for adjusting the set point room temperature(2) is reduced below the value of the room temperature, as measured by unit (1) and the circuit for amplifying and processing information (6), compared in the comparison circuit (12),as long as the quotient of the value of the room temperature regression calculated by the circuit (12) in the interval of the time base (11) during a cycle, by the value of the room temperature regression calculated by the circuit (12) in the interval of the time base (11) for the next measurement cycle is larger than a predetermined variation threshold in the selection and storage unit(9), the room temperature reported at the end of the locking period by the unit measuring room temperature(1) and circuit (6), being stored in circuit (12) and defined by the regulator as a new room temperature set point, said set point temperature being replaced with the minimum set point temperature displayed on unit for display, selection and storage of different operating threshold (9) after a specific time defined by the regulator according to the time constant defined by the heat capacity of the premise or upon a change in the displayed set point by the user.

26. The control device for implementing the method, according to any of claims 17 to 25, **characterized in that**, during the frost protection operation or a special operation enabled by unit (3) controlling through unit for handling mode of the rate signals (7) the circuits and units for the display, selection and storage of different operating thresholds (9), for calculation, comparison and storage (12), and for selection and control(14), the circuits (50) for conditional control of the load of the Thermal storage devices or for the control of the heat emission device of any heating device, by means of the comparison and calculation circuit (12), the electronic circuit for selection and control(14) and the switch (15), perform the powering of the load resistances (16) during the reduced rate periods, or the control of the unit for controlling the heat emission from other heating devices, as long as the room temperature measured by unit for measuring the room temperature (1) and circuit for amplifying and processing information (6) compared in the comparison device (12) is less than or equal to the temperature set point value for frost protection or that of the special operation increased by a pre-established value and preset on unit for selection and storage (9), said non-increased temperature set point controlling the devices for restoring heat (32) from the heating devices by the control unit (30), said frost protection control unit (3) locking, during the frost protection period, the application of all the claimed load processes, said powering of low resistances being cut off when the room temperature reaches or exceeds the increased value of the set point.

27. The control device for implementing the method, according to any of claims 17 to 26, **characterized in that** the circuits (52) for conditional control of the load of the Thermal storage device(s) during the authorized loading periods, by means of the comparison calculation and storage circuit (18), the selection electronic circuit (14), the switch (15), perform the powering of the load resistances (16) as long as the value of the temperature of the accumulator core of the heating devices, representative of the power load contained in this accumulator core, as measured by the unit (5) for measurements of this temperature, connected to the protective circuit (17) for amplifying and processing information, is less than, preferably by a preset value, or equal to the value of the set point defined by the function $F(t) = -a.t + b$ stored by this circuit (18), defining a line segment which has as ordinate intercept point, the representative point (b) located at the corresponding instant at the end of the sole or last reduced rate period benefiting from the lowest power price defined by unit for selecting and handling mode of the rate signals (7), said representative point (b) at this instant having the value of the temperature of the accumulator core measured by the unit measuring the temperature of the storage core(5) of the protective circuit for amplifying and processing information (17), being connected, so as to form the line segment, to a second point defined at the end of the rate cycle by unit (7) and at this instant having the value of the temperature threshold of the core, predetermined on unit for selection and storage (10), which may be modulated and adjusted, corresponding to the design temperature of the Thermal storage devices, the value of said second point, also defining the slope (a) of the line, preferably modulated by circuit the circuit for calculation, comparison and storage (18), increased or decreased according to the duration of the load during the reduced rate period(s) of this rate cycle with respect to the total duration of this(these) period(s), said powering of the load resistances (16) preferably being performed only when the room temperatures measured by circuit (12) regress or if they stagnate or progress when the value of the variation defined within the interval of the time base (11) is less than or equal to the preset threshold on unit for selection and storage (9), said value of this threshold may be equal to zero.

28. The control device for implementing the method, according to any of claims 17 to 27, **characterized in that** the circuits (50) for conditional control of the load of the Thermal storage device(s), during the load authorized periods, by means of the selection and control electronic circuit (14), the switch (15), perform the powering of the load resistances (16) as long as the room temperature value measured by the measuring unit (1) and circuit for amplifying and processing information (6), compared in the comparison circuit (12), is less than, preferably by a preset value, or equal to the value of the set point defined by the function F(t) = -a.t + b, stored by circuit (12) defining during the rate cycle, a coincident line segment having an ordinate intercept point, the representative point (b) located at the instant corresponding to the end of the reduced rate period benefiting from the lowest power price as defined by unit for selecting and handling mode of the rate signals(7) and at that instant having the value of the level of the highest set point temperature of the variation range of the temperatures in the proportional band of the proportional action control unit (30), said representative point being connected, in order to form the line, to a second point defined at the end of the rate cycle defined by circuit (7) and at that instant having the value of the lowest set point temperature level of the variation range of the temperatures of the proportional band of the proportional action control unit (30), said time definition at the end of the rate cycle able to be corrected by a greater or lesser amount, by a predetermined time period on unit for selection and storage (9) according to the technical characteristics of the Thermal storage devices, said powering of the load resistances (16) preferably being performed only when the room temperatures measured by circuit (12) regress or if they stagnate or progress when the value of the variation within the interval of the time base (11) is less than or equal to the threshold on unit (9), said threshold being able to be equal to zero.

29. The control device for implementing the method, according to any of claims 17 to 28, **characterized in that** when the room temperature measured by the measuring unit (1) and circuit for amplifying and processing information (6), compared in the comparison circuit (12), is larger than the value of the set point temperature of the unit for adjusting the set point room temperature(2), the operation of any of the different load processes may preferably be authorized only when the positive temperature gap defined in circuit for calculation, comparison and storage (12), obtained by performing the difference between the room temperature measured by unit for measuring the room temperature (1) of circuit for amplifying and processing information (6) and the minimum temperature threshold displayed on unit for selection and storage (9) according to the technical characteristics of the Thermal storage heating devices, is less than or equal to the predetermined specific threshold value also on unit for the display, selection and storage of different operating thresholds (9) and assigned to each load process, said threshold may be modulated according to the operating time or the heat emission devices, as defined by unit (30) and stored by unit (9).

**Patentansprüche**

1. Verfahren zur Steuerung der Last mindestens einer elektrischen Speicher-Heizvorrichtung, wie einer Nacht-Speicherofen, einer Fußbodenheizung oder ähnliches, und der optimalen Last der thermischen Kapazität der Konstruktions- und Ausrüstungselemente der zu beheizenden Räumlichkeit oder Gruppe von Räumlichkeiten, unabhängig von der Heizungsart, wobei das besagte Verfahren beide Lasten unterschiedslos gleichzeitig oder die letzte ausschließlich steuern kann, **dadurch gekennzeichnet, dass** es im wesentlichen darin besteht, für eine bestimmte zu heizende Räumlichkeit oder eine Gruppe von Räumlichkeiten die Last oder den Lastvorgang des oder der elektrischen Speichervorrichtungen während der oder den vorzugsweise zum reduzierten Tarif gestatteten Periode (n) eines Tarifzyklus des Stromverteilungsnetzes, das ein oder mehrere Energiepreisniveaus aufweist, und die Last der thermischen Kapazität der Konstruktions- und Ausrüstungselemente der Räumlichkeit oder der Räumlichkeiten in Abhängigkeit eines vom Regler speziell definierten Last-Sollwertes zu steuern, wobei der besagte Sollwert ermittelt wird durch Vergleich des Werts der vom Regler definierten Schwankungen der Umgebungstemperatur in wiederholten Intervallen von einer determinierten Zeit, die einen Messzyklus der Schwankungen der Umgebungstemperatur definieren, mit einer vom Regler vorbestimmten Schwankungsschwelle.

2. Verfahren nach Anspruch 1, **dadurch gekennzeichnet, dass** es darin besteht, wenn der Tarifzyklus mehrere Niedrigtarifperioden mit vorzugsweise einem besonderen Energiepreisniveau für jede Periode oder Periodengruppe aufweist, die Last der Speichervorrichtungen während der gesamten Niedrigtarifperiode im Tarifzyklus des Stromverteilungsnetzes oder während eines voreingestellten Bruchteils dieser vorzugsweise in Abhängigkeit des Verbrauchs des vorhergehenden Zyklus modulierten Periode zu blockieren, solange die Dauer der Last der Speichervorrichtung in der vorhergehenden Niedrigtarifperiode des gleichen Tarifzyklus, die jedoch von einem niedrigeren Energiepreis profitiert, nicht die gesamte Dauer dieser vorhergehenden Periode oder eines voreingestellten Bruchteils derselben erreicht hat, wobei die Blockierung der besagten Last vorzugsweise einerseits dann eingestellt wird, wenn die Umgebungstemperatur kleiner oder gleich der am Regler in Abhängigkeit der technischen Eigenschaften der Speichervorrichtungen voreingestellten oder der im Schwankungsbereich des Proportionalitätsbereichs eingestellten, die Wärmeabgabevorrichtungen steuernden Schwelle ist, und andererseits, wenn der Rückgang der Umgebungstemperatur während des Messzyklus der Temperaturschwankungen größer oder gleich der Regressionsschwelle der am Regler für die laufende Periode vorher festgelegten Temperatur ist.

3. Verfahren nach einem der Ansprüche 1 und 2, **dadurch gekennzeichnet, dass** es darin besteht, wenn die Dauer der Last der Speichervorrichtungen während einer laufenden Niedrigtarifperiode während der gesamten Dauer dieser Periode durchgeführt wird oder diesem Wert nahe kommt, die vom Regler der folgenden Niedrigtarifperiode desselben Tarifzyklus zugeordnete Temperaturschwankungsschwelle durch die Schwelle der laufenden Periode zu ersetzen, und wenn die besagte Dauer der Ladung nur ein Bruchteil der Gesamtdauer der Periode ist, die vom Regler der folgenden Periode desselben Tarifzyklus zugeordnete Schwelle durch eine neue Temperaturschwankungsschwelle zu ersetzen, die durch Modulation der Abweichung zwischen den Temperaturschwankungsschwellen der beiden Niedrigtarifperioden vorzugsweise proportional zur Verschlusszeit der Vorrichtungen zur Wärmeabgabe in der Zeit, die diese beiden Perioden trennt, ermittelt wird.

4. Verfahren nach einem der Ansprüche 1 bis 3, **dadurch gekennzeichnet, dass** es darin besteht, während der Niedrigtarifperiode des vom niedrigsten Energiepreis profitierenden Tarifzyklus die Last des oder der Heizvorrichtungen während einer vom Regler gemäß dem folgenden Verhältnis berechneten Zeit zu blockieren: maximale Dauer der Niedrigtarifperiode(n) des vom niedrigsten Energiepreis profitierenden Tarifzyklus, gemindert um den Wert, den man durch Multiplikation der Gesamtdauer der Last der Speichervorrichtungen während des vorhergehenden Tarifzyklus des Stromverteilungsnetzes erhält, mit einen einstellbaren vorher festgelegten Sicherheitskoeffizienten, wobei die besagte Blockierung aufgehoben wird, wenn das Ergebnis dieser Subtraktion null oder negativ ist und die Dauer der besagten Blockierung vorzugsweise auf eine vom Regler vorbestimmte Zeit begrenzt ist und einem Bruchteil der Gesamtdauer der vom niedrigsten Energiepreis profitierenden Niedrigtarifperiode(n) entspricht, wobei die besagte Last zeitweise selbst während des Blockierungszeitraums wiederhergestellt wird, einerseits, wenn die Umgebungstemperatur kleiner oder gleich der am Regler in Abhängigkeit der technischen Eigenschaften der Speichervorrichtungen voreingestellten Schwelle ist oder der im Schwankungsbereich des Proportionalitätsbereichs, die Vorrichtungen zur Wärmeabgabe steuernden Schwelle festgelegt ist, und andererseits, wenn der Rückgang der Umgebungstemperatur während des Messzyklus der Temperaturschwankungen größer oder gleich der kleinsten am Regler für die laufende Niedrigtarifperiode vorher festgelegten Regressionsschwelle ist.

5. Verfahren nach einem der Ansprüche 1 bis 4, **dadurch gekennzeichnet, dass** es darin besteht, wenn der Tarifzyklus eine oder mehrere Niedrigtarifperioden mit einem besonderen Energiepreisniveau für jede Periode oder Periodengruppe aufweist, die Speichervorrichtung(en) solange zu speisen, wie die von der Sonde gemessene Temperatur des Speicherkerns der Heizvorrichtung kleiner oder gleich dem vom gemeinsamen Geradenabschnitt oder parallel zum Geradenabschnitt während des Tarifzyklus definierten Sollwert ist, dessen ursprünglich repräsentativer Punkt am Ende der einzigen oder der letzten Niedrigtarifperiode liegt, die vom niedrigsten Energiepreis profitiert, und als Wert in diesem Augenblick die von der Sonde dieses Kerns im gleichen Augenblick gemessene Temperatur des besagen Speicherkerns hat, wobei die besagte Temperatur vorzugsweise um einen am Regler vorbestimmten festen Wert oder Prozentsatz gemindert wird, wobei der besagte repräsentative Punkt, um den Geradenabschnitt zu bilden, mit einem zweiten, am Ende des laufenden Tarifzyklus definierten repräsentativen Punkt verbunden ist und als Wert im Augenblick des Endes des Tarifzyklus die Temperaturschwelle des Kerns hat, die vorzugsweise dem minimalen, von der/den Speichervorrichtung(en) bei einer vom niedrigsten Energiepreis profitierenden, der oder den Niedrigtarifperioden entsprechenden Außen-Bemessungstemperatur abgegebenen Heizwert entspricht, wobei die besagte Temperaturschwelle des Kerns nach unten korrigiert wird, wenn die Dauer der Last während dieser Periode(n) kürzer als ihre Gesamtdauer ist, und nach oben, wenn sie gleich ist, wobei die besagte Korrektur durch einen Wert durchgeführt wird, der dem Verhältnis der Gesamtdauer der Last des vorhergehenden Tarifzyklus zur Gesamtdauer der Periode(n), in denen die Ladung erlaubt ist, proportional ist, wobei die besagte Last vorzugsweise nur dann durchgeführt wird, solange die Umgebungstemperatur sinkt, und wenn sie stagniert oder ansteigt, solange die vom Regler während des Messzyklus der Temperaturschwankungen definierte Schwankung der Umgebungstemperatur kleiner oder gleich einer am Regler vorher festgelegten Temperaturschwankungsschwelle ist, wobei die besagte Schwelle vorzugsweise gleich Null ist.

6. Verfahren nach einem der Ansprüche 1 bis 5, **dadurch gekennzeichnet, dass** es darin besteht, wenn der Tarifzyklus eine oder mehrere Niedrigtarifperioden aufweist mit einem Einheitspreis oder einem speziellen Preis für jede Periode oder Periodengruppe, wenn die Umgebungstemperatur über der Sollwerttemperatur des Steuerungsorgans dieser Umgebungstemperatur ist, die Speichervorrichtungen während der oder den Niedrigtarifperiode(n) zu speisen, solange der Schwankungswert der Umgebungstemperatur größer oder gleich der Regressionsschwelle ist, oder auch solange dieser kleiner oder gleich der Progressionsschwelle ist, wobei die besagten Regressions- oder Progressionsschwellen am Regler in Abhängigkeit der technischen Eigenschaften der Speicher und des Energiepreisniveaus jeder Niedrigtarifperiode vorher eingestellt sind.

7. Verfahren nach einem der Ansprüche 1 bis 6, **dadurch gekennzeichnet, dass** es darin besteht, wenn die gemessene Umgebungstemperatur höher ist als die Sollwerttemperatur des Steuerorgans dieser Umgebungstemperatur und wenn der Tarifzyklus eine oder mehrere Niedrigtarifperioden aufweist, die Last am Ende jeder Last-Blockierungsperiode und zu Beginn jeder Niedrigtarifperiode, die keine Blockierungszeit aufweist, systematisch einzuschalten, danach systematisch diese Last auszuschalten, wenn die Umgebungstemperatur während des Messzyklus der Temperaturschwankungen ansteigt und diese Last erneut systematisch einzuschalten, sobald die Umgebungstemperatur während des Messzyklus der Temperaturschwankungen sinkt, wobei die Ein- und Ausschaltungen bis zum Ende der laufenden Niedrigtarifperiode oder bis zur nächsten Änderung der Sollwert-Umgebungstemperatur, wodurch diese erneut über der gemessenen Umgebungstemperatur liegt, durchgeführt werden.

8.  Verfahren nach einem der Ansprüche 1 bis 7, **dadurch gekennzeichnet, dass** es darin besteht, wenn der Tarifzyklus eine oder mehrere Niedrigtarifperioden mit einem einheitlichen oder besonderen Energiepreisniveau für jede Periode oder Periodengruppe aufweist, die Speichervorrichtung(en) solange zu speisen, wie die Umgebungstemperatur kleiner oder gleich dem während des Tarifzyklus vom gemeinsamen Geradenabschnitt oder parallel zum Geradenabschnitt definierten Sollwert ist, dessen ursprünglich repräsentativer Punkt, der am Ende der einzigen oder der letzten, vom niedrigsten Energiepreis profitierenden Niedrigtarifperiode liegt, in diesem Augenblick das höchste Niveau der Sollwerttemperatur des Temperaturschwankungsbereichs des Proportionalitätsbereichs des Proportionalreglers zum Wert hat, wobei dieser repräsentative Punkt zur Bildung des Geradenabschnitts mit einem zweiten repräsentativen Punkt verbunden ist, der am Ende des laufenden Tarifzyklus definiert wird und in diesem Augenblick des Endes des Tarifzyklus das niedrigste Niveau der Sollwerttemperatur des Temperaturschwankungsbereichs des Proportionalitätsbereichs des Proportionalreglers als Wert hat, wobei die besagte Definition dieser Punkte am Ende der einzigen oder letzten, vom niedrigsten Energiepreis profitierenden Niedrigtarifperiode und am Ende des Tarifzyklus um einen am Regler in Abhängigkeit der technischen Eigenschaften der Speichervorrichtungen vorbestimmten Zeitabschnitt mehr oder weniger korrigiert werden kann, wobei die besagte Last nur dann erfolgt, solange die Umgebungstemperatur sinkt, und wenn sie stagniert oder ansteigt, solange die vom Regler während des Messzyklus der Temperaturschwankungen definierte Schwankung der Umgebungstemperatur kleiner oder gleich einer am Regler vorher festgelegten Temperaturschwankungsschwelle ist, wobei die besagte Schwelle vorzugsweise gleich Null ist.

9.  Verfahren nach einem der Ansprüche 1 bis 8, **dadurch gekennzeichnet, dass** es darin besteht, wenn die gemessene Umgebungstemperatur kleiner oder gleich dem Wert der Sollwert-Umgebungstemperatur ist, die Speichervorrichtung(en) in der Niedrigtarifperiode solange zu speisen, solange der Wert der gemessenen Umgebungstemperatur gleich oder kleiner ist wie der am Regler in Abhängigkeit der technischen Eigenschaften der Speichervorrichtungen vorher festgelegten Temperaturschwellenwert, wobei die besagte Temperaturschwelle, die für jede von einem speziellen Energiepreisniveau profitierende Niedrigtarifperiode des Verteilerzyklus kennzeichnend ist, vorzugsweise innerhalb der Grenzen der vom Proportionalitätsbereich des Proportionalorgans zur Steuerung der Wärmeabgabe vorher festgelegten Temperaturschwankungen liegt, wobei die besagte Last nur dann durchgeführt wird, solange die Umgebungstemperatur sinkt, und wenn sie stagniert oder ansteigt, solange der vom Regler während des Messzyklus der Temperaturschwankungen definierte Wert des Ansteigens der Umgebungstemperatur kleiner oder gleich der am Regler vorher festgelegten Temperaturschwankungsschwelle ist.

10. Verfahren nach einem der Ansprüche 1 bis 9, **dadurch gekennzeichnet, dass** es darin besteht, die Last während der oder den Niedrigtarifperiode(n) durchzuführen, solange der Wert der Umgebungstemperatur unterhalb einer minimalen, am Regler in Abhängigkeit der technischen Eigenschaften der Speicherheizvorrichtungen vorbestimmten Temperaturschwelle liegt, die in der Definition der äußeren Dimensionierungstemperatur berücksichtigt wurden.

11. Verfahren nach einem der Ansprüche 1 bis 10, **dadurch gekennzeichnet, dass** es darin besteht, sobald die gemessene Umgebungstemperatur über der Sollwerttemperatur des Steuerungsorgans dieser Umgebungstemperatur liegt und wenn der Tarifzyklus eine oder mehrere Niedrigtarifperioden aufweist, die stabilisierte Umgebungstemperatur, die nach jedem Last-Blockierungszyklus oder nach jedem Beginn einer Niedrigtarifperiode, die keine Blockierungsperiode aufweist, gemessen wurde, zu speichern, und dann die Last während der laufenden Niedrigtarifperiode solange einzuschalten, wie die gemessene Umgebungstemperatur kleiner oder gleich dieser gespeicherten Temperatur bleibt.

12. Verfahren nach einem der Ansprüche 1 bis 11, **dadurch gekennzeichnet, dass** es darin besteht, die individuell von den Last- und Wärmeabgabeverfahren der Heizvorrichtungen definierte Last so lange zu blockieren, wie der Wert der Abweichung, der zwischen der gemessenen Umgebungstemperatur und der minimalen, am Regler in Abhängigkeit der technischen Eigenschaften der Speichervorrichtungen vorbestimmten Temperaturschwelle definiert wurde, größer ist als eine spezielle Schwelle, die am Regler für jedes der Ladeverfahren vorbestimmt wurde.

13. Verfahren nach Anspruch 1 bis 12, **dadurch gekennzeichnet, dass** es darin besteht, wenn die Umgebungstemperatur über der Sollwerttemperatur des Steuerungsorgans der Umgebungstemperatur liegt, insbesondere wenn stark isolierte Speichervorrichtungen verwendet werden, die Speichervorrichtung(en) in der Niedrigtarifperiode so lange zu speisen, wie die Umgebungstemperatur in dem Messzyklus der Temperaturschwankungen nicht ansteigt, der vom Regler in regelmäßigen Intervallen einer bestimmten Dauer definiert wird.

14. Verfahren nach einem der Ansprüche 1 bis 13, **dadurch gekennzeichnet, dass** es darin besteht, wenn eine beliebige Heizvorrichtung zur zentralen oder dezentralen Produktion von Wärme in dem zu heizenden Raum verwendet wird und wenn die Sollwerttemperatur des Organs zur Steuerung der Umgebungstemperatur unterhalb des Wertes der Umgebungstemperatur liegt, die Wärmeabgabe der Emitter der Heizvorrichtung während einer Zeit zu unterbrechen, die am Regler in Abhängigkeit der von der Last einer durchschnittlichen thermischen Kapazität eines Referenzraums definierten Zeitkonstante vorher festgelegt wurde, wobei die besagte vorher festgelegte Zeit vorzugsweise von einem Koeffizienten korrigiert wird, der proportional zum Quotienten aus dem maximalen Energieverbrauch des Tageszyklus ist, der den strengsten klimatischen Bedingungen der Klimazone entspricht, und aus dem Gesamt-Energieverbrauch des vorhergehenden Tageszyklus, wobei die besagte, am Ende der Unterbrechungsperiode ermittelte Umgebungstemperatur vom Regler als neue Sollwert-Umgebungstemperatur definiert wird, um die Wärmeabgabe der Emitter im eingeschränkten Betrieb zu steuern, wobei die besagte Wärmeabgabe zur Einstellung der Umgebungstemperatur auf diesen neuen Sollwert nach der Unterbrechungsperiode wieder aufgenommen wird, danach vorzugsweise erneut systematisch unterbrochen wird, sobald die Umgebungstemperatur ansteigt, und erneut systematisch wieder aufgenommen wird, sobald die Umgebungstemperatur sinkt, wobei die besagten An- und Abschaltungen der Heizvorrichtungen bis zur nächsten manuellen oder automatischen Änderung der Sollwerttemperatur durchgeführt werden, oder bis zum Ende eines vorbestimmten Zeitabschnitts, der keinerlei Änderung dieses Sollwerts aufweist, an dessen Ende diese neue, vom Regler definierte Sollwerttemperatur vorzugsweise von der minimalen Sollwerttemperatur im eingeschränkten Betrieb, die der Regler anzeigt, ersetzt wird.

15. Verfahren nach einem der Ansprüche 1 bis 14, **dadurch gekennzeichnet, dass** es darin besteht, wenn eine beliebige Heizvorrichtung zur zentralen oder dezentralen Produktion von Wärme in dem zu heizenden Raum verwendet wird und wenn die Sollwerttemperatur des Organs zur Steuerung der Umgebungstemperatur unterhalb des Wertes der Umgebungstemperatur liegt, die Wärmeabgabe der Emitter der Heizvorrichtung so lange zu unterbrechen, wie der Quotient aus dem Wert der Schwankung der Umgebungstemperatur während eines Messzyklus der Schwankungen der Umgebungstemperatur und aus dem Wert der Schwankung der Umgebungstemperatur während des folgenden Messzyklus gleich oder größer ist als der Wert der am Regler vorher festgelegten Schwelle, oder in einer Variante diese Wärmeabgabe so lange zu unterbrechen, wie die Temperaturschwankung während der aufeinanderfolgenden Temperaturschwankungs-Messzyklen oberhalb einer am Regler vorzugsweise in Abhängigkeit der thermischen Eigenschaften des Gebäudes vorher festgelegten Schwankungsschwelle bleibt, wobei die besagte, am Ende der Unterbrechungsperiode gemessene Umgebungstemperatur vom Regler als neue Sollwert-Umgebungstemperatur definiert wird, um die Wärmeabgabe der Emitter im eingeschränkten Betrieb zu steuern, wobei die besagte Wärmeabgabe nach der Unterbrechungsperiode wieder aufgenommen wird, um die Temperatur auf diesen neuen Sollwert einzustellen, dann vorzugsweise erneut systematisch unterbrochen wird, sobald die Umgebungstemperatur steigt, und erneut systematisch wieder aufgenommen wird, sobald die Umgebungstemperatur sinkt, wobei die besagten An- und Abschaltungen bis zur nächsten manuellen oder automatischen Änderung der Sollwerttemperatur durchgeführt werden, oder bis zum Ende eines vorbestimmten Zeitabschnitts, der keinerlei Änderung dieses Sollwerts aufweist, an dessen Ende diese neue, vom Regler definierte Sollwerttemperatur vorzugsweise von der minimalen Sollwerttemperatur im eingeschränkten Betrieb, die der Regler anzeigt, ersetzt wird.

16. Verfahren nach Anspruch 1 bis 15, **dadurch gekennzeichnet, dass** es darin besteht, vorzugsweise wenn die Betriebsart frostfrei oder eine spezielle Betriebsart aktiviert ist, die Last der Speichervorrichtung während der oder den Niedrigtarifperioden solange einzuschalten, wie die Umgebungstemperatur unter der Sollwerttemperatur des Organs zur Steuerung der Temperatur in der Betriebsart frostfrei oder in einer speziellen Betriebsart liegt, erhöht um einen am Regler vorher festgelegten Wert, wobei die besagte Last unterbrochen wird, wenn die Umgebungstemperatur diesen erhöhten Sollwert erreicht oder übersteigt, wobei die Betriebsart frostfrei alle anderen Lastvorgänge blockiert.

17. Regelungsvorrichtung zur Durchführung des Verfahrens zur Steuerung der Last mindestens einer elektrischen Speicher-Heizvorrichtung, wie einer Nacht-Speicherofen, einer Fußbodenheizung oder ähnliches, und der optimalen Last der thermischen Kapazität der Konstruktions- und Ausrüstungselemente der zu beheizenden Räumlichkeit oder Gruppe von Räumlichkeiten, unabhängig von der Heizungsart, nach einem der Ansprüche 1 bis 16, **dadurch gekennzeichnet, dass** sie von einem Organ (7) zur Auswahl der Betriebsart, zur Verwaltung von Tarifsignalen und zur Synchronisierung der Uhr des Reglers in bezug auf den Tarifzyklus des Stromverteilungsnetzes gebildet wird, die einerseits die Steuerstromkreise (50) zur bedingten Steuerung der Last des oder der Speichervorrichtungen und der Wärmeabgabe der anderen Heizvorrichtungen steuert, wobei die besagten Steuerstromkreise die Informationen vom Organ zur Messung der Umgebungstemperatur (1) und vom Organ zur Einstellung der Sollwert-Umgebungstemperatur (2) erhalten, die ergänzenden Steuerstromkreise (52) zur bedingten Steuerung der Last die Informationen vom Organ (5), das die im Kern enthaltene Wärme misst, erhalten, und andererseits die Steuerstromkreise (51) zur bedingten Blockierung der Last oder der Rückgabe von Wärme der Heizvorrichtungen, die die Informationen vom Organ (4) erhalten, das die Zeit misst, in der die Ladewiderstände unter Spannung gesetzt sind, oder vom Organ (31), das die Einschaltzeit der Wärmeabgabevorrichtungen der Heizvorrichtungen misst, die besagten Steuerstromkreise (51) den Energieverbrauch während des Tarif- oder Tageszyklus durch Messung der Zeit definieren und alle Steuerstromkreise zur bedingten Steuerung(50), zur bedingten Blockierung der Last (51)und die ergänzenden Steuerstromkreise zur bedingten Steuerung der Last (52) steuern einerseits über einem Auswahl- und Steuerstromkreis (14) der Schalter (15) die bedingte Versorgung der Ladewiderstände (16) des Akkumulatorkerns der elektrischen Speicherheizvorrichtung, wobei die besagte Versorgung am Anfang von jeder Niedrigtarifperiode folgend der Informationen vom Organ zur Verwaltung von Tarifsignalen (7) eingeschaltet wird und nach jeder Aufladeblockierungsperiode definiert vom Blockierungssteuerstromkreis (51) der auch den Auswahl- und Auswahl- und Steuerstromkreis (14) steuert ,die besagte Versorgung ist systematisch unterbrochen, wenn der Anstiegswert der Temperatur, vom Messorgan (1) und vom Steuerstromkreis zum Schutz, zur Verstärkung und zur Verarbeitung von Informationen (6) gemessene, im Berechnung - Vergleich und Speicherung Steuerstromkreis(12) berechnet im Intervall der Zeitbasis(11) dann im Steuerstromkreis (12) verglichen und gespeichert, über einer Temperaturschwankungsschwelle liegt die gespeichert ist vom Organ (9)zur Anzeige, zur Auswahl und zur Speicherung der verschiedenen Betriebsschwellen und ist wieder systematisch eingeschaltet wenn der Absinkwert der Temperatur vom Messorgan (1) und vom Steuerstromkreis zum Schutz, zur Verstärkung und zur Verarbeitung von Informationen (6) gemessen, im Steuerstromkreis (12) berechnet im Intervall der Zeitbasis(11) dann im Steuerstromkreis (12) verglichen und gespeichert, unter einer Temperaturschwankungsschwelle liegt, die gespeichert ist vom Organ zur Auswahl und zur Speicherung (9)und andererseits über das Steuerorgan (30) die bedingte Versorgung der mit den Heizvorrichtungen verbundenen Vorrichtungen zur Wärmeabgabe.

18. Regelungsvorrichtung zur Durchführung des Verfahrens nach Anspruch 17, **dadurch gekennzeichnet, dass** die Steuerstromkreise (50) zur bedingten Steuerung der Last und der Wärmeabgabe des oder der Speichervorrichtungen, die den Steuerstromkreis zur Berechung, zum Vergleich und zur Speicherung (12) umfassen, der einerseits mit dem Organ (1) zur Messung der Umgebungstemperatur und mit dem Organ (2) zur Einstellung der Sollwert-Umgebungstemperatur über den Steuerstromkreis zum Schutz, zur Verstärkung und zur Verarbeitung von Informationen (6) und andererseits mit dem gewährleistet und Informationen vom Proportionalregler (30) sowie dem Organ zur Verwaltung von Tarifsignalen (7) erhält, verbunden ist, mit dem Organ zur Auswahl und zur Speicherung (9), das die Anzeige, die Auswahl und die Speicherung der verschiedenen Betriebsschwellen über den elektronischen Stromkreis zur Auswahl und Steuerung (14) und den Schalter (15) die Ladewiderstände (16) des Akkumulatorkerns solange speisen, wie der vom Messorgan (1) und vom Steuerstromkreis zur Verarbeitung von Informationen (6) gemessene und im Steuerstromkreis zur Berechung, zum Vergleich und zur Speicherung (12) verglichene Wert der Umgebungstemperatur kleiner oder gleich dem Wert der Temperaturschwelle ist, die am Organ (9) innerhalb des Schwankungsbereichs des Proportionalitätsbereichs vorbestimmt und an das Organ (9) vom Proportionalregler (30) übertragen wurde, wobei die besagte Schwelle von dem am das Organ zur Auswahl und zur Speicherung (9) steuernden Organ zur Verwaltung von Tarifsignalen (7) anliegenden, dem Energiepreisniveau der laufenden Niedrigtarifperiode entsprechenden Tarifsignal ausgewählt wird, die besagte Last unterbrochen wird, wenn der vom Organ zur Messung der Umgebungstemperatur (1) und dem Steuerstromkreis zur Informationsverarbeitung (6) gemessene Wert der Umgebungstemperatur den ausgewählten Schwellenwert übersteigt oder wenn der vom Steuerstromkreis (12) in dem von der Zeitbasis (11) festgelegten Intervall definierte und im Steuerstromkreis zur Berechung, zum Vergleich und zur Speicherung (12) verglichene Anstieg der Umgebungstemperatur über einer Temperaturschwankungsschwelle liegt, die vom Organ zur Anzeige, zur Auswahl und zur Speicherung der verschiedenen Betriebsschwellen (9) gespeichert und auch vom dem Organ zur Verwaltung von Tarifsignalen (7) anliegenden Tarifsignal ausgewählt wurde.

19. Regelungsvorrichtung zur Durchführung des Verfahrens nach einem der Ansprüche 1 bis 18, **dadurch gekennzeichnet, dass** die Steuerstromkreise (50) zur bedingten Steuerung der Last des oder der Speichervorrichtungen die Ladewiderstände (16) des Akkumulatorkerns während der Organ zur Verwaltung von Tarifsignalen (7) in Abhängigkeit von den Tarifsignalen genehmigten Ladeperioden über den Steuerstromkreis zur Berechnung, zum Vergleich und zur Speicherung (12), den elektronischen Stromkreis zur Auswahl und Steuerung (14) und den Schalter (15) solange versorgen, wie der Wert der vom Messorgan (1) und vom Steuerstromkreis zur Informationsverarbeitung (6) gemessenen und im Vergleich-Steuerstromkreis (12) verglichenen Umgebungstemperatur kleiner oder gleich ist dem Wert der am Regler vorher festgelegten und am Organ (9) angezeigten Temperaturschwelle, wobei der besagte Schwellenwert von den technischen Eigenschaften der verwendeten Speicherheizvorrichtungen abhängt, wobei die besagte Last unterbrochen wird, wenn der Wert der Umgebungstemperatur, die vom Organ (1) und dem Messschaltkreis zur Verarbeitung von Informationen (6) gemessen wird, den Schwellenwert überschreitet.

20. Regelungsvorrichtung zur Durchführung des Verfahrens nach einem der Ansprüche 1 bis 19, **dadurch gekennzeichnet, dass** die Steuerstromkreise (50) zur bedingten Steuerung der Last des oder der Speichervorrichtungen die Ladewiderstände (16) des Akkumulatorkerns über den Steuerstromkreis zur Berechnung, zum Vergleich und zur Speicherung (12), den elektronischen Steuerstromkreis zur Auswahl (14) und den Schalter (15) dann versorgen, wenn die vom Messorgan der Umgebungstemperatur (1) und vom Steuerstromkreis zur Verstärkung und zur Verarbeitung von Informationen (6) gemessene und im Steuerstromkreis zur Berechung, zum Vergleich und zur Speicherung (12) verglichene Umgebungstemperatur über der Sollwerttemperatur liegt, die diese am Organ zur Einstellung der Sollwert-Umgebungstemperatur (2) angezeigte Umgebungstemperatur regelt, und wenn der Wert des Absinkens der Umgebungstemperatur, der vom Steuerstromkreis (12) in dem von der Zeitbasis (11) festgelegten Intervall berechnet und dann im Steuerstromkreis (12) gespeichert und verglichen wird, größer oder gleich dem Wert der Regressionsschwelle der am Organ zur Anzeige, zur Auswahl und zur Speicherung der verschiedenen Betriebsschwellen (9) vorher festlegten Temperatur ist, oder als Variante, wenn der Wert des Anstiegs dieser Temperatur kleiner oder gleich der vorher festgelegten Progressionsschwelle ist, wobei die besagte Regressions- oder Progressionsschwelle von dem Tarifsignal ausgewählt wird, das dem Energiepreisniveau der laufenden, Organ zur Verwaltung von Tarifsignalen (7) anliegenden Niedrigtarifperiode entspricht, wobei die besagte Last unterbrochen wird, wenn der Wert des Absinkens der Umgebungstemperatur, der vom Steuerstromkreis (12) im von der Zeitbasis (11) festgelegten Intervall berechnet wird, unter den Wert dieses Regressionsschwelle sinkt oder als Variante, wenn der Progressionswert über den Wert der Progressionsschwelle ansteigt.

21. Regelungsvorrichtung zur Durchführung des Verfahrens nach einem der Ansprüche 1 bis 20, **dadurch gekennzeichnet, dass** die Steuerstromkreise (51) zur bedingten Blockierung der Last des oder der Speichervorrichtungen, die den Steuerstromkreis zur Berechnung, zum Vergleich und zur Speicherung (13) umfassen, der vom Organ zur Verwaltung von Tarifsignalen (7) gesteuert und einerseits mit dem Organ (4), das die Zeit des Unterspannungsetzens der Ladewiderstände über den Steuerstromkreis zum Schutz, zur Verstärkung und zur Informationsverarbeitung (8) misst, und andererseits mit dem Organ (10), das die Anzeige, die Auswahl und die Speicherung der verschiedenen Betriebsschwellen gewährleistet, verbunden ist, die Versorgung der Ladewiderstände (16) des Speicherkerns durch den Auswahl- und Steuerstromkreis (14) und den Schalter (15) während einer vom Steuerstromkreis zur Berechung (13) gemäß dem folgenden Verhältnis berechneten Zeit blockieren: maximale, vom Organ zur Verwaltung von Tarifsignalen (7) bestimmte Dauer der Niedrigtarifperiode(n) des Verteilungsnetzes, die vom niedrigsten Energiepreis profitieren, gemindert um den Wert, den man erhält, wenn man die während des vorhergehenden Tarifzyklus vom Organ zur Messung der zeit, in der die Ladewiderstände unter Spannung gesetzt sind (4)und dem den Steuerstromkreis zur Verarbeitung von Informationen (8) gemessene Dauer insgesamt, in der die Ladewiderstände der Speichervorrichtungen unter Spannung versetzt waren, mit einem verstellbaren und einstellbaren Koeffizienten multipliziert, der vom Organ zur Anzeige, zur Auswahl und zur Speicherung der verschiedenen Betriebsschwellen (10) gespeichert ist, wobei die besagte Blockierung, die auf diese Weise in der vom Steuerstromkreis zum Vergleich und zur Speicherung (13) berechneten Zeit definiert wird, zeitweilig vom Steuerstromkreis (14) deaktiviert wird, einerseits solange, wie die vom Organ (1) und vom Steuerstromkreis zur Verstärkung und zur Verarbeitung von Informationen (6) gemessene und im Vergleichs-Steuerstromkreis (12) verglichene Umgebungstemperatur unter den am Organ (9) vorher in bezug zu der am Organ zur Einstellung der Sollwert-Umgebungstemperatur (2) angezeigten Sollwerttemperatur festgelegten Temperaturschwellenwert fällt und unter diesem bleibt, wobei die besagte Temperaturschwelle vorzugsweise innerhalb der Grenzen der vom Proportionalitätsbereich des Proportionalreglers (30) festgelegten Temperaturschwankungen definiert ist, und andererseits, wenn das vom Steuerstromkreis (12) im von der Zeitbasis (11) festgelegten Intervall berechnete und dann im Steuerstromkreis (12) gespeicherte und verglichene Absinken der Umgebungstemperatur größer oder gleich der am Organ (9) vorher festgelegten Regressionsschwelle ist, wobei die besagte Blockierung dann bis zum Ende der vom Steuerstromkreis zum Vergleich und zur Speicherung (13) gespeicherten Blockierungsperiode kontinuierlich oder diskontinuierlich durchgeführt wird.

22. Regelungsvorrichtung zur Durchführung des Verfahrens nach einem der Ansprüche 1 bis 21, **dadurch gekennzeichnet, dass** die Steuerstromkreise (51) während der Niedrigtarifperiode des laufenden Zyklus die Speisung der Ladewiderstände (16) durch den Stromkreis zur Auswahl und zur Steuerung (14) und den Schalter (15) unterbrechen, wenn die vom Organ zur Messung der Ladezeit (4) und dem den Steuerstromkreis zur Verarbeitung von Informationen (8) gemessene und im Steuerstromkreis zur Berechung, zum Vergleich und zur Speicherung (13) gespeicherte und verglichene Dauer des Unterspannungsetzens der Ladewiderstände während der vorhergehenden Niedrigtarifperiode des gleichen Tarifzyklus unterhalb der Schwelle liegt, die proportional zur Gesamtdauer der vorhergehenden Niedrigtarifperiode des gleichen Tarifzyklus vom Stromkreis (13) berechnet wurde, der vom Organ zur Verwaltung von Tarifsignalen (7) gesteuert wird, wobei der Prozentsatz, der diese Proportionalität definiert, am Organ zur Speicherung der verschiedenen Betriebsschwellen (10) vorher festgelegt wurde, wobei die besagte Blockierung während der laufenden Niedrigtarifperiode vom Stromkreis zur Auswahl- und zur Steuerung (14) aufgehoben wird, wenn die vom Organ zur Messung der Umgebungstemperatur (1) gemessene und von der Vorrichtung (12) verglichene Temperatur unterhalb eine am Organ zur Auswahl und zur Speicherung (9) gemäß den technischen Eigenschaften der Speicher vorher festgelegte Mindestschwelle fällt, oder eine am Organ (9) innerhalb der vom Proportionalitätsbereich des Proportionalreglers (30) gemäß der am Organ zur Einstellung der Sollwert-Umgebungstemperatur (2) angezeigten Sollwerttemperatur festgelegten Grenzen der Temperaturschwankungen vorher festgelegte zweite Schwelle, und andererseits solange, wie der Steuerstromkreis zur Berechnung und zum Vergleich (12) ein Abfallen der Umgebungstemperatur innerhalb des von der Zeitbasis (11) definierten Zeitraums feststellt, die größer oder gleich der am Auswahl-, Speicher- und Anzeigeorgan (9) vorbestimmten, vom Organ zur Auswahl der Betriebsart und zur Verwaltung von Tarifsignalen (7) ausgewählten Regressionsschwelle ist, in Variante kann die besagte Blockierung der Last auf einen Bruchteil der Dauer der laufenden Periode begrenzt werden.

23. Regelungsvorrichtung zur Durchführung des Verfahrens nach einem der Ansprüche 1 bis 22 **dadurch gekennzeichnet, dass** die Steuerstromkreise (50) zur bedingten Steuerung der Last der vorzugsweise sehr stark isolierten und deswegen vom Organ zur Auswahl der Betriebsart und zur Verwaltung von Tarifsignalen (7) ausgewählten Speichervorrichtung(en) in den Niedrigtarifperioden über den Steuerstromkreis zur Berechnung, zum Vergleich und zur Speicherung (12), den elektronischen Stromkreis zur Auswahl und Steuerung (14) und den Schalter (15) die Ladewiderstände (16) speisen, wenn der vom Steuerstromkreis zur Berechung, zum Vergleich und zur Speicherung (12) im Intervall der Zeitbasis (11) gemäß den vom Organ zur Messung der Umgebungstemperatur (1) und dem Steuerstromkreis zur Verstärkung und zur Verarbeitung von Informationen (6) gemessenen Informationen berechnete und dann im Steuerstromkreis zur Berechung, zum Vergleich und zur Speicherung (12) verglichene Abfall der Umgebungstemperatur kleiner oder gleich dem Wert Null ist, der der am Organ zur Auswahl und zur Speicherung (9) durch einen speziellen Befehl des Organs (7) gewählten Schwelle entspricht, wobei die besagte Last unterbrochen wird, wenn der vom Steuerstromkreis zur Berechung, zum Vergleich und zur Speicherung (12) im Intervall der Zeitbasis (11) gemäß den vom Organ zur Messung der Umgebungstemperatur (1) und dem Steuerstromkreis zur Verstärkung und zur Verarbeitung von Informationen (6) gemessenen Informationen definierte und dann im Steuerstromkreis (12) verglichene Progressionswert der Umgebungstemperatur größer als Null wird.

24. Regelungsvorrichtung zur Durchführung des Verfahrens nach einem der Ansprüche 1 bis 23, **dadurch gekennzeichnet, dass** die Steuerstromkreise (50) zur bedingten Steuerung der Wärmeabgabe einer beliebigen Heizvorrichtung die Rückgabe der Wärme der Wärmeabgabevorrichtungen (32) des oder der Heizvorrichtung(en) über den Steuerstromkreis zur Berechnung, zum Vergleich und zur Speicherung (12), den elektronischen Auswahlschaltkreis (14) und das Regelorgan (30) blockieren, wenn die entsprechende Betriebsart am Organ zur Auswahl der Betriebsart und zur Verwaltung von Tarifsignalen (7) gewählt wird, sobald der am Organ zur Einstellung der Sollwert-Umgebungstemperatur (2) angezeigte Sollwert unterhalb des vom Organ (1) und dem Steuerstromkreis zur Verstärkung und zur Verarbeitung von Informationen (6) gemessenen und im Vergleichsschaltkreis (12) verglichenen Wertes der Umgebungstemperatur sinkt, wobei die besagte Blockierung von den Steuerstromkreisen zur Berechung, zum Vergleich und zur Speicherung (13) und Auswahl- und Steuerstromkreis (14) während der am Organ zur Auswahl und zur Speicherung der verschiedenen Betriebsschwellen (10), das vom Organ zur Auswahl der Betriebsart und zur Verwaltung von Tarifsignalen (7) ausgewählt wurde, vorher festgelegten Zeit aufrecht erhalten wird, wobei die besagte Zeit mit einem Koeffizienten multipliziert wird, der proportional ist zum Quotienten aus der am Organ (10) vorher festgelegen maximalen Ladedauer für den Tageszyklus, der den strengsten klimatischen Bedingungen des Ortes entspricht, und aus dem Wert des Energie-Gesamtverbrauchs des vorhergehenden Zyklus, der durch den Vergleichs- und Speicherzyklus (13) definiert wurde, wobei die am Ende der Blockierungsperiode vom Organ (1) und dem Steuerstromkreis (6) ermittelte Umgebungstemperatur Steuerstromkreis zur Berechnung, zum Vergleich und zur Speicherung (12) gespeichert und vom Regler als neuer Sollwert der Umgebungstemperatur definiert wird, wobei die besagte Sollwerttemperatur von der kleinsten am Organ zur Auswahl und zur Speicherung (9) nach einer bestimmten Zeit angezeigten Sollwerttemperatur ersetzt wird, die vom Regler in Abhängigkeit der von der thermischen Kapazität des Lokals definierten Zeitkonstante oder bei einer vom Nutzer angezeigten Sollwertänderung definiert wird.

25. Regelungsvorrichtung zur Durchführung des Verfahrens nach einem der Ansprüchen 17 bis 24, **dadurch gekennzeichnet, dass** die Steuerstromkreise (50) zur bedingten Steuerung der Wärmeabgabe einer beliebigen Heizvorrichtung, die Rückgabe der Wärme der Heizvorrichtungen, über das Organ zur Auswahl der Betriebsart und zur Verwaltung von Tarifsignalen (7), blockieren, sobald der am Organ (2) angezeigte Sollwert unterhalb des vom Organ (1) und dem Steuerstromkreis zur Verstärkung und zur Verarbeitung von Informationen (6) gemessenen und im Vergleichsschaltkreis (12) verglichen, solange der Quotient aus dem Wert der Abfall der Temperatur berechnet durch den Steuerstromkreis zur Berechung, zum Vergleich und zur Speicherung (12) im Intervall der Zeitbasis (11) während einem Messzyklus, und aus dem Wert der Abfall der Temperatur während des folgenden Messzyklus größer ist als der Wert der vorher festgelegten Schwelle am Organ zur Anzeige zur Auswahl und zur Speicherung der verschiedenen Betriebsschwellen (9), *wobei* die am Ende der Blockierungsperiode vom Organ zur Messung der Umgebungstemperatur (1) und dem Steuerstromkreis (6) ermittelte Umgebungstemperatur im Steuerstromkreis (12) gespeichert und vom Regler als neuer Sollwert der Umgebungstemperatur definiert wird, *wobei* die besagte Sollwerttemperatur nach einer bestimmten Zeit von der kleinsten am Organ zur Anzeige, zur Auswahl und zur Speicherung der verschiedenen Betriebsschwellen (9) angezeigten Sollwerttemperatur ersetzt wird, die vom Regler in Abhängigkeit der von der thermischen Kapazität des Lokals definierten Zeitkonstante oder bei einer vom Nutzer angezeigten Sollwertänderung definiert wird.

26. Regelungsvorrichtung zur Durchführung des Verfahrens nach einem der Ansprüche 1 bis 25, **dadurch gekennzeichnet, dass** während der Betriebsart frostfrei oder einer speziellen, vom dem Organ zur Verwaltung von Tarif-Signalen (7) steuernden Organ (3) aktivierten Betriebsart die Steuerstromkreise und die Organ zur Anzeige, zur Auswahl und zur Speicherung der verschiedenen Betriebsschwellen (9), zur Berechung, zum Vergleich und zur Speicherung (12) und zur Auswahl und Steuerung (14), die Steuerstromkreise (50) zur bedingten Steuerung der Last der Speichervorrichtungen oder zur Steuerung der Wärmeabgabe einer beliebigen Heizvorrichtung die Ladewiderstände (16) über den Steuerstromkreis zur Berechnung und zum Vergleich (12), den elektronischen Auswahl- und Steuerstromkreis (14) und den Schalter (15) während der Niedrigtarifperioden solange speisen oder das Organ zur Steuerung der Wärmeabgabe der anderen Heizvorrichtungen solange steuern, wie die vom Organ zur Messung der Umgebungstemperatur (1) und dem Steuerstromkreis zur Verstärkung und zur Verarbeitung von Informationen (6) gemessene und in der Vergleichsvorrichtung (12) verglichene Umgebungstemperatur kleiner oder gleich dem Sollwert der Temperatur frostfrei oder der speziellen Betriebsart ist, erhöht um einen am Organ zur Auswahl und zur Speicherung (9) vorher aufgestellten und vorher festgelegten Wert, wobei der besagte, nicht erhöhte Temperatursollwert die Vorrichtungen zur Rückgabe der Wärme (32) der Heizvorrichtungen durch das Regel Organ (30) steuert, wobei das besagten Organ zur Steuerung frostfrei (3) während der frostfreien Periode die Anwendung aller andern beanspruchten Ladevorgänge blockiert, wobei die besagte Speisung der Lastwiderstände blockiert ist, wenn die Umgebungstemperatur den erhöhten Sollwert erreicht oder übersteigt.

27. Regelungsvorrichtung zur Durchführung des Verfahrens nach einem der Ansprüche 1 bis 26, **dadurch gekennzeichnet, dass** die Steuerstromkreise (52) zur bedingten Steuerung der Last der Speichervorrichtung(en) während der erlaubten Ladeperioden über den Steuerstromkreis zur Berechnung, zum Vergleich und zur Speicherung (18), den elektronischen Auswahlschaltkreis (14) und den Schalter (15) die Ladewiderstände (16) so lange speisen, wie der Wert der Temperatur des Akkumulatorkerns der Heizvorrichtungen, der für die im Akkumulatorkern enthaltene energetische Last repräsentativ ist und vom Organ (5) zur Messung dieser Temperatur, das mit dem Steuerstromkreis zum Schutz, zur Verstärkung und zur Informationsverarbeitung (17) verbunden ist, gemessen wird, kleiner ist, vorzugsweise um einen vorher festgelegten Wert, oder gleich dem Wert des von der Funktion F(t) = a.t+b definierten und vom Steuerstromkreis (18) gespeicherten Sollwerts, die einen Geradenabschnitt definiert, dessen Ordinate ursprünglich der repräsentative Punkt (b) ist, der sich im entsprechenden Augenblick am Ende der einzigen oder letzten, vom niedrigsten Energiepreisniveau profitierenden Niedrigtarifperiode, die vom Organ zur Verwaltung von Tarifsignalen (7) definiert wurde, befindet, wobei der besagte repräsentative Punkt (b), der in diesem Augenblick die vom Organ zur Messung der im Kern enthaltene Wärme (5) des Steuerstromkreises zum Schutz, zur Verstärkung und zur Verarbeitung von Informationen (17) gemessene Temperatur des Akkumulatorkerns zum Wert hat, verbunden ist, um den Geradenabschnitt zu einem zweiten, am Ende des Tarifzyklus vom Organ (7) definierten Punkt zu bilden, der in diesem Augenblick die am Organ zur Auswahl und zur Speicherung (10) vorbestimmte modulierbare und einstellbare Temperaturschwelle des Kerns zum Wert hat, die der Dimensionierungstemperatur der Speichervorrichtungen entspricht, wobei der Wert des zweiten Punkts, der ebenfalls den richtungsgebenden Koeffizienten (a) der Geraden definiert, der vorzugsweise vom Steuerstromkreis zur Berechnung, zum Vergleich und zur Speicherung (18) ansteigend oder abfallend in Abhängigkeit der Dauer der Last während der Niedrigtarifperiode(n) dieses Tarifzyklus in bezug auf die Gesamtdauer dieser Periode(n) moduliert wird, wobei die besagte Speisung der Lastwiderstände (16) vorzugsweise nur dann erfolgt, wenn die vom Steuerstromkreis (12) gemessenen Umgebungstemperaturen sinken, oder, wenn sie stagnieren oder ansteigen, nur dann, wenn der Wert der im Intervall der Zeitbasis (11) definierten Schwankung kleiner oder gleich der am Organ zur Auswahl und zur Speicherung (9) vorher festgelegten Schwelle ist, wobei der besagte Wert dieser Schwelle gleich Null sein kann.

**28.** Regelungsvorrichtung zur Durchführung des Verfahrens nach einem der Ansprüche 1 bis 27, **dadurch gekennzeichnet, dass** die Steuerstromkreise (50) zur bedingten Steuerung der Last der Speichervorrichtung(en) während der erlaubten Ladeperioden über den elektronischen Stromkreis zur Auswahl und zur Steuerung (14) und den Schalter (15) die Ladewiderstände (16) so lange speisen, wie der vom Messorgan (1) und Steuerstromkreis zur Verstärkung und zur Verarbeitung von Informationen (6) gemessene und im Vergleichsschaltkreis (12) verglichen Wert der Umgebungstemperatur kleiner ist, vorzugsweise um einen vorher eingestellten Wert, oder gleich dem von der Funktion F(t) = -a.t + b definierten und vom Steuerstromkreis (12) gespeicherten Sollwert ist, die im Verlauf des Tarifzyklus einen gemeinsamen Geradenabschnitt definiert, dessen Ordinate ursprünglich der repräsentative Punkt (b) ist, der sich in dem entsprechenden Augenblick am Ende der von dem niedrigsten Energiepreis profitierenden Niedrigtarifperiode befindet, die vom Organ zur Auswahl der Betriebsart und zur Verwaltung von Tarifsignalen (7) definiert wurde, und als Wert in diesem Augenblick das höchste Niveau der Sollwerttemperatur des Temperaturschwankungsbereichs des Proportionalitätsbereichs des Proportionalreglers (30) hat, wobei der besagte repräsentative Punkt (b), um die Gerade zu bilden, mit einem am vom Steuerstromkreis (7) definierten Ende des Tarifzyklus definierten zweiten Punkt verbunden ist und als Wert in diesem Augenblick das niedrigste Niveau der Sollwerttemperatur des Temperaturschwankungsbereichs des Proportionalitätsbereichs des Proportionalreglers (30) hat, wobei die besagte Definition in der Zeit am Ende des Tarifzyklus um einen am Organ zur Auswahl und zur Speicherung (9) in Abhängigkeit der technischen Eigenschaften der Speichervorrichtungen vorbestimmten Zeitabschnitt mehr oder weniger korrigiert werden kann, wobei die Lastwiderstände (16) vorzugsweise nur dann gespeist werden, wenn die vom Steuerstromkreis (12) gemessenen Umgebungstemperaturen sinken oder, wenn sie stagnieren oder ansteigen, nur dann, wenn der Schwankungswert im Intervall der Zeitbasis (11) kleiner oder gleich der Schwelle am Organ (9) ist, wobei die besagte Schwelle gleich Null sein kann.

**29.** Regelungsvorrichtung zur Durchführung des Verfahrens nach einem der Ansprüche 1 bis 28, **dadurch gekennzeichnet, dass**, wenn die vom Messorgan (1) und vom Steuerstromkreis zur Verstärkung und zur Verarbeitung von Informationen (6) gemessene und im Vergleichsschaltkreis (12) verglichene Umgebungstemperatur größer ist als der Wert der Sollwerttemperatur von Organ zur Einstellung der Sollwert-Umgebungstemperatur (2), die Inbetriebnahme eines beliebigen der verschiedenen Ladeverfahren vorzugsweise nur dann erlaubt werden kann, wenn die positive Differenz der im Steuerstromkreis zur Berechung, zum Vergleich und zur Speicherung (12) definierten Temperatur, bei Feststellung der Differenz zwischen der vom Organ zur Messung der Umgebungstemperatur (1) und vom Steuerstromkreis zur Verstärkung und zur Verarbeitung von Informationen (6) gemessenen Umgebungstemperatur und der am Organ zur Auswahl und zur Speicherung (9) in Abhängigkeit der technischen Eigenschaften der Speicherheizvorrichtungen angezeigten Mindesttemperaturschwelle, kleiner oder gleich dem Wert der speziellen Schwelle ist, der ebenfalls am Organ zur Anzeige, zur Auswahl und zur Speicherung der verschiedenen Betriebsschwellen (9) vorbestimmt und jedem Ladevorgang zugeordnet wurde, wobei die besagte Schwelle in Abhängigkeit der vom Organ (30) definierten und vom Organ (9) gespeicherten Betriebszeit der Vorrichtungen zur Wärmeabgabe moduliert werden kann.

signaux
tarifaires

FIG. 1